# EUROPEAN PATENT SPECIFICATION

(11) **EP 0 971 284 B1**
(45) Date of publication and mention of the grant of the patent: **12.11.2008**
(21) Application number: 98112668.3
(22) Date of filing: 08.07.1998
(51) Int. Cl.: G06F 3/00

(54) **Method and apparatus for creating chinese character and communication codes**
Verfahren und Vorrichtung zur Erzeugung von chinesischen Zeichencodes und Kommunikationscodes
Procédé et appareil pour la création des codes chinois de caractères et de communication

(43) Date of publication of application: 12.01.2000
(73) Proprietor: Huang, Chin Tui, Taipei (TW); D.D.B. Enterprise Co., P.O.Box 11452 Taipei (TW)
(72) Inventor: Huang, Chin Tui, Sendai City (JP)
(74) Representative: Hughes, Andrea Michelle

(56) References cited:
- DE-A- 4 308 717
- DE-A- 19 505 662
- US-A- 4 684 926
- US-A- 4 920 492
- US-A- 5 119 296

## Description

### BACKGROUND OF THE INVENTION

The Chinese written or printed language is composed of many thousands of pictographic characters, each expressing a concept, wherein each Chinese character is represented by a plurality of word shape figurations positioned in various inner portions of a square or rectangular shaped area, which inner portions each may itself be a square or rectangular area. Many possible arrangements of such inner rectangular portions are required to accommodate all possible arrangements of word shape figurations; the number of figurations (hereafter sometimes termed "word shapes") is much less than the thousands of pictographic Chinese characters.

There have been developed many methods for storing and retrieving characters of different languages, including Chinese, for purposes of printing and communicating information in those languages. Classic Chinese characters present a particularly difficult problem because of the great number of those characters and because there has heretofore been no method for providing a direct unique relationship between each of those characters and computer identifiable indicia or symbols used in standard word processing and communication equipment and methods. Descriptions of prior attempts may be found in U.S. Patent Nos. 5,020,121 5,131,766 and DE 19505662 A1. None of these prior methods provide a direct means of encoding each of the classic Chinese characters for electronic storage, processing, or communication.

### SUMMARY OF THE INVENTION

The invention provides a Chinese character computer and communication code generator as defined in claim 1.

The present invention utilizes any standard computer keyboard for encoding classic characters of the Chinese printed language. Each Chinese character is composed of a plurality of elements or word shape figurations positioned in a generally square or rectangular shaped area.

These elements consist of 349 different standard word shape figurations, and may each be represented in smaller rectangular areas within the generally rectangular area of the Chinese character. The smaller rectangles may be arranged in many different ways to accommodate different placements of the word shapes in a character, and rectangular areas containing a word shape are numbered sequentially.

For the purposes of the present invention, the 349 word shapes are divided into 47 groups each containing a plurality of the word shapes, and each group of word shapes is assigned to and inscribed on a specific one of 47 key pads of an electronic keyboard device used for entering signals representing Hirakana/Katakana, alpha-numeric and punctuation symbols. In order to enter a Chinese character into a computer, or encode it for electronic processing and transmission, key pads- of the keyboard representing each specific word shape are typed in sequence in the order in which those word shape rectangular areas are sequentially numbered within the area of the Chinese character. This produces a computer and communication "code word" consisting of electronic signals representing key pad symbols capable of specifically encoding each of the thousands of classic Chinese printed characters.

Prior to this there has been no system using only rectangles and small numbered areas within the rectangles to functionally spell out a specific computer and communication exchange code for each Chinese character. The rectangles and small numbered areas within the rectangles of this system each structurally represent a classic Chinese character in the same functional manner as a chemical formula or a mathematical equation. The codes representing such structures provide a means for spelling out the Chinese characters with standard keyboard symbols in a manner that the Chinese characters may be electronically communicated or may be stored in a computer memory (ROM) to be programmably processed, assembled or edited.

The disclosed method of creating these codes provides a precise representation for each Chinese character, which representation may be stored and/or transmitted in either analog or digital form, whereby information characters of the Chinese language may be easily converted from one form to the other for computer processing in digital form and public dissemination in analog form.

### BRIEF DESCRIPTION OF THE DRAWINGS

Fig. 1A is an example of one of the thousands of possible classic Chinese characters.
Figs. 1B and 2-39 show arrangements of smaller rectangles within a larger rectangular area fitting to the specific arrangements of word shapes in specific classical Chinese characters.
Figs. 40-44 show examples of rectangular areas representing encoded Chinese characters demonstrating a method for encoding sentence structure of information expressed in Chinese characters.
Fig. 45 shows one example of key pads of a keyboard with representations of each of the 349 word shape figurations on the key pads to which they are assigned in the disclosed encoding method and apparatus, together with the key pad symbols representative of each group of word shape figurations used to form code words.
Fig 46 shows a practical example of an electronic keyboard device for use in the disclosed method and apparatus.
Fig. 47 shows an example of an electronic keyboard device for use in a multi-function cordless telephone system.
Fig. 48 shows a block diagram of a portable telephone system embodying the invention.
Fig. 49 shows a block diagram of a computer system embodying the invention.
Fig. 50 shows a representation of a computer keyboard for use in the computer system of Fig. 49.
Fig. 51 shows key pads of a 47-key keyboard for an A-type word shape arrangement.
Fig. 52 shows key pads of a 47-key keyboard for a B-type word shape arrangement.
Fig. 53 shows a circuit diagram of a practical on-pager note system embodying the present invention.
Fig. 54 shows a block diagram of a cordless handset system including a pager.
Fig. 55 shows a keyboard and display arrangement for the cordless handset system of Fig. 54.
Fig. 56 is similar to Fig. 45.

### DETAILED DESCRIPTION OF THE PREFERRED EMBODIMENTS

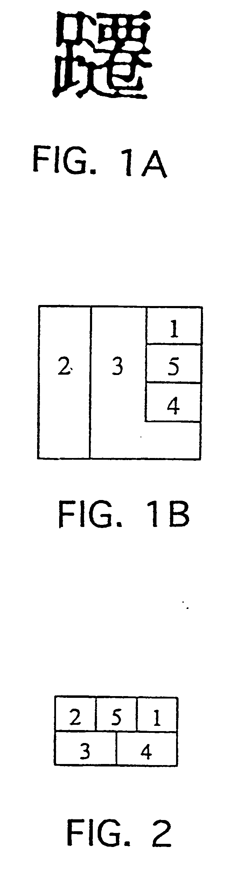

As shown in Fig. 1A, a classic Chinese character occupies a generally rectangular space. The specific character shown includes five individual word shapes of the available 349 such shapes. These individual word shapes are positioned within the generally rectangular space of the character in areas represented by the numbered rectangles 1-5 within the larger rectangle shown in Fig. 1B.

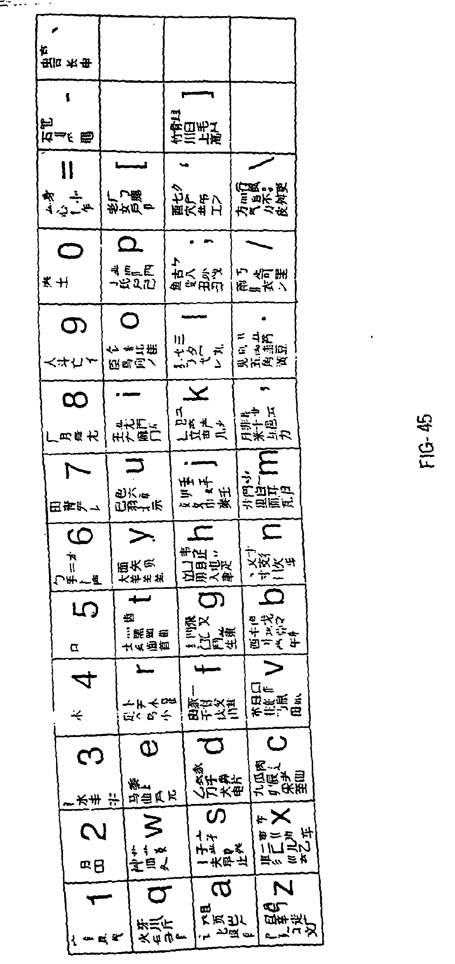

Fig. 45 shows an example of a keyboard having 47 key pads, each of which is represented by a number, letter, punctuation mark or other symbol found on key pads of standard computer keyboards. The positions of some of these key pad symbols may vary on some keyboards. On each of the 47 symbol key pads are also shown representations of individual word shapes assigned to the symbol represented on the key pad.

In order to encode the Chinese character shown in Fig. 1A, the key pads marked with each of the individual word shapes in Fig. 45 are operated in the numbered sequence of the word shapes as shown in Fig. 1B. The word shape 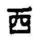 in the rectangle 1 position is found on the b key, the word shape 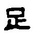 in the rectangle 2 position is found on the r key, the word shape 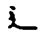 in the rectangle 3 position is found on the c key, the word shape 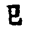 in the rectangle 4 position is found on the k key, and the word shape 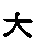 in the rectangle 5 is found on the y key. Therefore, by typing these key pads sequentially, a computer and communication exchange code b r c k y is created to represent the shown classic Chinese character.

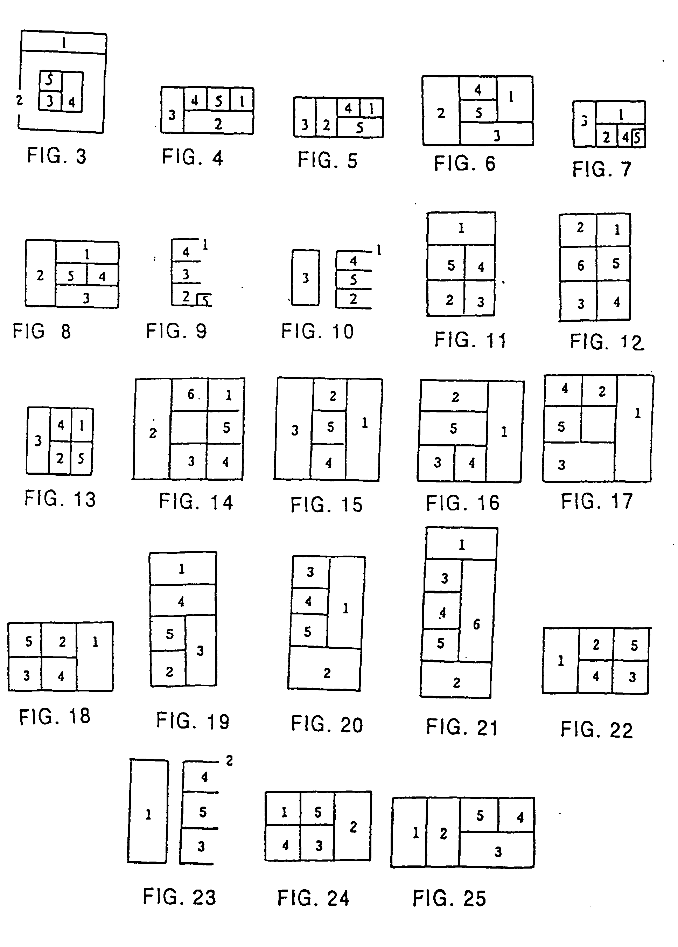

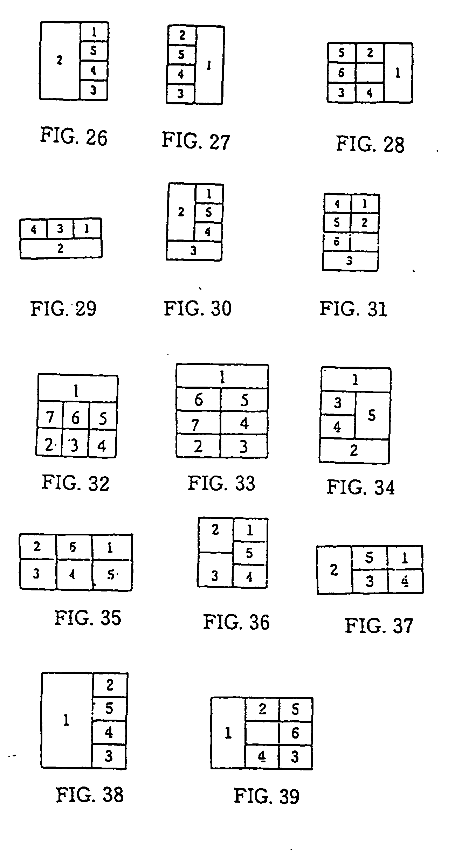

Figs. 2-39 show examples of other arrangements of smaller rectangles within larger rectangles that fit to other classic Chinese characters. The examples of Figs. 2-25 are related to specific classic Chinese characters as follows:
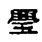 fits with the Fig. 2 drawing of rectangles wherein rectangle 1 position is 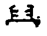 on the ] key, rectangle 2 position is 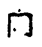 on the i key, rectangle 3 position is 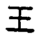 on i key, rectangle 4 position is 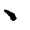 on the n key, and rectangle 5 position is 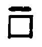 on the ' key. Therefore, the Chinese character computer and communication exchange code of 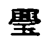 is represented by ] i i n '
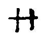 fits with Fig. 3 of the drawings wherein rectangle 1 position is on the w key, rectangle 2 position is □ on the v key, rectangle 3 position is - on the f key, rectangle 4 position is 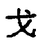 on the b key, and rectangle 5 position is □ on the 5 key. The Chinese character computer and communication exchange code of 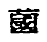 is represented by w v f b 5
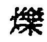 fits with Fig. 4 of the drawings wherein rectangle 1 position is 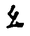 on the t key, rectangle 2 position is 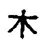 on the 4 key, rectangle 3 position is 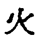 on the q key, rectangle 4 position is 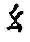 on the t key, and rectangle 5 position is 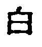 on the m key. The Chinese character computer and communication exchange code of 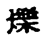 is represented by t 4 q t m
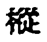 fits with Fig. 5 of the drawings wherein rectangle 1 position is 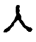 on the 9 key, rectangle 2 position is 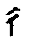 on the n key, rectangle 3 position is 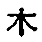 on the 4 key, rectangle 4 position is 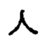 on the 9 key, and rectangle 5 position is it on the / key. The Chinese character computer and communication exchange code of 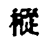 is represented by 9 n 4 9 /
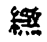 fits with Fig. 6 of the drawings wherein rectangle 1 position is 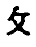 on the j key, rectangle 2 position is 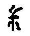 on the g key, rectangle 3 position is 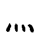 on the t key, rectangle 4 position is 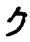 on the ' key, and rectangle 5 position is 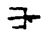 on the q key. The Chinese character computer and communication exchange code of 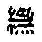 is represented by j g t' q
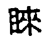 fits with Fig. 7 of the drawings wherein rectangle 1 position is 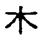 on the 4 key, rectangle 2 position is 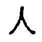 on the 9 key, rectangle 3 position is 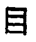 on the h key, rectangle 4 position is 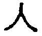 on the 9 key, and rectangle 5 position is 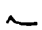 on the m key. The Chinese character computer and communication exchange code of 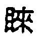 is represented by 4 9 h 9 m
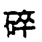 fits with Fig. 8 of the drawings wherein rectangle 1 position is 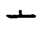 on the s key, rectangle 2 position is 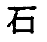 on the - key, rectangle 3 position is 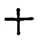 on the , key, rectangle 4 position is 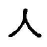 on the 9 key, and rectangle 5 position is 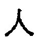 on the 9 key. The Chinese character computer and communication exchange code of 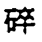 is represented by s - , 9 9
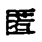 fits with Fig. 9 of the drawings wherein rectangle 1 position is 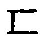 on the x key, rectangle 2 position is □ on the 5 key, rectangle 3 position is 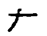 on the i key; rectangle 4 position is ++ on the w key, and rectangle 5 position is 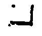 on the k key. The Chinese character computer and communication exchange code of 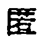 is represented by x 5 i w k
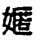 fits with Fig. 10 of the drawings wherein rectangle 1 position is 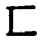 on the x key, rectangle 2 position is □ on the 5 key, rectangle 3 position is 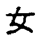 on the [ key, rectangle 4 position is ++ on the w key, and rectangle 5 position is 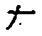 on the i key. The Chinese character computer and communication exchange code of 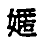 is represented by x 5 [ w i
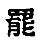 fits with Fig. 11 of the drawings wherein rectangle 1 position is 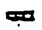 on the c key, rectangle 2 position is 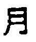 on the 8 key, rectangle 3 position is 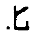 on the a key, rectangle 4 position is 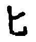 on the a key, and rectangle 5 position is 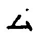 on the = key. The Chinese character computer and communication exchange code of 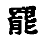 is represented by c 8 a a =
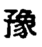 fits with Fig. 12 of the drawings wherein rectangle 1 position is 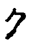 on the ' key, rectangle 2 position is 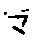 on the b key, rectangle 4 position is 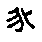 on the d key, rectangle 5 position is 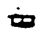 on the 2 key, and rectangle 6 position is 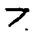 on ' key. The Chinese character computer and communication exchange code of 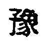 is represented by ' b d 2 '
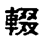 fits with Fig. 13 of the drawings wherein rectangle 1 position is 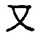 on the g key, rectangle 2 position is 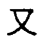 on the g key, rectangle 3 position is 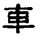 on the x key, rectangle 4 position is 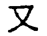 on the g key, and rectangle 5 position is 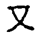 on the g key. The Chinese character computer and communication exchange code of 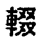 is represented by g g x g g
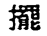 fits with Fig. 14 of the drawings wherein rectangle 1 position is 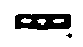 on the c key, rectangle 2 position is 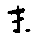 . on the 6 key, rectangle 3 position is 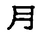 on the 8 key, rectangle 4 position is 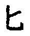 on the a key, and rectangle 5 position is 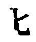 on the a key. The Chinese character computer and communication exchange code of 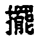 is represented by c 6 8 a a
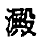 fits with Fig. 15 of the drawings wherein rectangle 1 position is 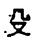 on the ; key, rectangle 2 position is 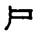 on the p key, rectangle 3 position is 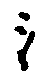 on the 3 key, rectangle 4 position is 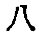 on the ; key, and rectangle 5 position is 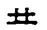 on the ' key. The Chinese character computer and communication exchange code of 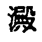 is represented by ; p 3 ; '
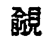 fits with Fig. 16 of the drawings wherein rectangle 1 position is 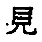 on the key, rectangle 2 position is 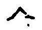 on the r key, rectangle 3 position is 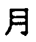 on the 8 key, rectangle 4 position is 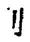 on the - key, and rectangle 5 position is - on the f key. The Chinese character computer and communication exchange code of 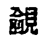 is represented by . r 8 - f
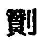 fits with Fig. 17 of the drawings wherein rectangle 1 position is 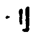 on the - key, rectangle 2 position is ± on the 0 key, rectangle 3 position is 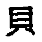 on the y key, rectangle 4 position is ± on the 0 key, and rectangle 5 position is 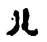 on the x key. The Chinese character computer and communication exchange code of 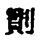 is represented by - 0 y 0 x
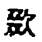 fits with Fig. 18 of the drawings wherein rectangle 1 position is 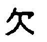 on the n key, rectangle 2 position is 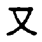 on the g key, rectangle 3 position is 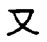 on the g key, rectangle 4 position is 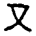 on the g key, and rectangle 5 position is 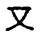 on the g key. The Chinese character computer and communication exchange code of 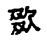 is represented by n g g g g
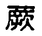 fits with Fig. 19 of the drawings wherein rectangle 1 position is 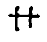 on the w key, rectangle 2 position is 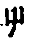 on the j key, rectangle 3 position is 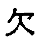 on the n key, rectangle 4 position is 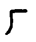 on the 8 key, and rectangle 5 position is 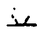 on the g key. The Chinese character computer and communication exchange code of 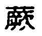 is represented by w j n 8 g
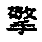 fits with Fig. 20 of the drawings wherein rectangle 1 position is 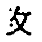 on the j key, rectangle 2 position is 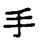 on the 6 key, rectangle 3 position is 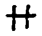 on the w key, rectangle 4 position is 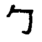 on the 6 key, and rectangle 5 position is □ on the 5 key. The Chinese character computer and communication exchange code of 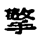 is represented by j 6 w 6 5
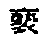 fits with Fig. 21 of the drawings wherein rectangle 1 position is 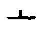 on the s key, rectangle 2 position is 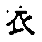 on the d key, rectangle 3 position is 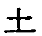 on the 0 key, rectangle 5 position is 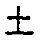 on the 0 key, and rectangle 6 position is 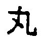 on the I key. The Chinese character computer and communication exchange code of 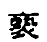 is represented by s d 0 0 I
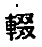 fits with Fig. 22 of the drawings wherein rectangle 1 position is 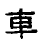 on the F key, rectangle 2 position is 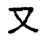 on the ' key, rectangle 3 position is 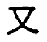 on the ' key, rectangle 4 position is 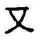 on the ' key, and rectangle 5 position is 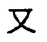 on the ' key. The Chinese character computer and communication exchange code of 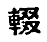 is represented by F''''
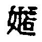 fits with Fig. 23 of the drawings wherein rectangle 1 position is 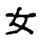 on the [ key, rectangle 2 position is 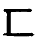 on the F key, rectangle 3 position is □ on the 5 key, rectangle 4 position is ++ on the - key, and rectangle 5 position is 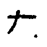 on the a key. The Chinese character computer and communication exchange code of 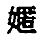 is represented by [ F 5 - a
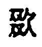 fits with Fig. 24 of the drawings wherein rectangle 1 position is 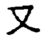 on the ' key, rectangle 2 position is 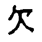 on the ; key, rectangle 3 position is 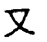 on the ' key, rectangle 4 position is 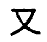 on the' key, and rectangle 5 position is 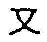 on the' key. The Chinese character computer and communication exchange code of 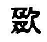 is represented by';''''
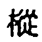 fits with Fig. 25 of the drawings wherein rectangle 1 position is 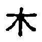 on the 4 key, rectangle 2 position is 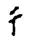 on the ; key, rectangle 3 position is 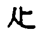 on the d key, rectangle 4 position is 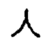 on the 7 key, and rectangle 5 position is 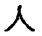 on the 7 key. The Chinese character computer and communication exchange code of 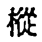 is represented by 4 ; d 7 7

Figs. 1A and 2-39 represent only a few examples of arrangements of smaller rectangles within a larger rectangle that may be made to fit specific classic Chinese characters. The specific examples shown each have at least five word shapes, which is very common in Chinese characters. However, Chinese characters can contain as few as one or as many as eight (or more) individual word shapes. Since the 47 key pad symbols used to create the communication exchange codes of this disclosure can create 47⁵ different codes, which amounts to some 229,345,000 possible codes, it is not necessary to use more than five key pad characters to encode all of the thousands of classic Chinese characters.

Therefore, for the purposes of the present invention, a five character code is considered to be sufficient to provide a unique computer and communication exchange code for each classic Chinese character, Chinese characters having six or more word shapes are encoded with only five key pad characters. It will be noted that Figs. 14 and 21 each include six word shapes. The character of Fig. 14 is encoded with word shapes 1 through 5, while the character of Fig. 21 is encoded with word shapes 1, 2, 3, 5 and 6, each code using the more significant word shapes of the Chinese character (i.e., those containing more brush strokes). A similar procedure is used with Chinese characters composed of more than six word shapes.

The specific groupings of word shape figurations and the specific order in which the individual word shapes are shown on the key pads are both important factors in the apparatus and method for creating the computer and communication exchange codes of this invention. It will be understood that the examples shown and described represent only a very few of the many thousands of Chinese characters. Appendix B filed with this application shows computer and communication codes created by the disclosed method for more than 13,000 Chinese characters.

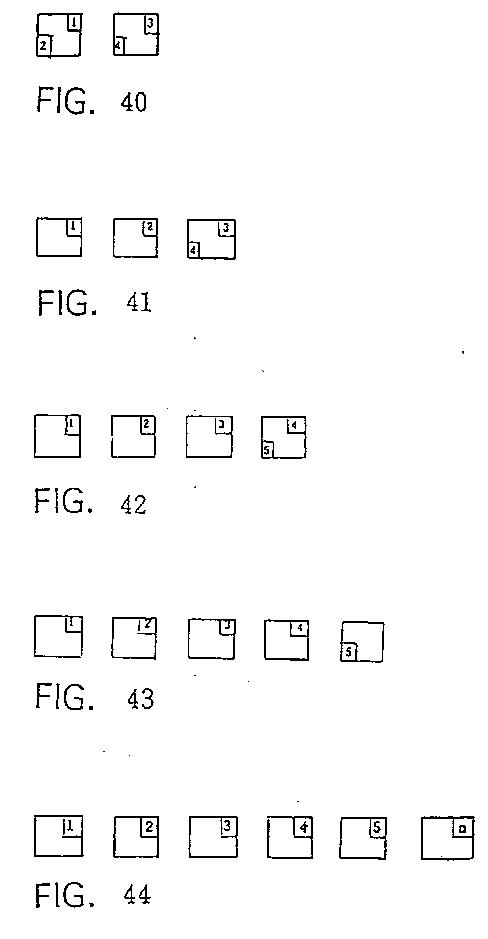

Figs. 40-44 illustrate a method for encoding sentence structure of the information expressed in a sequence of Chinese characters. Since each of the encoded Chinese characters have already been fit to an arrangement of small rectangular areas representing word shapes of the character, the code symbols for these encoded word shapes may be used to identify a related sequence of Chinese characters forming a sentence in the manner shown in Figs. 40-44. A sentence structure word code for a two Chinese character sentence may be encoded by using the top right corner word shape code per word and the bottom left corner word shape code per word of the two Chinese characters in the numbered sequence shown in the two rectangles of Fig. 40 to create a four symbol code for a sentence composed of two characters. A sentence structure word code to identify a three character sentence may be encoded by using the top right corner word shape codes of the three characters in sequence and the bottom left corner word shape code of the third character, to create a four symbol code as shown in the sequence of squares of Fig. 41. Correspondingly, four character sentences and five character sentences can be designated by five element codes created as shown in Figs. 42 and 43, and sentences of six or more (n) characters can be represented by six element codes wherein the sixth element is the code symbol for the nth character, as shown in Fig. 44. (See also Appendix A.) The keyboard shown in Fig. 45 is only one example of a key pad arrangement for the purpose of showing the word shape figurations of each group and their relationship to key pads having symbols for typing in the English language. It is quite apparent that the key pads may be additionally or alternatively inscribed with other symbols for use by persons where language employing other alpha-numeric symbols such as Greek, Cyrillic, Arabic, Hebrew or Hirakana/Katakana prevail.

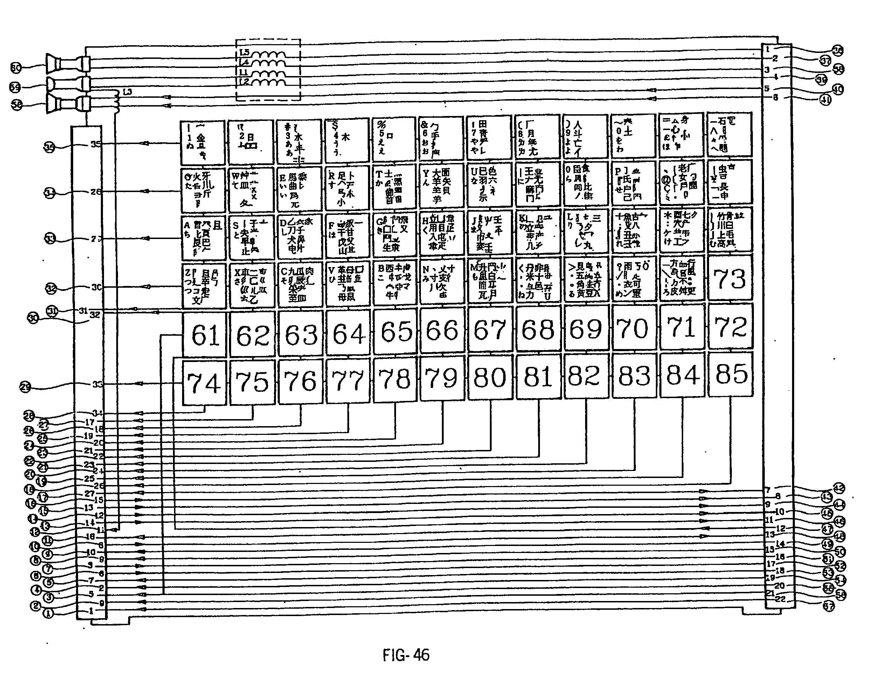

Fig. 46 shows an example of a portable telephone electronic keyboard system, key pads of which are inscribed in the left hand column with symbols in English and Chinese to enable use by persons using either of those languages. To the right of these inscriptions, the key pads are inscribed with groups of word shapes in accordance with the invention. Table 46A set forth below shows functions of other numerically designated key pads for a multi-functional portable telephone.

**TABLE 46A**

| | | | |
|---|---|---|---|
| 61: | Clear On | 73: | Δ/Hirakana/Katakana |
| 62: | Esc | 74: | PWR |
| 63: | English: English language system | 75: | Menu Name |
| | Germany: German language system | 76: | STO |
| | Chinese characters language system | 77: | FCN |
| 64: | Shift | 78: | RCL |
| 65: | Memory/Note | 79: | END |
| 66: | Insert | 80: | SND |
| 67: | Space | 81: | DW (vol) |
| 68: | Enter | 82: | UP (vol) |
| 69: | Caps Lock | 83: | # |
| 70: | Num Lock | 84: | * |
| 71: | Auto Display | 85: | (spare) |
| 72: | v/Addition Function | | |

Table 46B set forth below shows the electrical connections of the electronic keyboard system with the electronic system of the telephone. TABLE 46B

| | | | | | |
|---|---|---|---|---|---|
| ① | Bt | ⑳ | COL 10 | 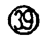 | MIC - |
| ② | SW+4. 75V | 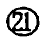 | COL 9 | 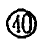 | SPKR + |
| ③ | LENGVD | 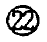 | COL 8 | 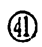 | SPKR - |
| ④ | +4. 75V | 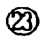 | COL 7 | 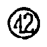 | MUTE 4 |
| ⑤ | 3. 84MHz | 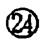 | COL 6 | 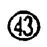 | MUTE 2 |
| ⑥ | SW+4. 75VCTL | 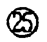 | COL 5 | 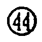 | MUTE 1 |
| ⑦ | BKLT | 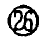 | COL 4 | 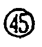 | MUTE 3 |
| ⑧ | TRU 1 | 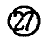 | COL 3 | 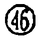 | PWR |
| ⑨ | LMP 1 | 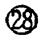 | COL 2 | 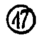 | RST |
| ⑩ | RTN 1 | 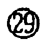 | COL 1 | 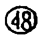 | RTN 1 |
| ⑪ | RST | 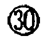 | ROW 5 | 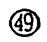 | CMP 1 |
| ⑫ | HKS | 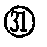 | ROW 4 | 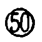 | TRU 1 |
| ⑬ | MUTE 3 | 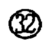 | ROW 3 | 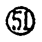 | BKLT |
| ⑭ | MUTE 1 | 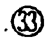 | ROW 2 | 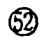 | SN + 4.75 CTL |
| ⑮ | MUTE 2 | 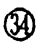 | ROW 1 | 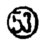 | 3.84 MHz |
| ⑯ | MUTE 4 | 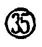 | ROW 6 | 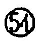 | + 4. 75V |
| ⑰ | COL 13 | 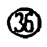 | ALERT + | 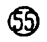 | LEDGND |
| ⑱ | COL 12 | 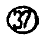 | ALERT - | 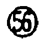 | SW + 4.74V |
| ⑲ | COL 11 | 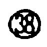 | MIC + | 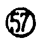 B + | |

It will be appreciated that use of the present invention is applicable world-wide in any system employing an electronic keyboard device for encoding alpha-numeric and punctuation symbols, such as a computer system, a multi-function cordless telephone or pocket cordless handset system, a pager note system or portable telephone system.

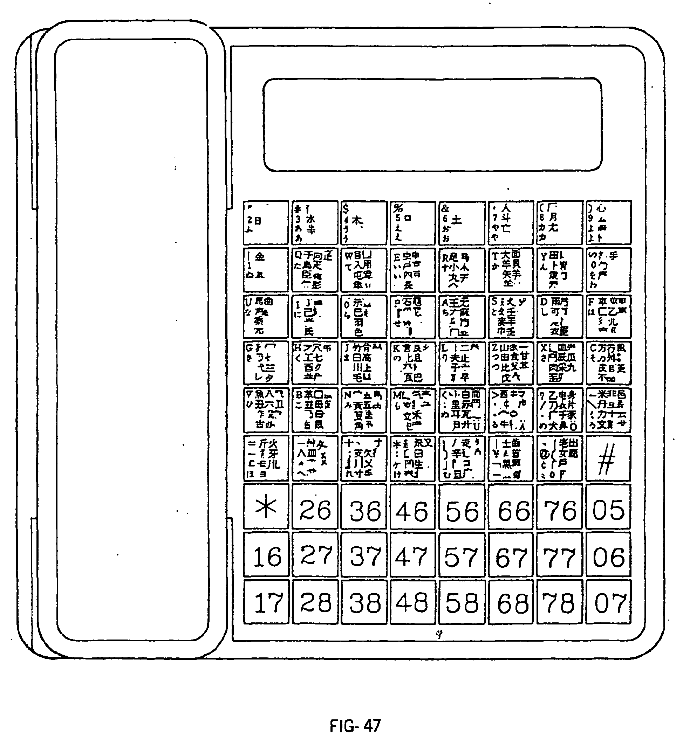

Fig. 47 shows a practical keyboard device for a multi-function cordless telephone handset system.

Table 47 below indicates the functions of the numerically designated keys.

**TABLE 47**

| | | | |
|---|---|---|---|
| 16: | Clear On | 77: | ∇/Addition Function |
| 36: | Esc | 06: | Δ/Hirakana/Katakana |
| 46: | English: English language system | 17: | Tone |
| | Germany: German language system | 28: | Pulse |
| | Chinese: Chinese language system | 38: | Hold |
| 56: | Shift | 48: | Send Message |
| 76: | Memory/Note | | by Character |
| 66: | Insert | 58: | Auto Redialer |
| 05: | Space | 68: | Read |
| 37: | Enter | 78: | Speaker |
| 47: | Caps Lock | 07: | Pause |
| 57: | Num Lock | 27: | Intercom |
| 67: | Auto Display | 26: | Out Line |

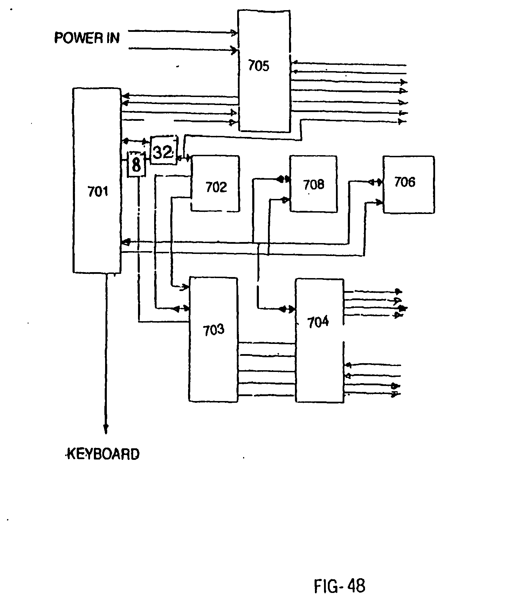

Figure 48 shows a block diagram of a system for controlling a portable telephone handset embodying the invention. In this diagram 701 is the CPU, the main processor that controls the functions of the system; 702 an ROM that can store more than 10,000 codes for producing Chinese characters; 703 a signal repetition integrated circuit; 704 a cyclic wave processing integrated circuit; 705 a power supply integrated circuit; 706 an IM SRAM to store a program to set Chinese data in a form to provide it in readable condition; 708 handset control system software storage for controlling dialing, redial, and message storage; 8 an ID ROM; 32 a decoder LSI that detects a synchronous signal, checks the ID code and adds a message code to a signal sent to the CPU.

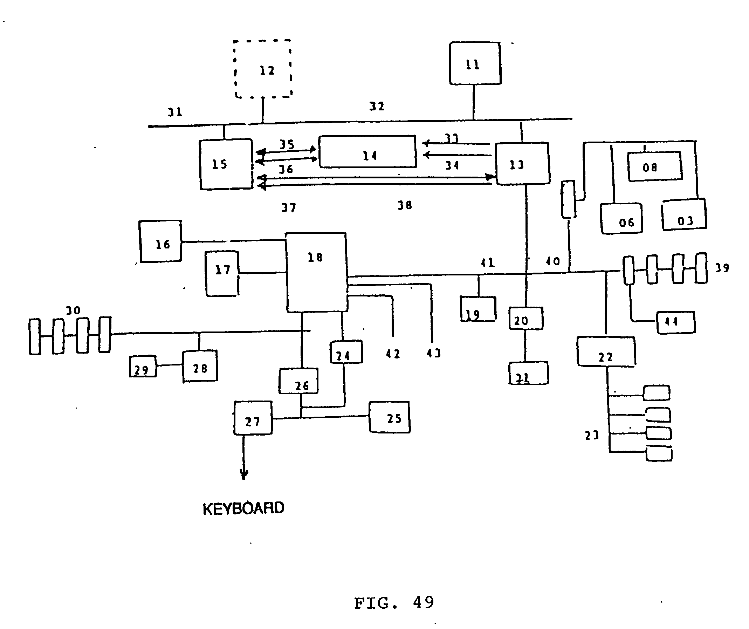

Fig. 49 is a block diagram of a computer system (Pentium Pro) that embodies the method of the invention. Specifically, 06 is an I/O expander that makes the system use the data in Chinese characters and find the addresses written in Chinese characters; 08 is a ROM that produces Chinese characters and can store more thana 10,000 of them; 03 is an IM SRAM that can store programmed Chinese data and provide it in readable written condition. Table 49 below describes the functions of the various blocks.

**TABLE 49**

| | | | |
|---|---|---|---|
| 11. | P6 Processor Series | 28. | AIP (82091 AA) |
| 12. | Overdrive Processor | 29. | Disk Driver |
| 13. | PCI Bridge and Memory Control | 30. | ISA Slot |
| 14. | Main Memory | 31. | P6 Bus |
| 15. | Data Bus Accelerator | 32. | GTL + UPTO 66.7 MHz |
| 16. | CD-ROM | 33. | MA 11:0 |
| 17. | HDD | 34. | Controller |
| 18. | I/O Bridge | 35. | MD (63:0) |
| 19. | SCSI/LAN | 36. | MPE (7:0) |
| 20. | Graphics | 37. | PD (15:0) |
| 21. | Monitor | 38. | Control |
| 22. | PPEC | 39. | S1: (PCI SLOT) |
| 23. | PCHCIA | 40. | PCI Bus |
| 24. | I/O APIC | 41. | 5.0 V (33 MHz) |
| 25. | Bios Flash Eprom | 42. | Port A |
| 26. | XCVR | 43. | Universal Bus Series |
| 27. | Keyboard Controller | 44. | Modem |

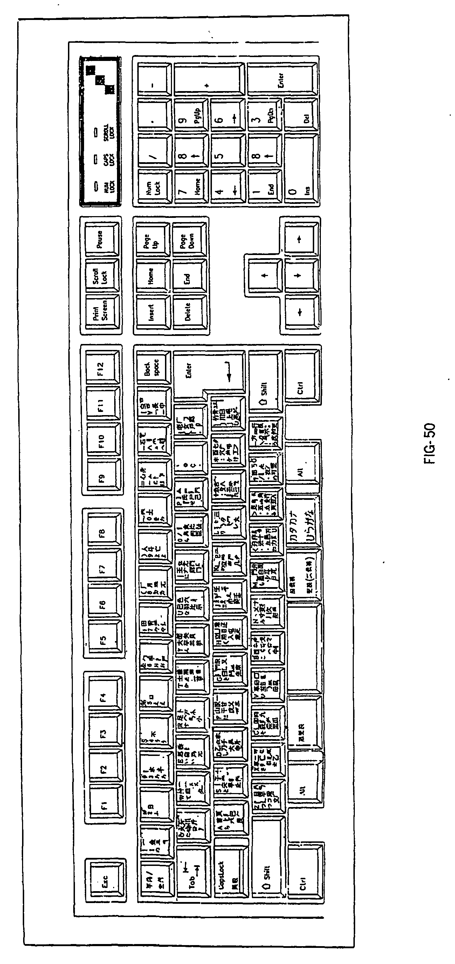

Fig. 50 shows a computer keyboard provided with key pads inscribed in accordance with the present system for processing Chinese character information in a computer.

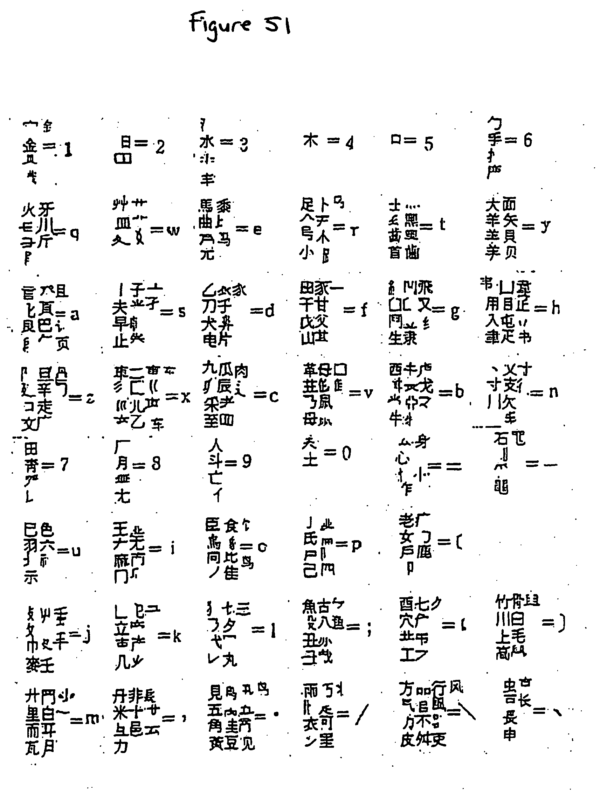

Fig. 51 shows key pads of a 47-key pad keyboard inscribed for use of an A type word shape arrangement as described in Appendix A filed with the present application.

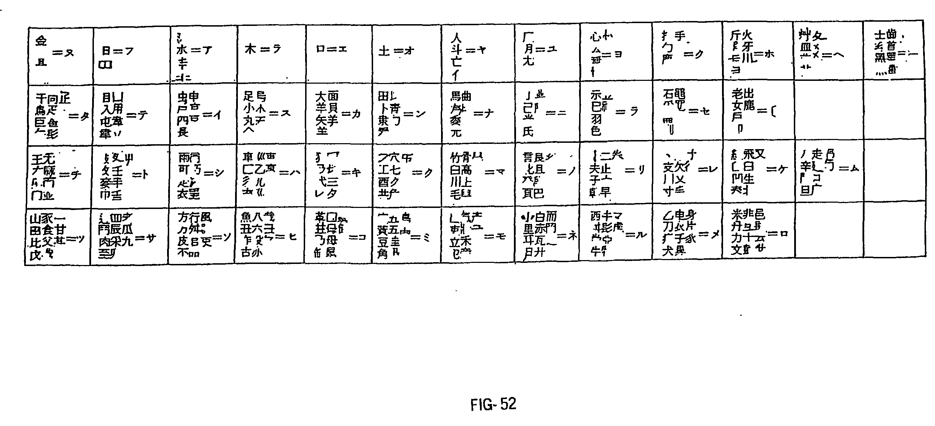

Fig. 52 shows key pads for a keyboard inscribed for a B-type word shape arrangement of Appendix A.

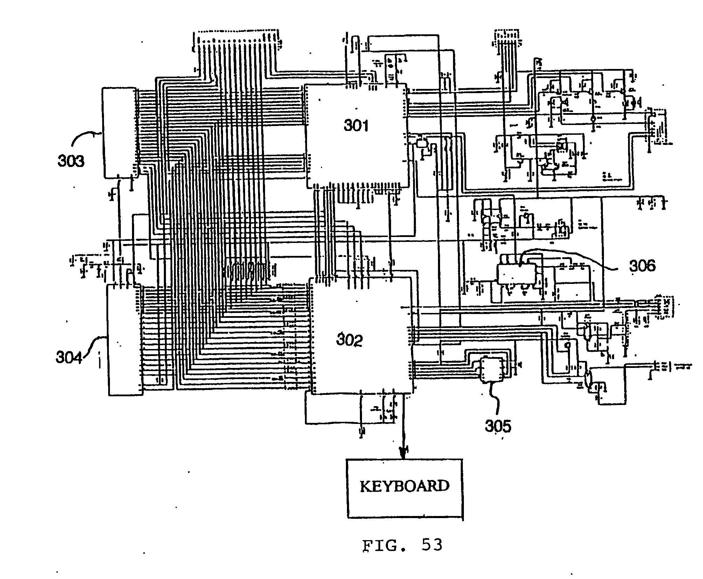

Fig. 53 shows a circuit diagram of an electronic module for a pager device including an on-pager note system. In this diagram 301 is a decoder LSI that processes an NRZ signal from an RXIC, detects the synchronous signal and checks the ID code in a BSV period, and adds a message code to the signal sent to the CPU. A clock generator is connected to the LSI to be used as a receiver control and a timer control. The LSI also detects the signal from an I/O port circuit to control a microphone, an LCD display and a vibrator. 302 is a CPU. After LSI 301 receives an ID code, CPU 302 decodes the received message and uses the received message to control system function. It also controls storage of the message and outputs a starting call that generates a mode of operation and executes every other operation. A clock generator is used to process the message and generate a paging sound signal, as well as to process a message input from the key pads. 303 is an ROM character generator that stores more than 10,000 coded Chinese characters and graphic characters. 304 is a random access memory (SRAM) used to store message data, which can include up to 1,200 characters or 1,000 alpha-numeric elements. 305 is a read-only memory (ROM) into which ID codes and optional functions are written. 306 is a CMOS DC-to-DC transformer integrated circuit (IC) which provides 2 volt and 3 volt power supplies for the pager device circuits and LCD display.

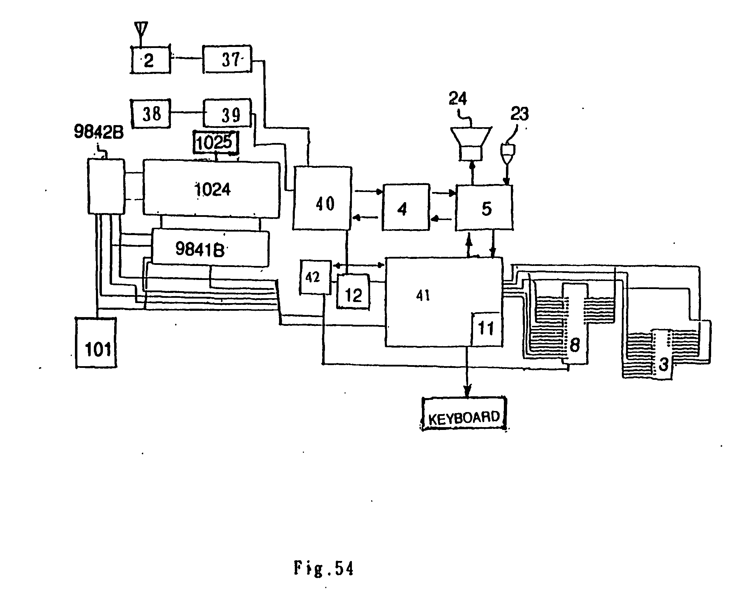

Fig. 54 shows a block diagram of an embodiment of the invention in a practical pocket cordless handset system for communication over an automatic public cordless telephone (cell phone) system. This embodiment may be used to receive and transmit digital or analog character messages and also includes the function of making notes by the key pads.

In this embodiment 2 is a circuit connection to the antenna; 37 an RF amplifier; 38 a local oscillator, and 39 a phase shift circuit. Receiver integrated circuit (IC) 40 is connected through scrambler 4 and compounder 5 to a microphone 23, speaker 24 and CPU 41. 11 is an MSK data communication circuit and 12 is ID ROM. 42 is a decoder LSI which detects the synchronous signal and checks the ID code. A 4M ROM 8 produces Chinese characters, of which it can store more than 10,000. An IM SRAM 3 can store Chinese data and seat them in readable written condition. An LCD display 1025 includes a 16,000 dot screen and LCD I/O controller 1024. 9841 B is a segment driver chip and 9842B a common driver chip. 101 is the electrical input source, and a keyboard includes the features of the present invention as shown in Fig. 52.

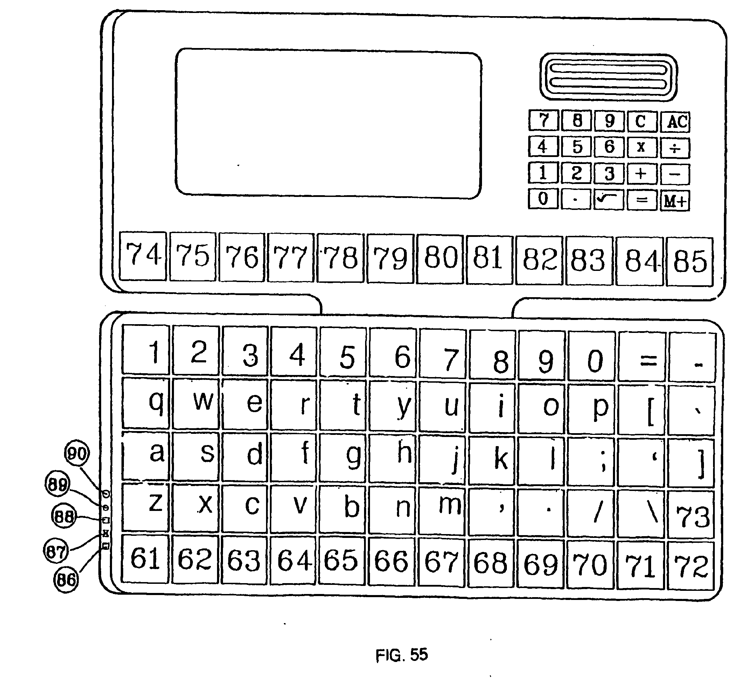

Fig. 55 shows a physical example of the practical pocket cordless handset system of Fig. 54. This cordless handset includes a folding case containing a 47-key pad keyboard embodying the feature of the present invention, an LCD screen, an electronic calculator keyboard, internal microphone and speaker, and a number of function controlling keys.

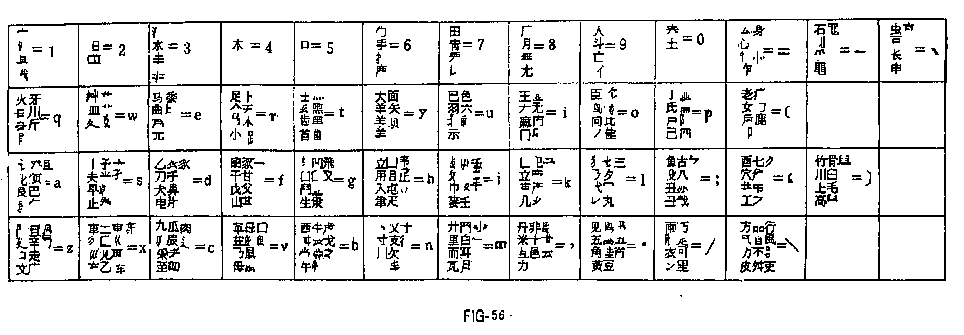

Table 55 below identifies the functions controlled by the keys numbered 61-85. In addition, 86 is an on/off switch connection; 87 a break switch connection; 88 a "no voice" control switch connection; 89 an external microphone connection and 90 an antenna connection. Fig.56 is the description of fig 45

**TABLE 55**

| | | | |
|---|---|---|---|
| 61: | Clear On | 70: | Num Lock |
| 62: | Esc | 71: | Auto Display |
| 63: | English: English language system | 74: | PWR/Receiver |
| | Germany: German language system | 75: | (END) |
| | Chinese characters language system | 76: | ToneNolume |
| 64: | Shift | 77: | Intercom |
| 65: | Memory/Note | 78: | Redial |
| 66: | Insert | 79: | Hold |
| 72: | ∇/Addition Function | 80: | Send |
| 73: | Δ/Hirakana/Katakana | 81: | Out Line |
| 67: | Space | 82: | Pause |
| 68: | Enter | 83: | # |
| 69: | Caps Lock | 84: | * |

This handset may be used anywhere cellular telephone systems are available for communication, and includes the additional features of making notes by use of the key pads and a functional electronic calculator.

It is readily apparent that the above-described method and apparatus have the advantage of wide commercial utility. It should be understood that the specific forms of the invention hereinabove described are intended to be representative only, as certain modifications within the scope of these teachings will be apparent to those skilled in the art.

Accordingly, reference should be made to the following claims in determining the full scope of the invention.

### APPENDIX A

Patent application of: Chin Tui HUANG and Yoko MACHI for

### METHOD AND APPARATUS FOR CREATING CHINESE CHARACTER COMPUTER AND COMMUNICATION CODES

C.T.Huang and Y.k.Machi To Yama and C.T.Houng

### DESCRIPTION OF PROCESS FOR RENUMBERING SMALLER RECTANGULAR AREAS WITHIN RECTANGULAR AREA OF CHINESE CHARACTERS

A classic Chinese character is composed of one or more 349 different word shape figurations (hereafter "word shapes") each created by one or more open strokes, which can be arranged in different positions within the rectangular area of the Chinese character. The method for creating character codes uses computer key pad symbols to create codes for Chinese characters by associating key pads with groups of one or more of the word shapes, and keying in key pad symbols in the order in which word shapes match sequentially numbered smaller rectangular areas within the area of a Chinese character.

If a Chinese character contains only one word shape, it can be encoded with two key pad symbols to distinguish that word shape. This is done by first entering the key pad symbol signal representing the group of word shapes which includes the specific word shape figuration, followed by entering a key pad numerical symbol signal designating the numerical position of the word shape in the group of word shape symbols containing that word shape inscribed on the key pad.

Chinese characters containing 2, 3, 4 or 5 word shapes are encoded with a number of key pad symbols equal to the number of word shapes in the Chinese character. Chinese characters containing more than five word shapes are encoded with five key pad symbols representing the more significant word shapes, i.e., those containing more brush strokes.

If a character contains 3, 4, or 5 word shapes, standard drawings of numbered smaller rectangles within the character will normally have the rectangles numbered so that the last numbered rectangle will be that of the bottom right corner word shape. The following are examples of rectangular arrangements representing (A) three word shape characters having word shape number 3 in the bottom right corner position, (B) four word shape characters having word shape number 4 in the right corner position, and (C) five word shape characters having word shape number 5 in the bottom right corner position.
(A) the three position: 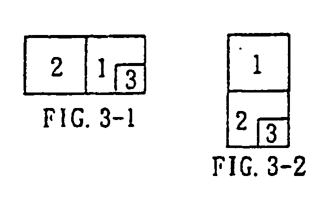
(B) the four position: 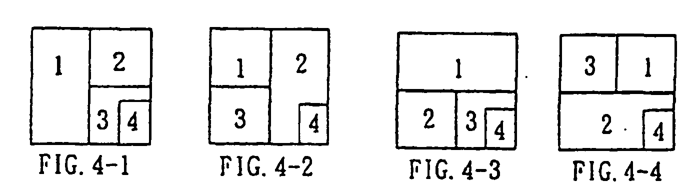 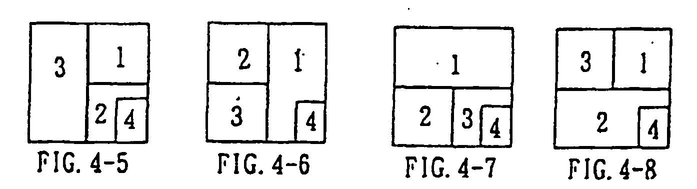 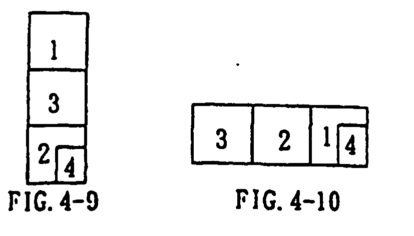
(C) the five position:

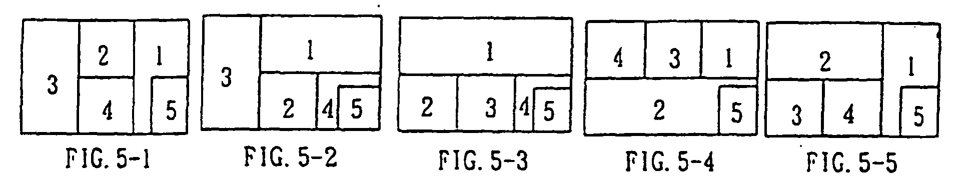

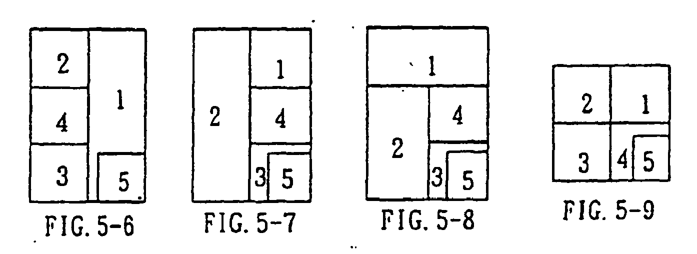

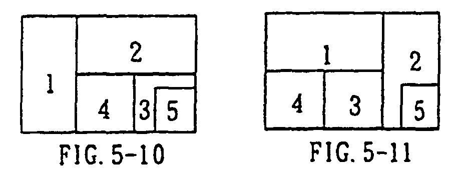

Tables D-1, D-2 and D-3 below show representative Chinese characters in columns on the left side with its bottom right corner word shape on the right side.

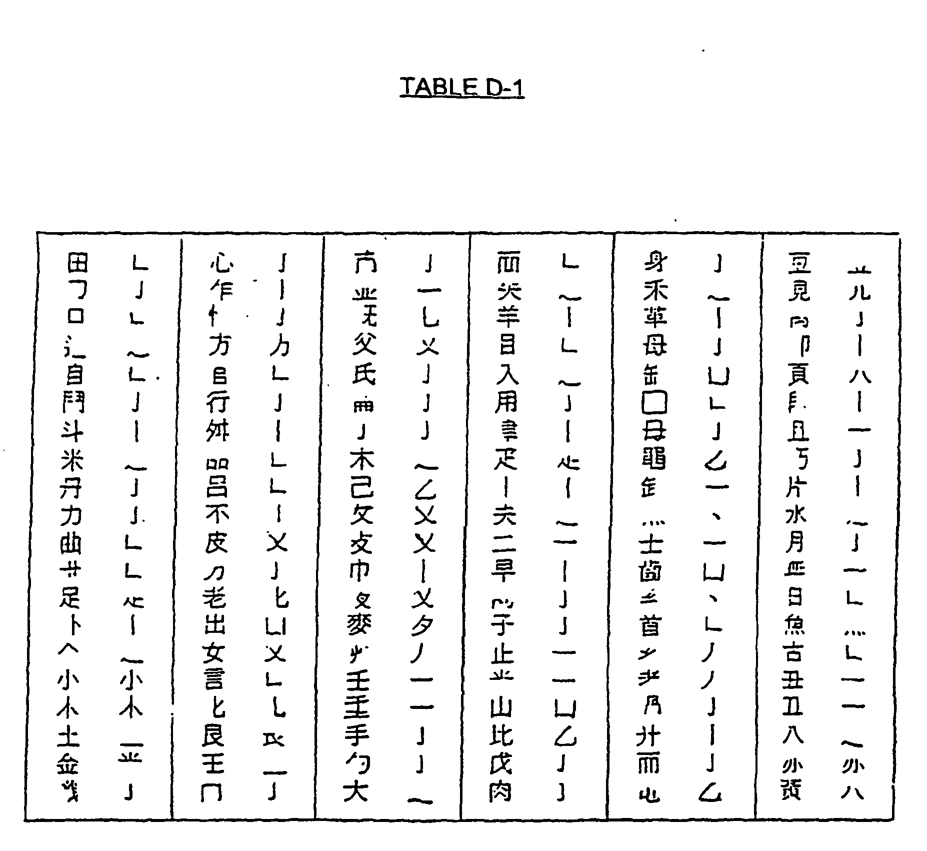

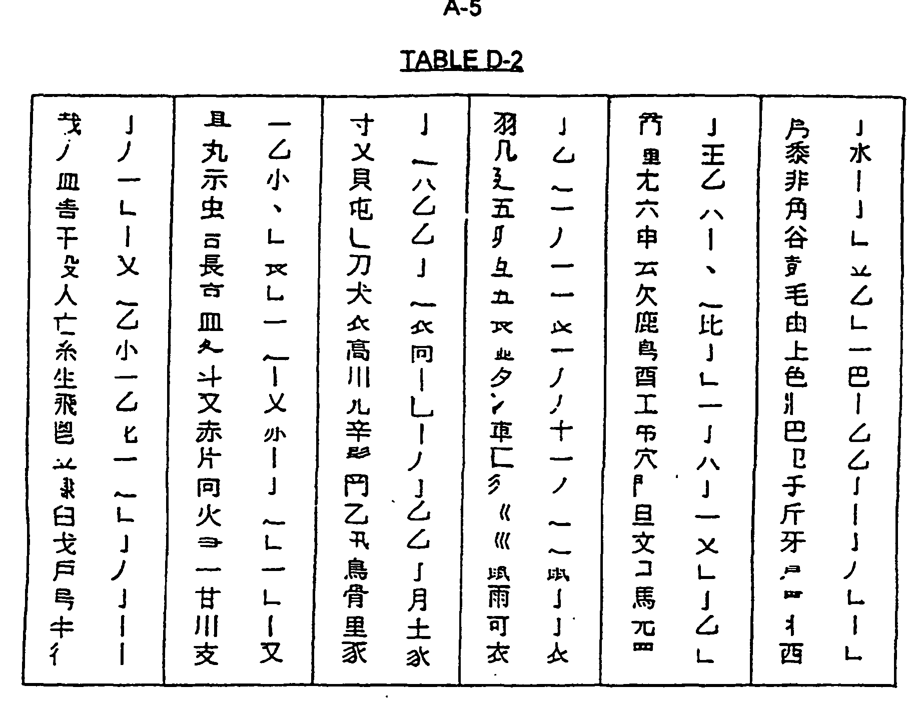

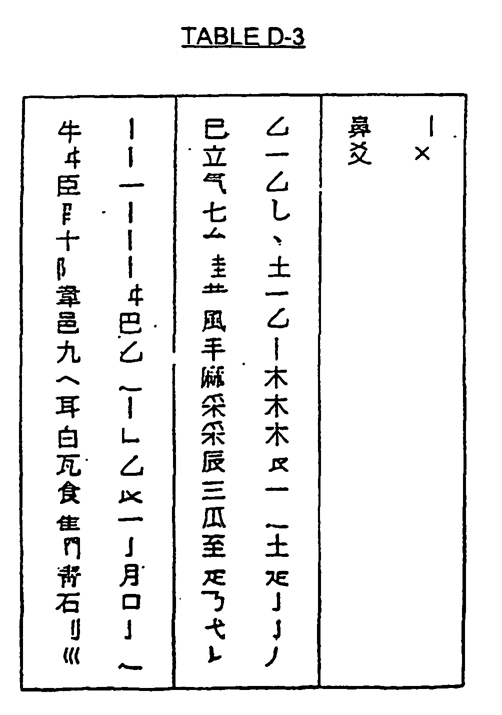

Following are descriptions of numbering systems for rectangles for use with two different arrangements, A Type and B Type, of word shape forms on key pads, shown in Figs. 51 and 52 of the drawings of the present application.

### A Type Word Shape Arrangement

For an A Type word shape arrangement as shown on key pads of the 47 key keyboard of Fig. 51 of this application, we take a standard drawing with rectangular portions numbered numerically in order of succession. Chinese characters computer exchange codes for five-piece standard drawings as shown in the drawing figures of this application, and variations thereof, are classified as follows:
1. Single left side code on left side.
   a. Two horizontal lines, two straight lines above on the right side of the single left side code. 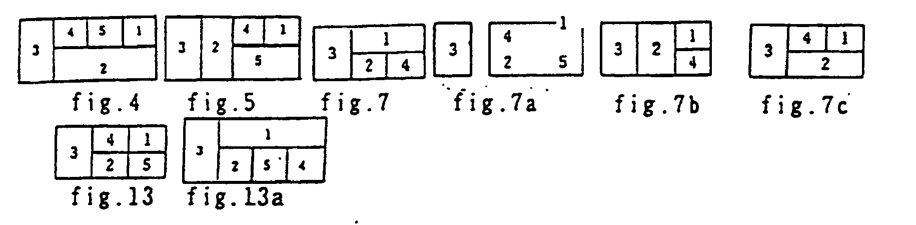
   b. One straight line over three horizontal lines. (3 code) 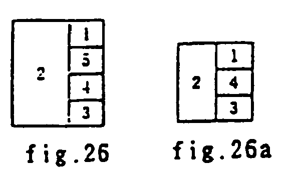
   c. Two straight lines on the right side of the single left side code, one straight line over three horizontal lines. (3 code) 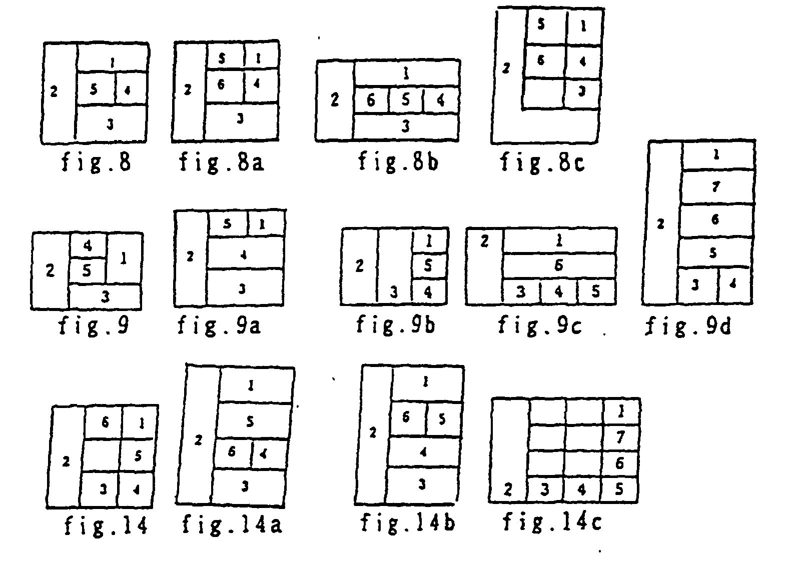
2. Single right side code on right side.
   a. Two horizontal lines, two straight lines above on left side of the single right side code. 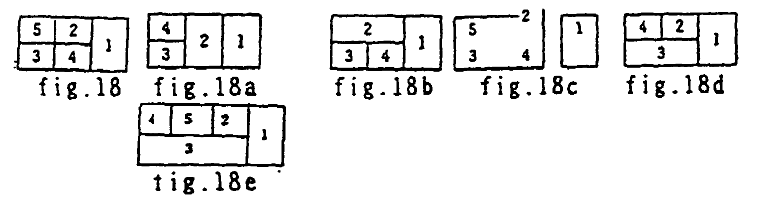
   b. One straight line over three horizontal lines. (3 code) 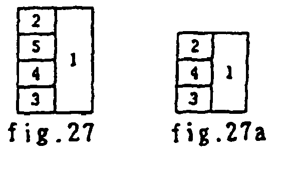
   c. Two straight lines on the left side of the single right code, one straight line over three horizontal lines. (3 code) 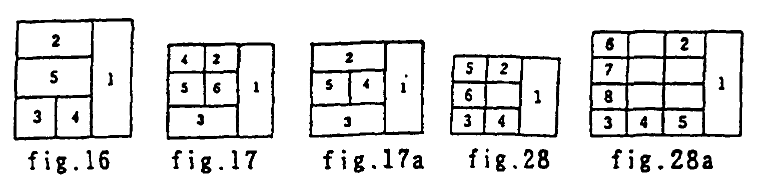
3. Single side code on the bottom side.
   a. Two horizontal lines (2 code), two straight lines above. 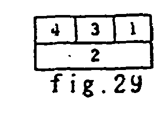
   b. One straight line over three horizontal lines (3 code), single code on the top side. 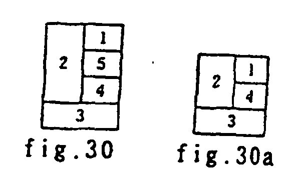
   c. One straight line over three horizontal lines (3 code), two straight lines above. 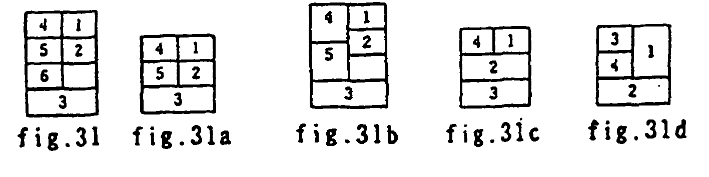
4. Single side code on the top side.
   a. Two horizontal lines (2 code), two straight lines above.
   b. Two straight lines above, one straight line over three horizontal lines. (3 code) 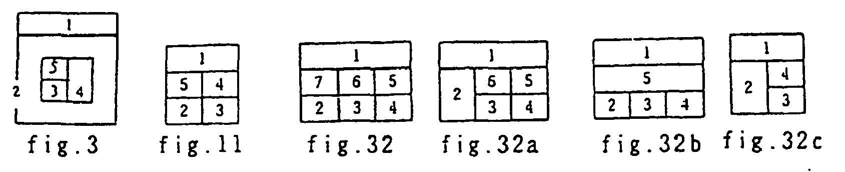 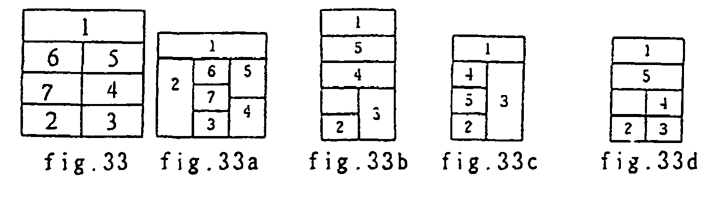
   c. Single side code on bottom side. 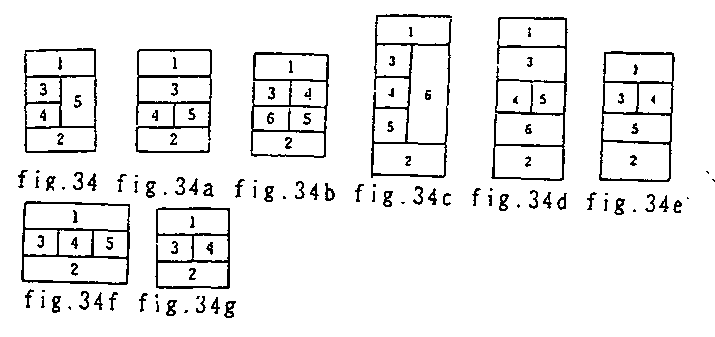
   d. One straight line are all single code. 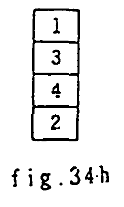
5. No single side code on the side
   a. 2 code on the left straight side. 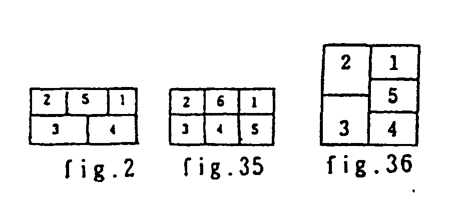
   b. 3 code on the left straight side. 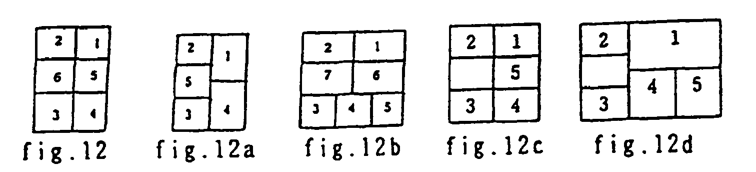 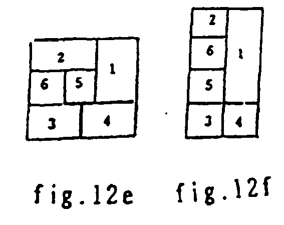
6. Single codes on the right and left sides are over three straight lines.
   a. The second straight lines from the right side are two horizontal lines. 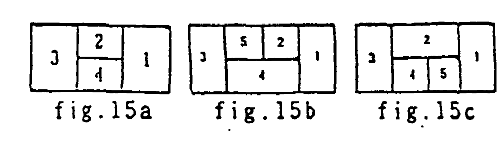
   b. The second straight lines from the right side are 3 code (horizontal line). 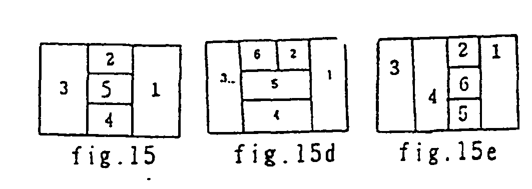
7. Out of square (big square). 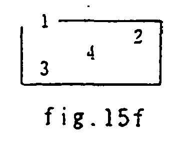
8. One horizontal line.

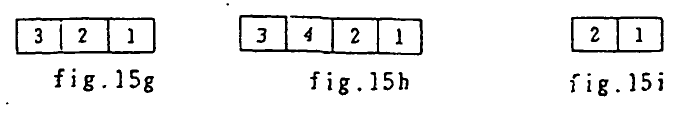

### B Type Word Shape Arrangement

For a B Type word shape arrangement as shown on key pads of the 47 key keyboard of Fig. 52 of this application, we take a standard drawing with rectangular portions numbered numerically in order of succession. Chinese characters computer exchange codes for five-piece standard drawings as shown in the drawing figures of this application, and variations thereof, are classified as follows:
1. Single left side code on left side.
   a. Two horizontal lines, two straight lines above on the right side of the single left side code. 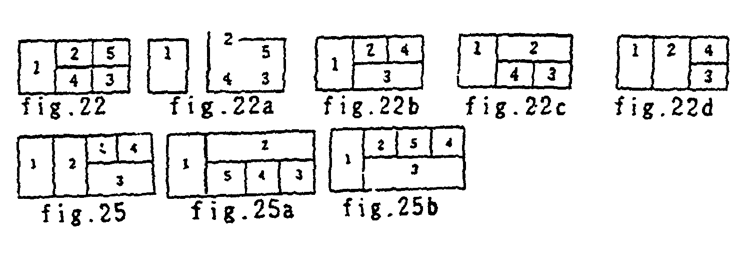
   b. One straight line over three horizontal lines. (3 code) 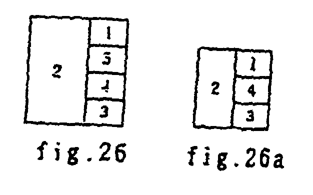
   c. Two straight lines on the right side of the single left side code, one straight line over three horizontal lines. (3 code) 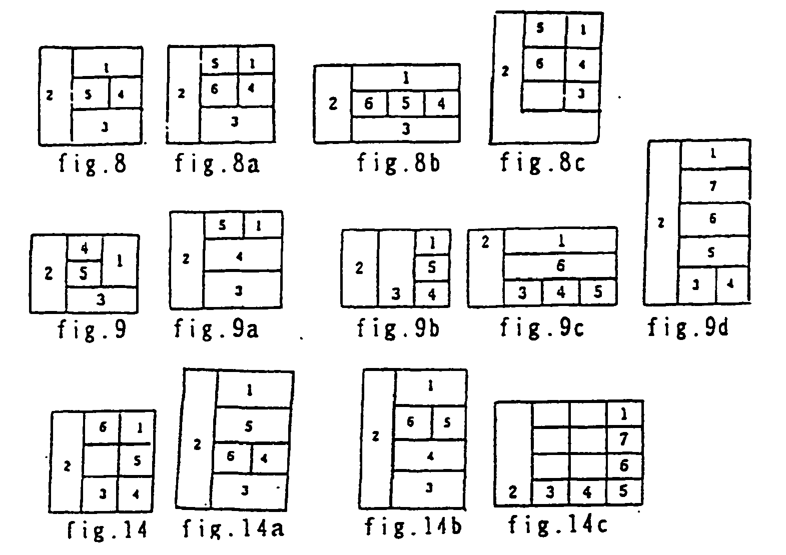
2.
   a. Two horizontal lines, two straight lines above on the left side of the single right side code. 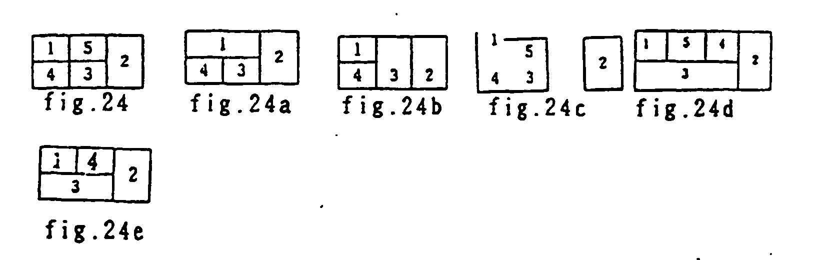
   b. One straight line over three horizontal lines. (3 code) 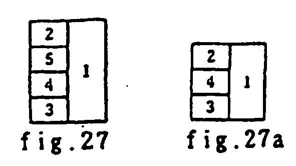
   c. Two straight lines on the left side of the single right side code, one straight line over three horizontal lines. (3 code) 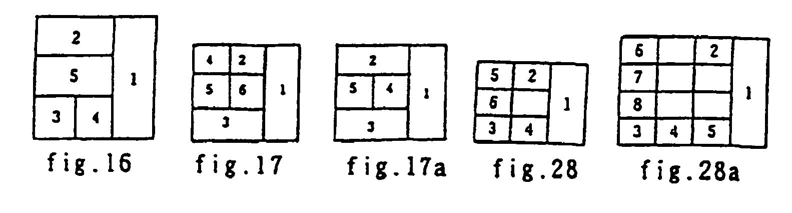
3. Single side code on the bottom side.
   a. Two horizontal lines (2 code), two straight lines above. 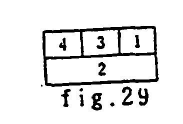
   b. One straight line over three horizontal lines (3 code), single code on the top left side. 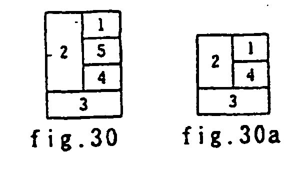
   c. One straight line over three horizontal lines (3 code), two straight lines above. 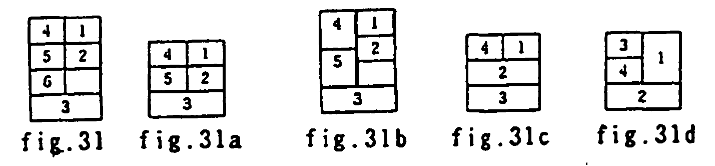
4. Single side code on the top side.
   a. Two horizontal lines (2 code), two straight lines above.
   b. Two straight lines above, one straight line over three horizontal lines. (3 code) 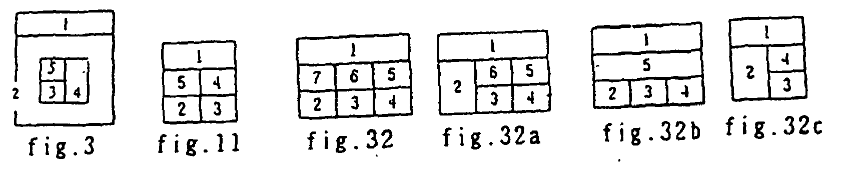 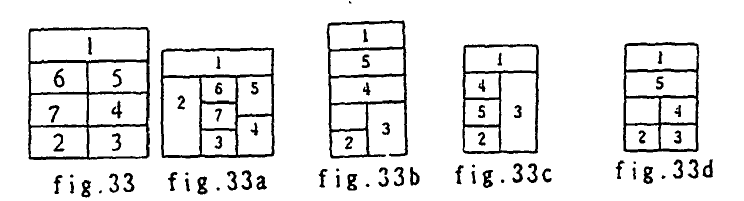
   c. Single side code on bottom side. 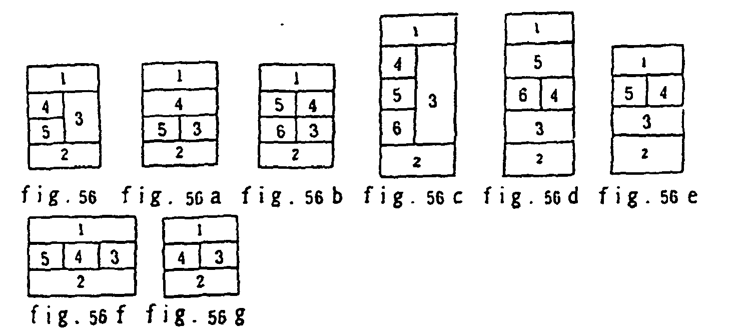
   d. One straight line are all single code. 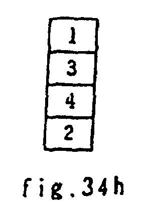
5. No single side code on the side
   a. 2 code on the left straight line. 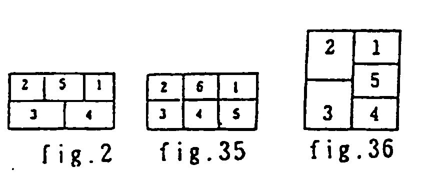
   b. 3 code on the left straight line. 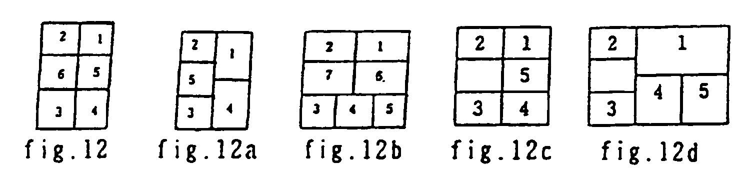 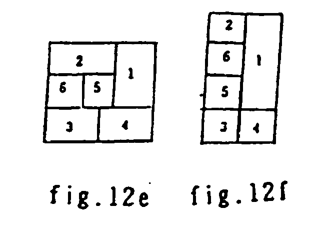
6. Single codes on the right and left sides are over three straight lines.
   a. The second straight lines from the right side are two horizontal lines. 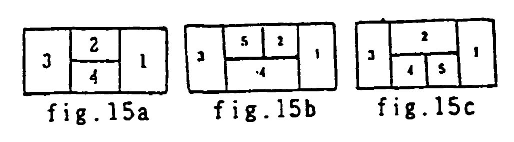
   b. The second straight lines from the right side are 3 code (horizontal line). 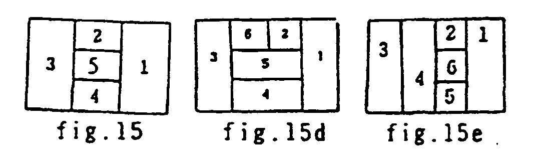
7. Out of square (big square). 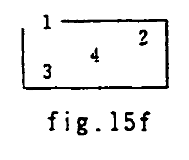
8. One horizontal line.

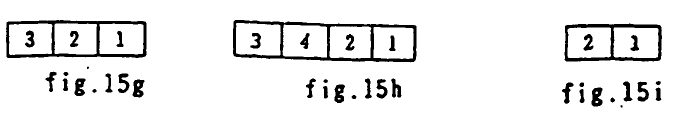

### APPENDIX B

Patent application of: Chin Tui HUANG and Yoko MACHI
for

### METHOD AND APPARATUS FOR CREATING CHINESE CHARACTER COMPUTER AND COMMUNICATION CODES

C.T.Huang and Y.k.Machi
To Yama and C.T.Houng

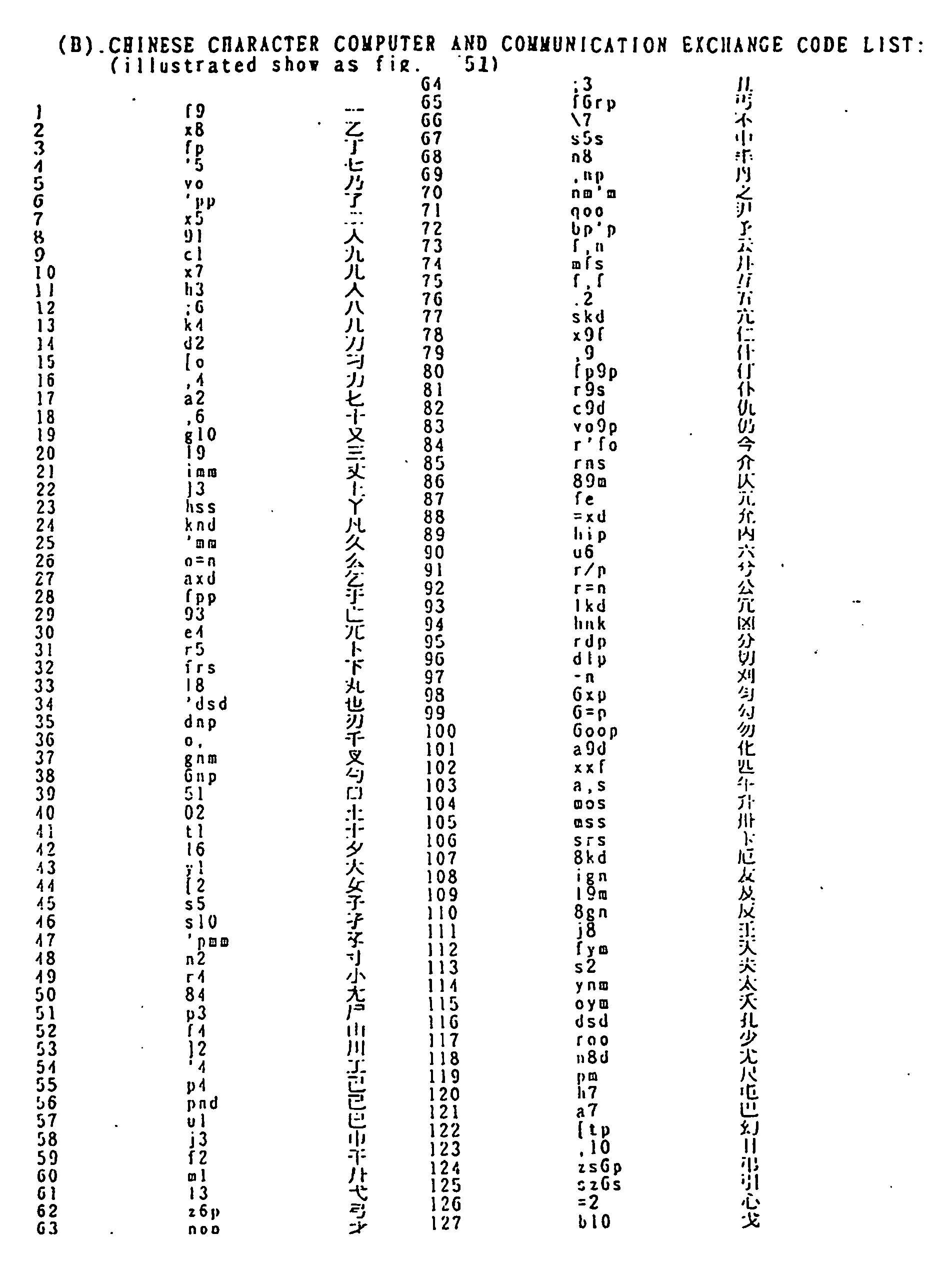

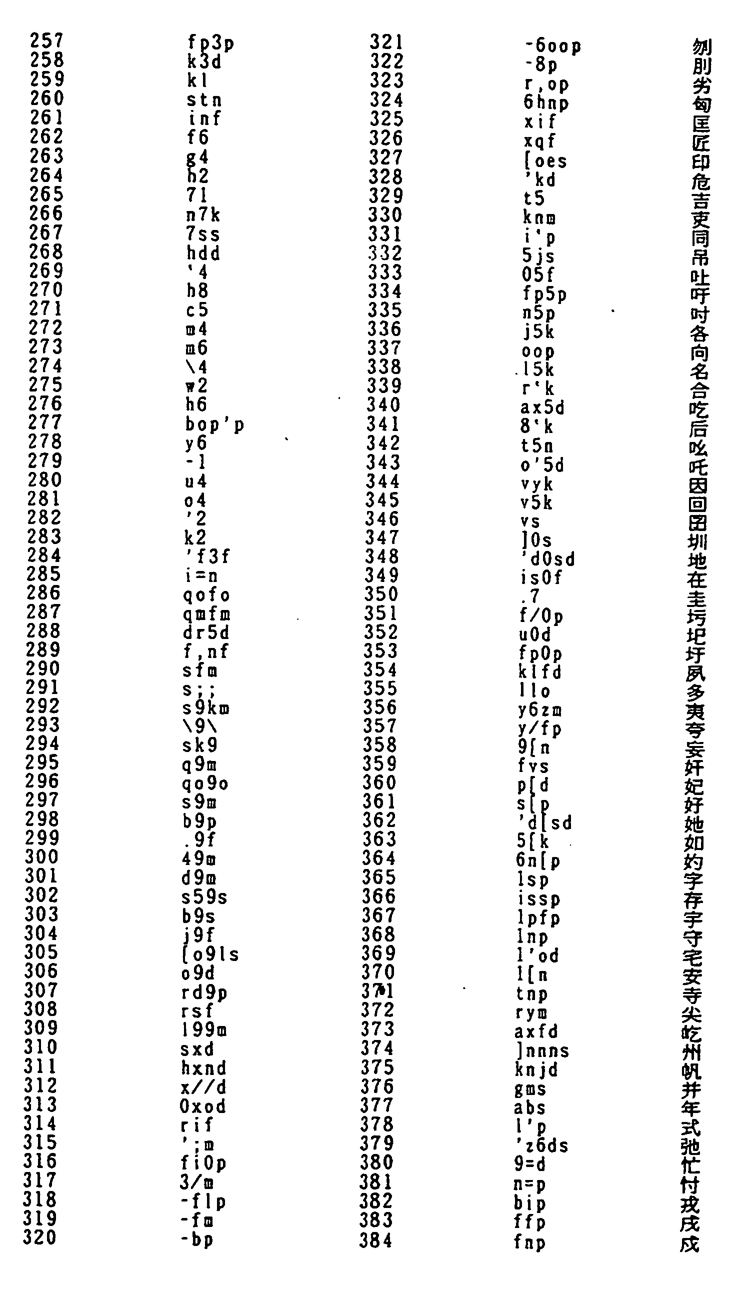

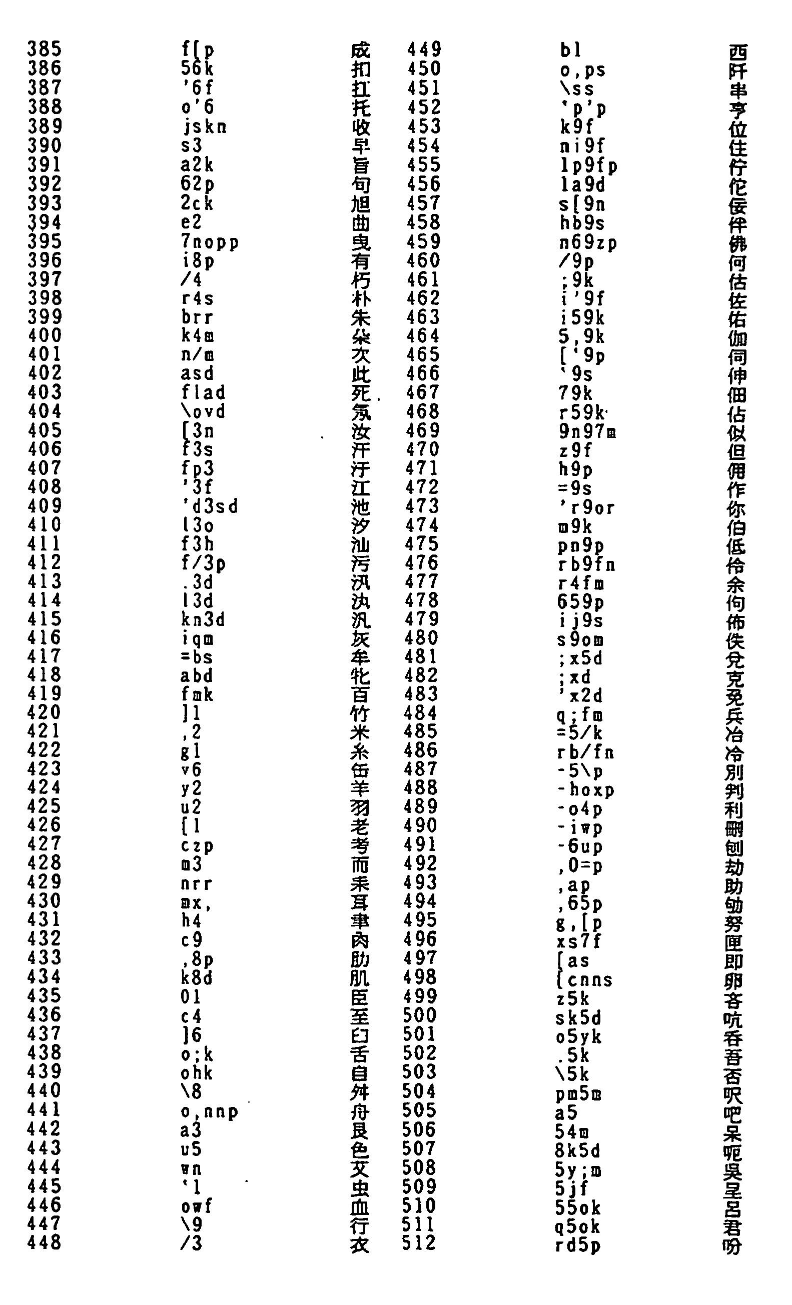

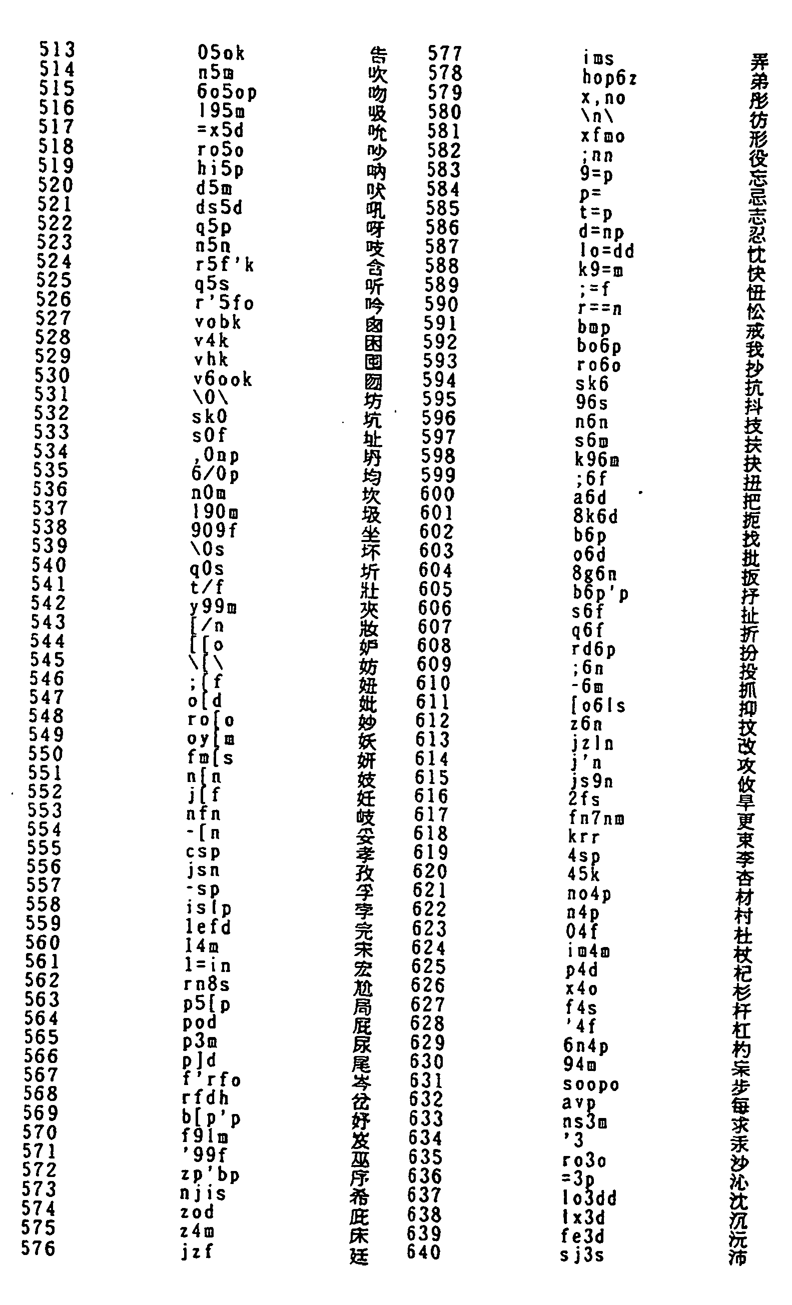

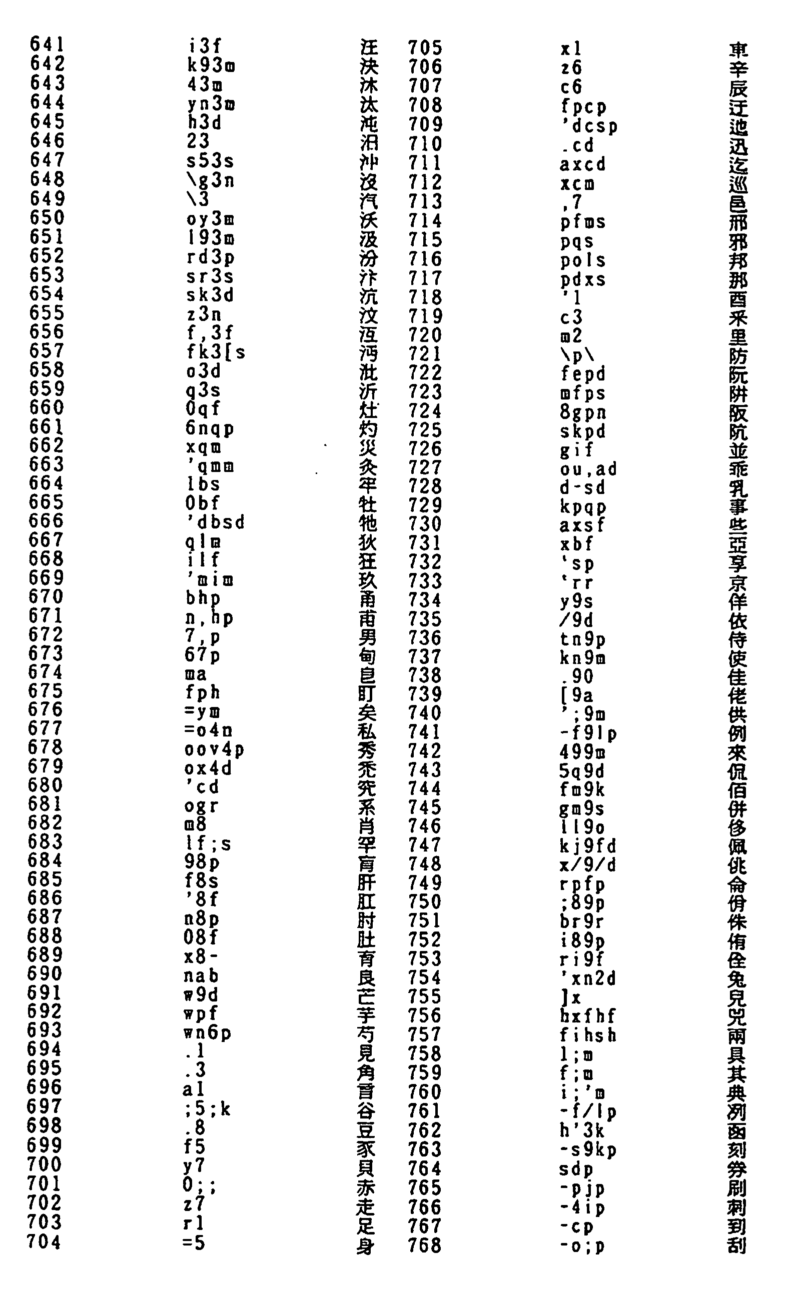

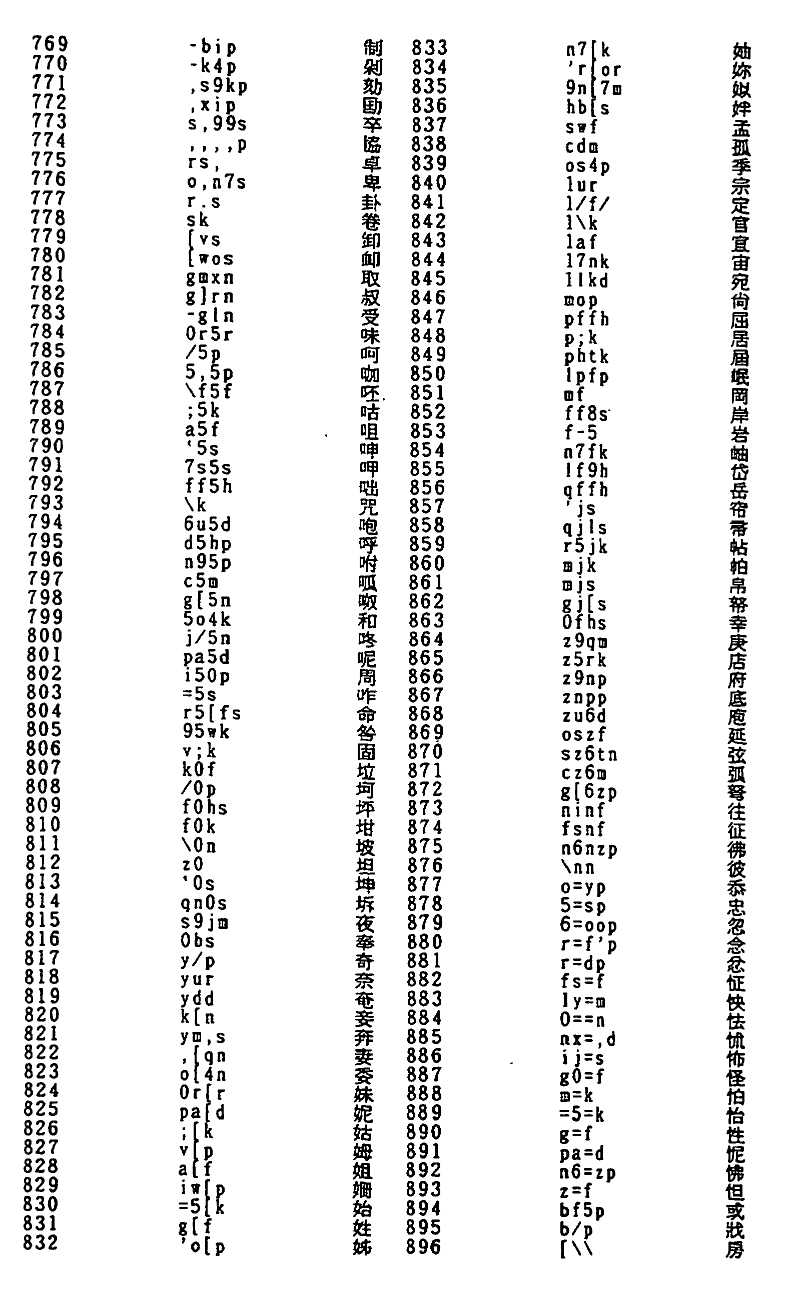

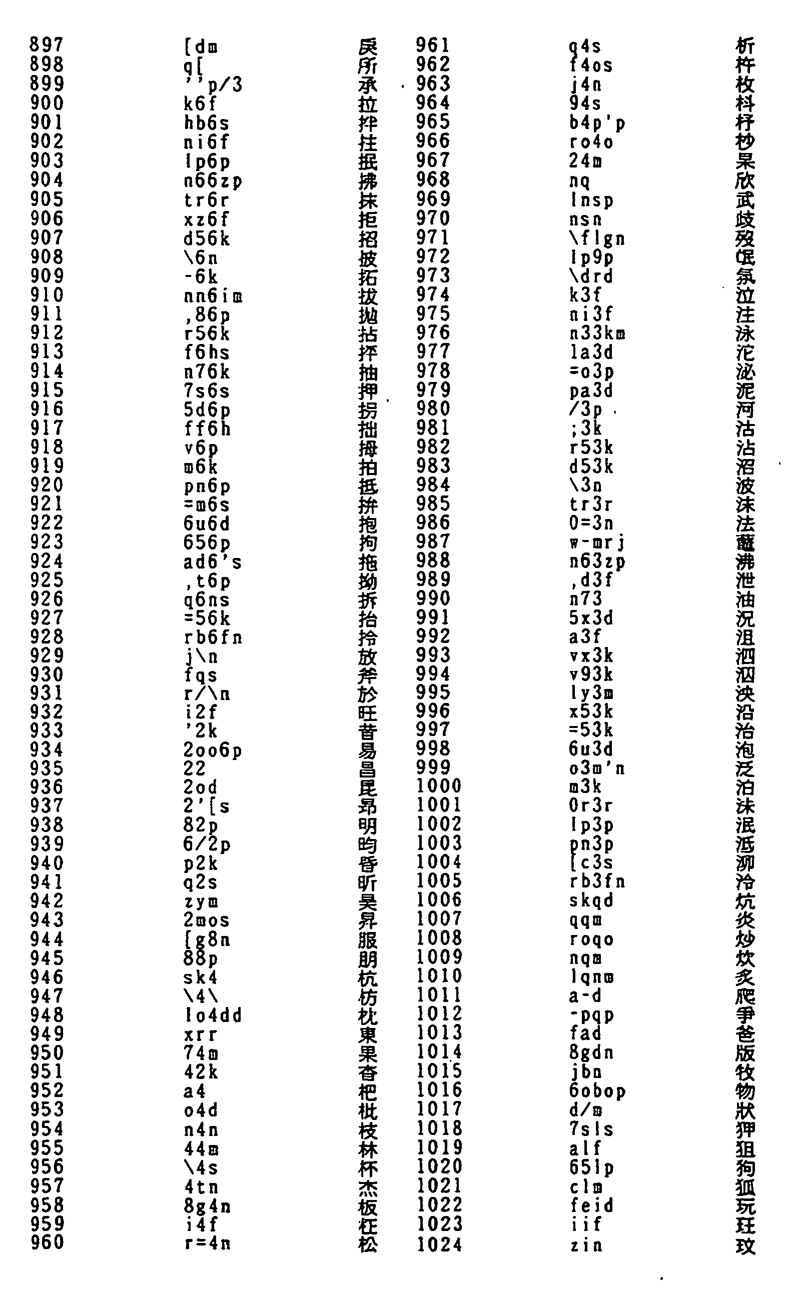

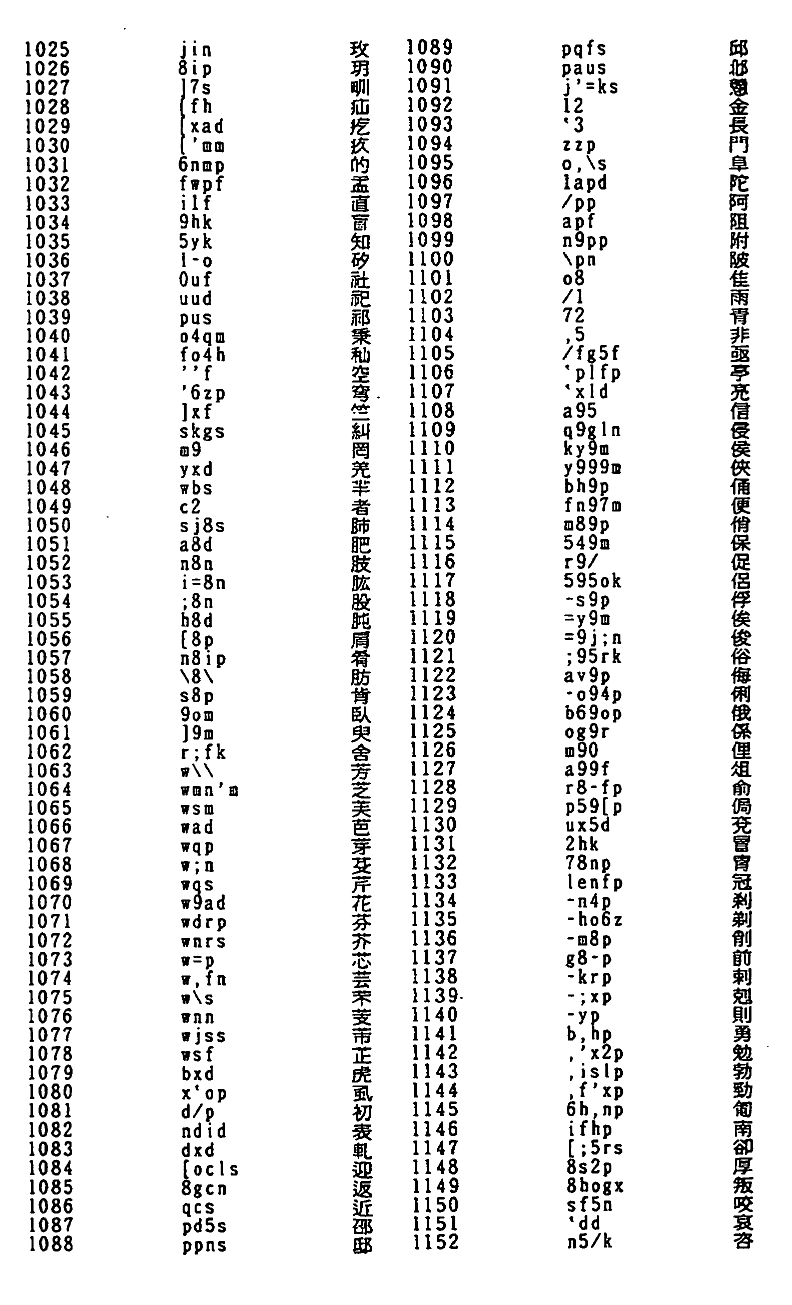

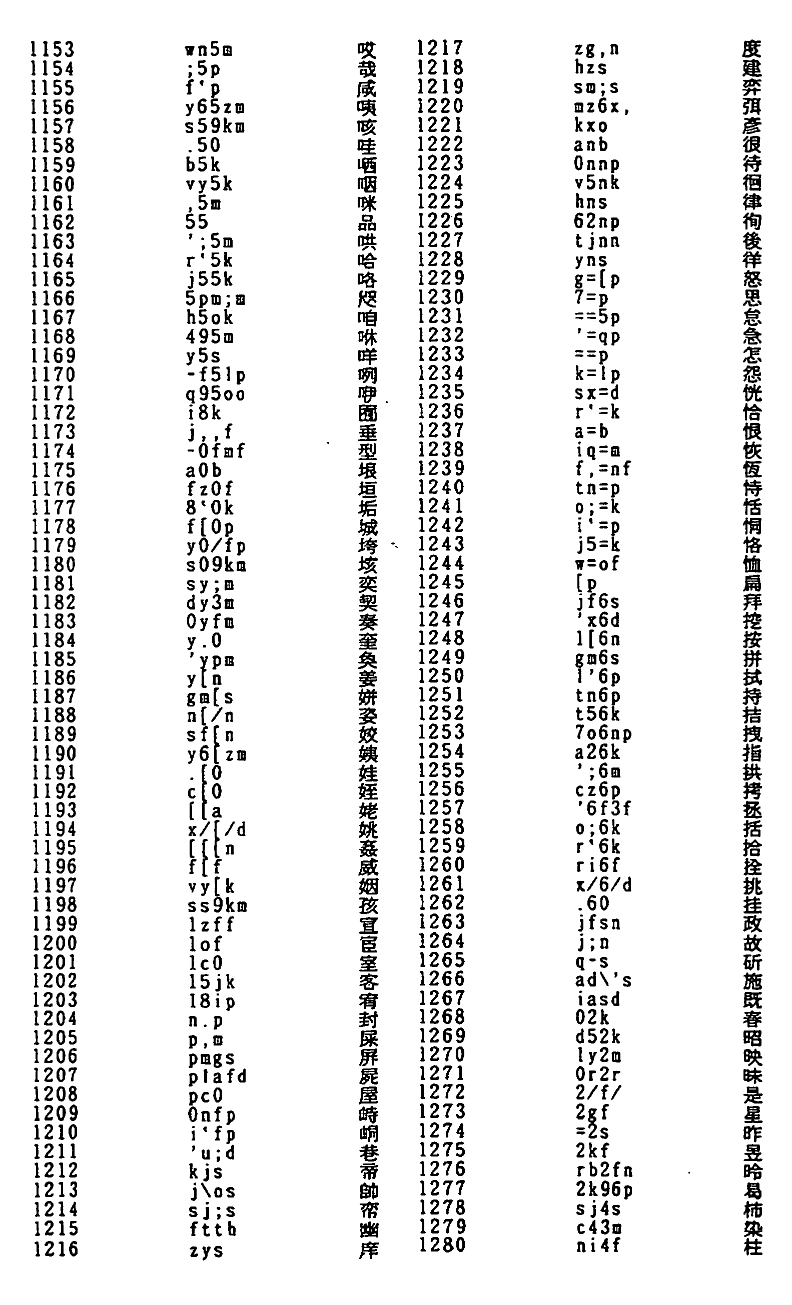

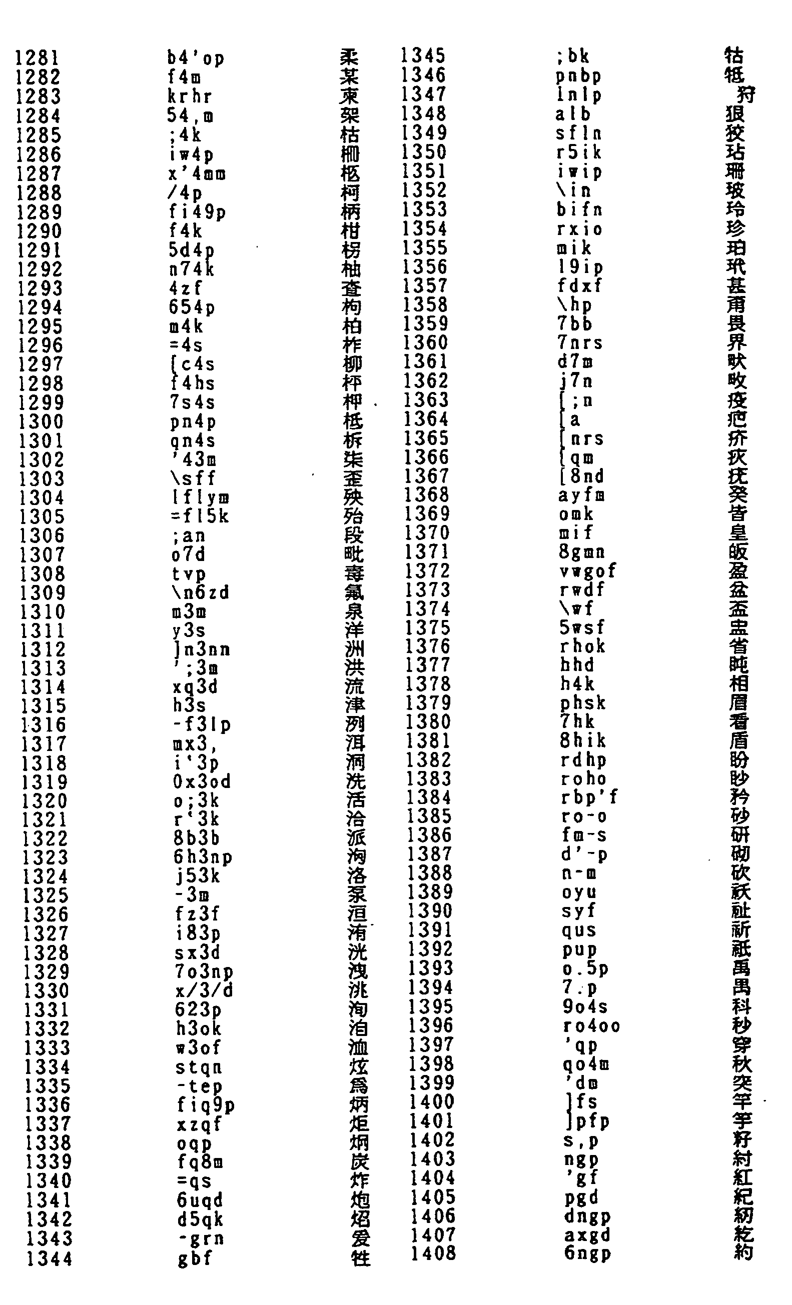

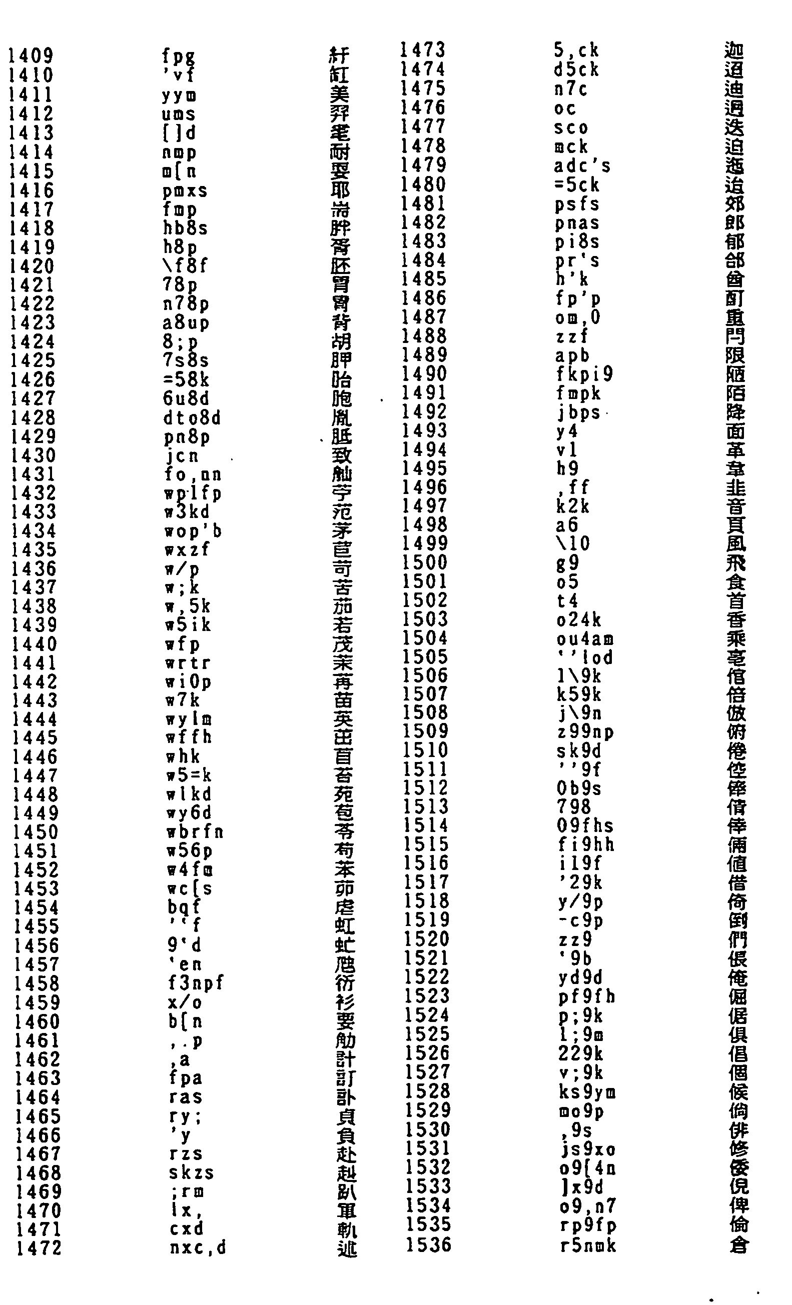

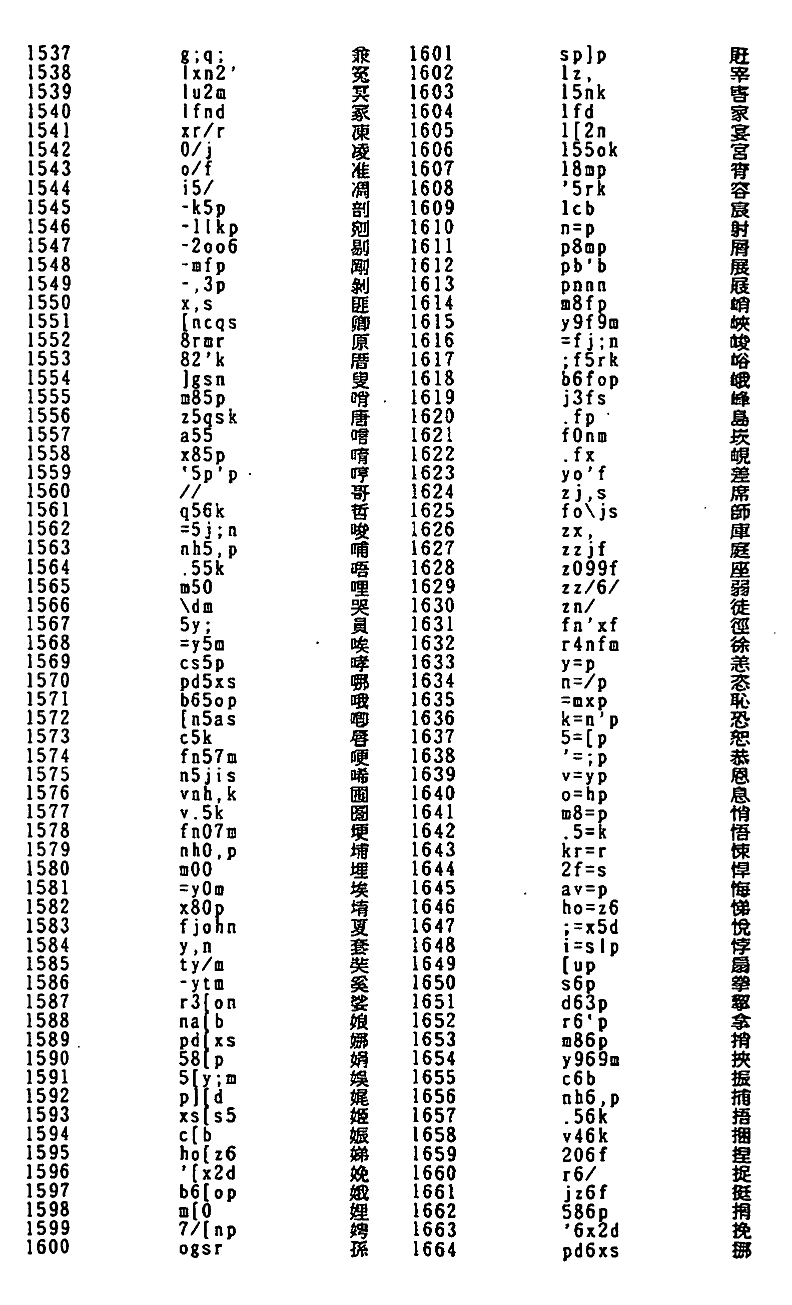

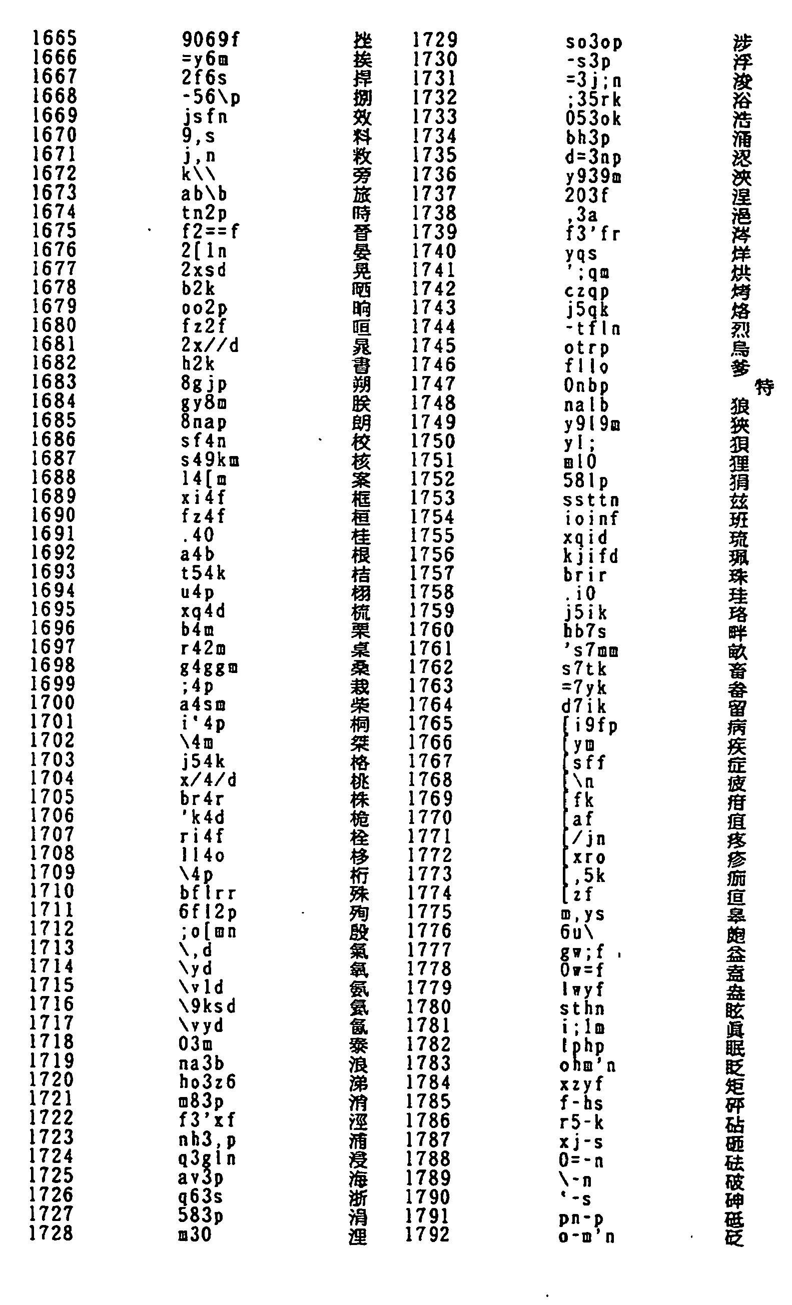

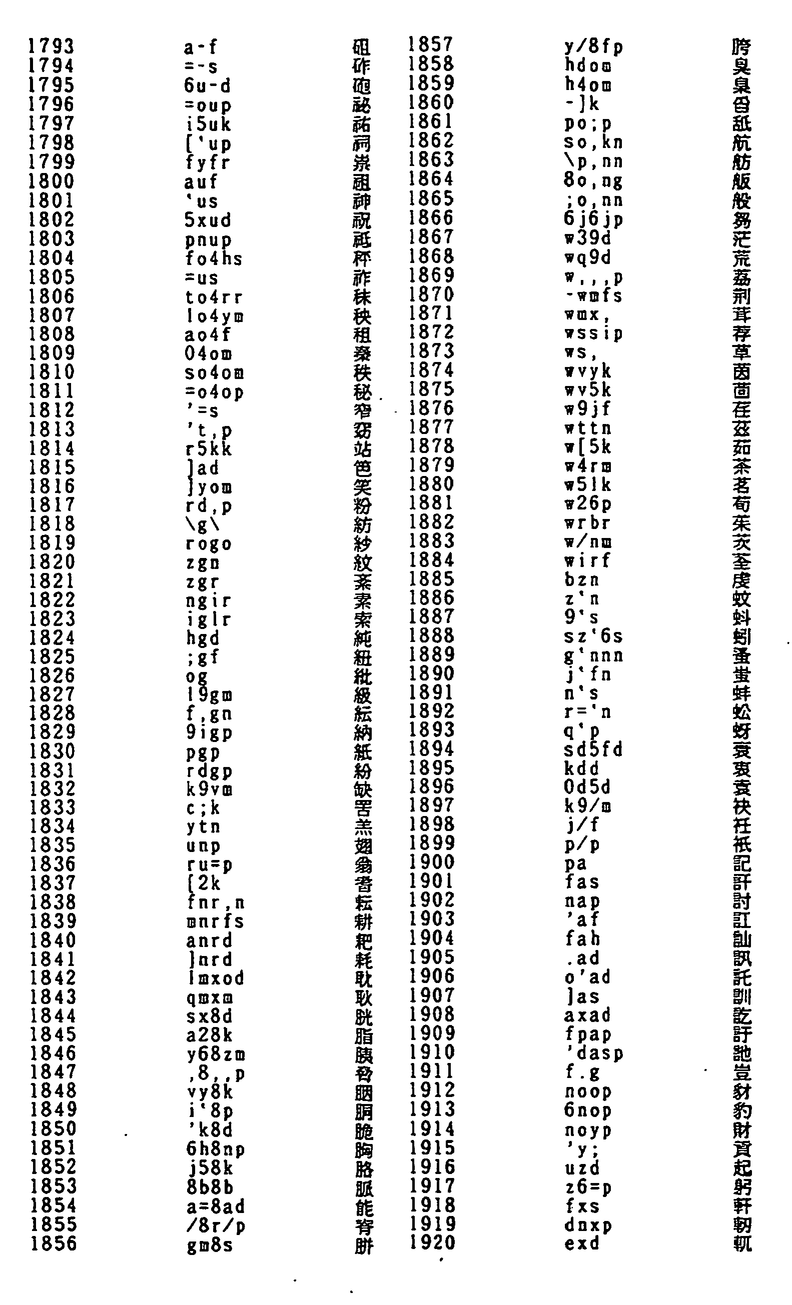

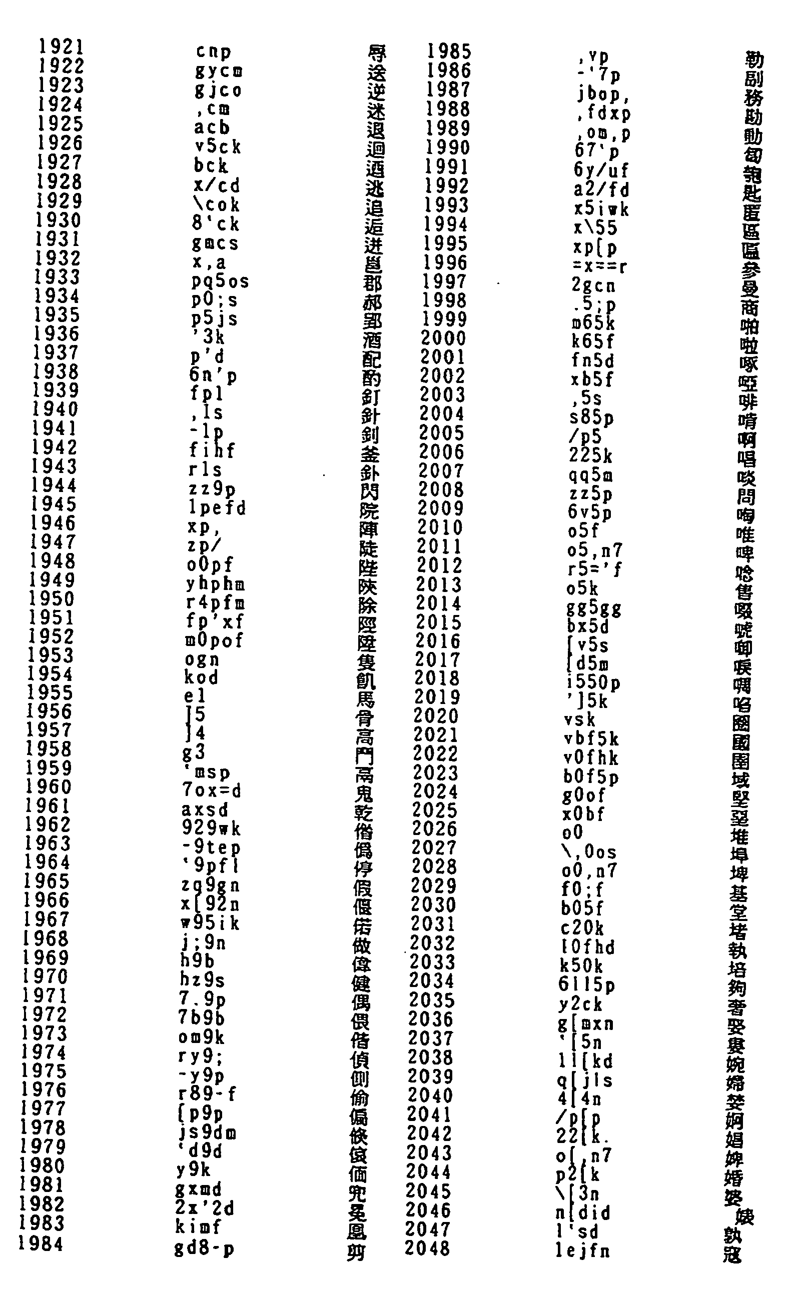

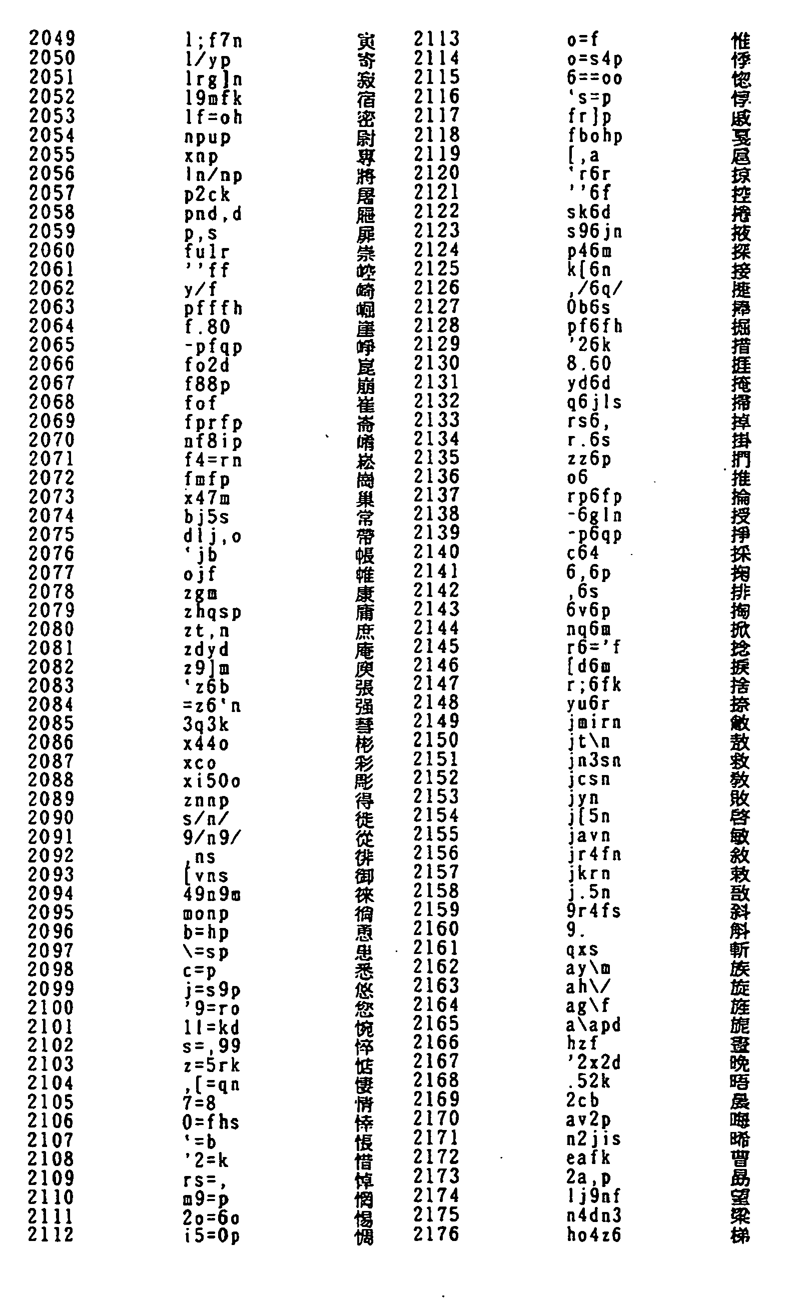

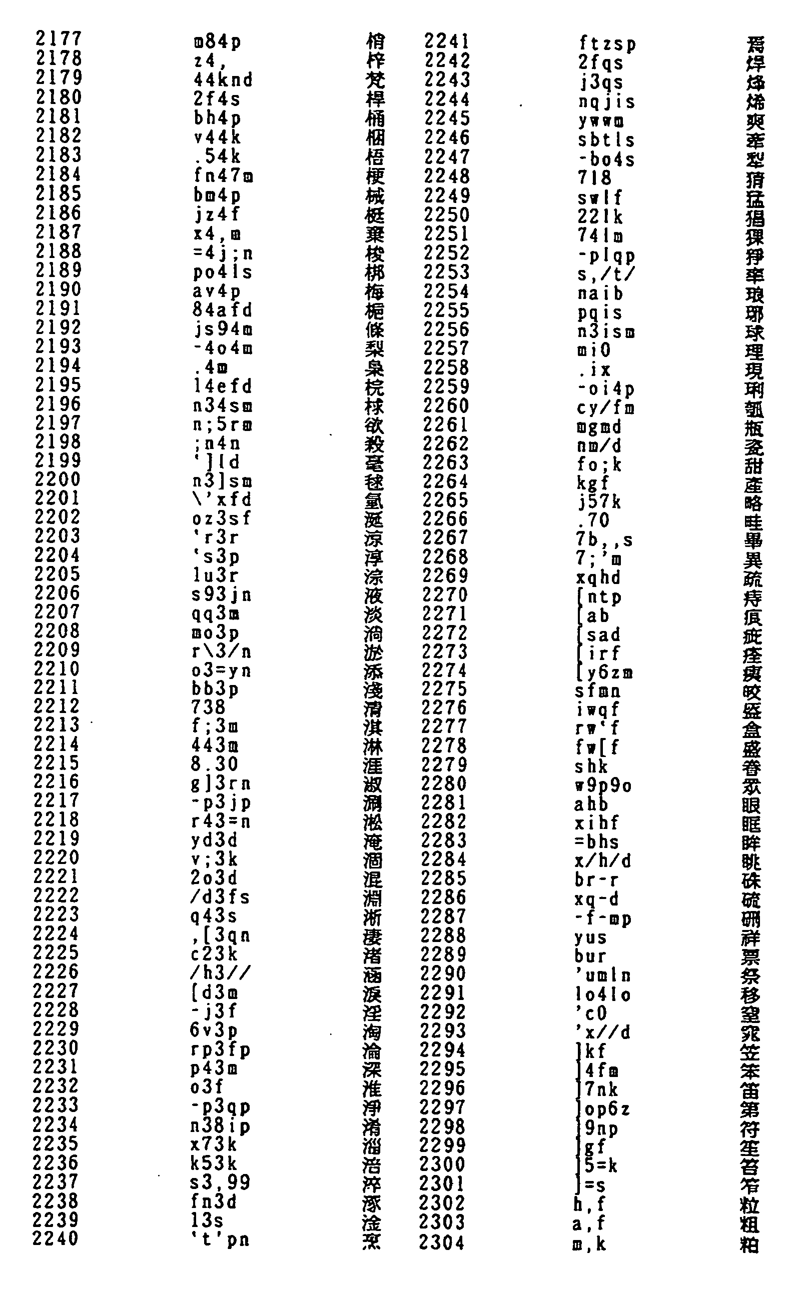

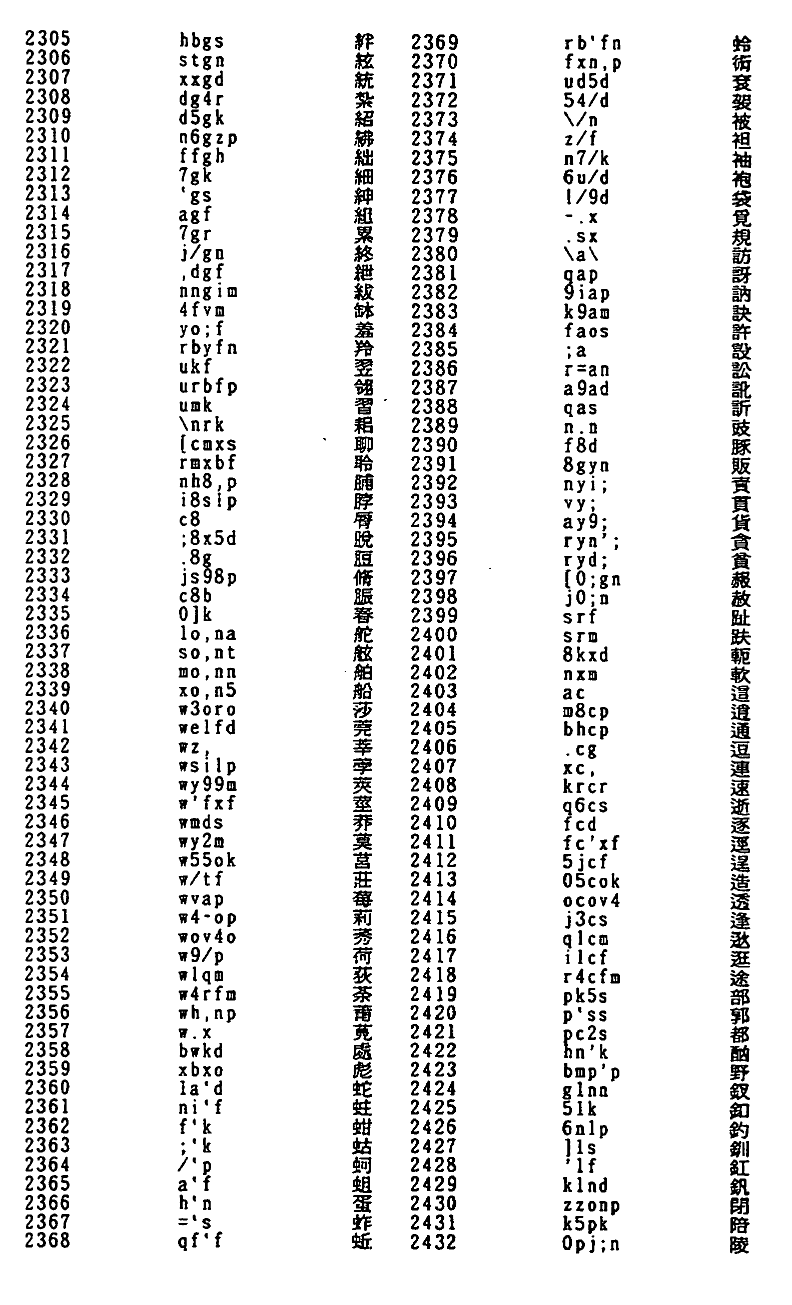

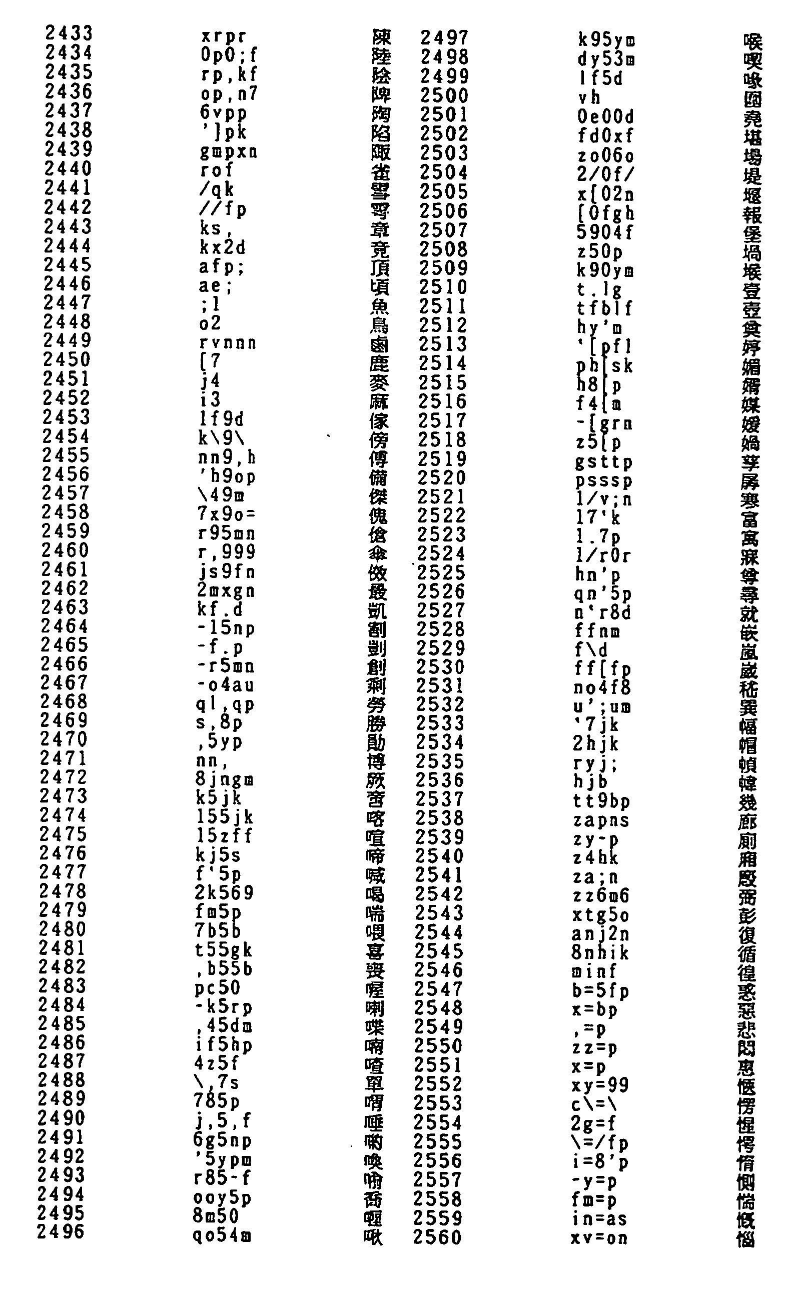

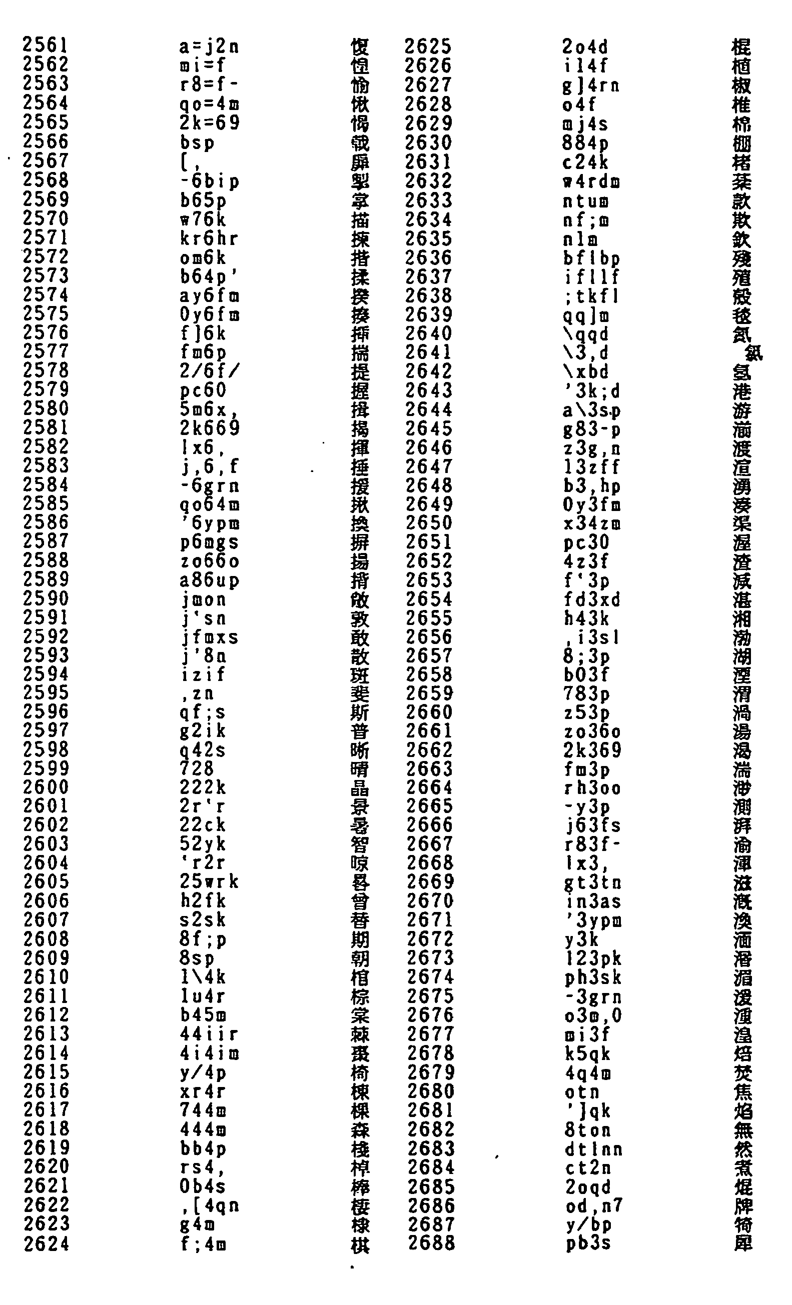

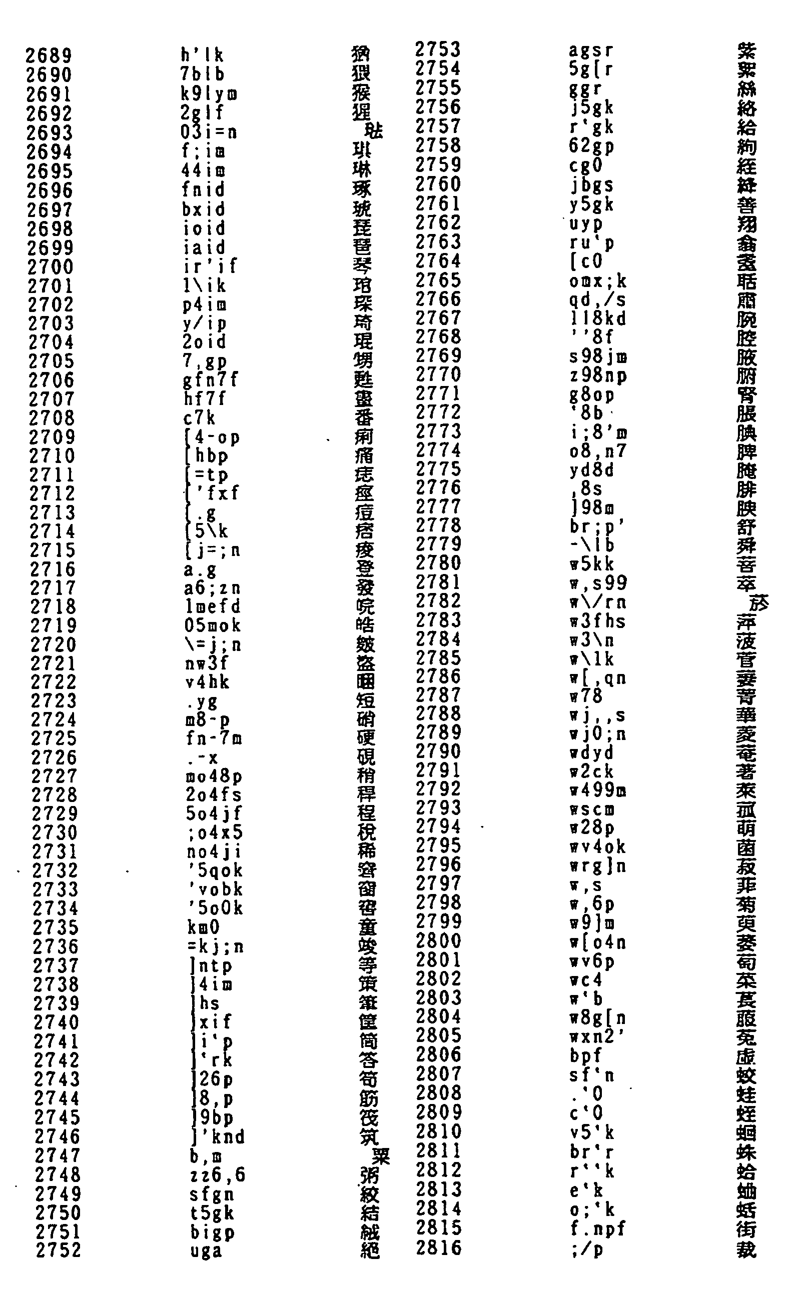

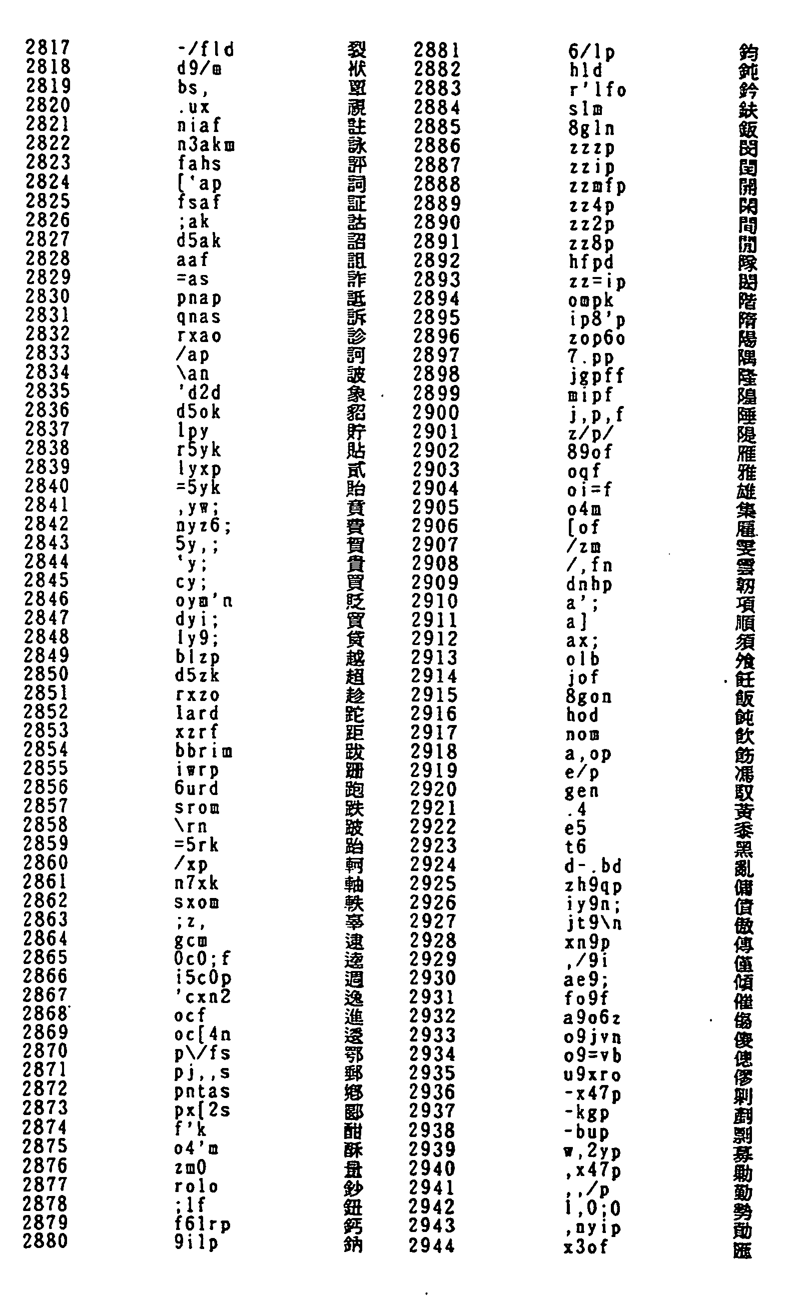

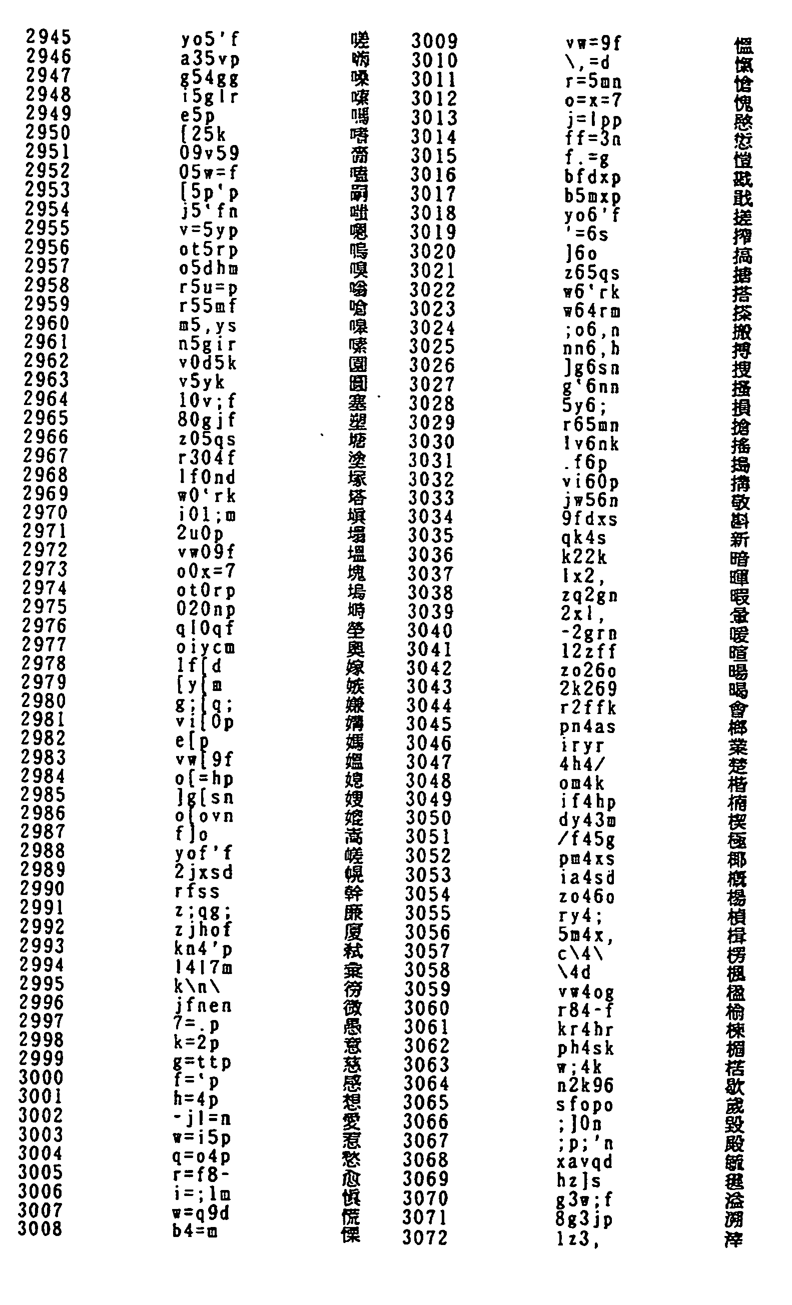

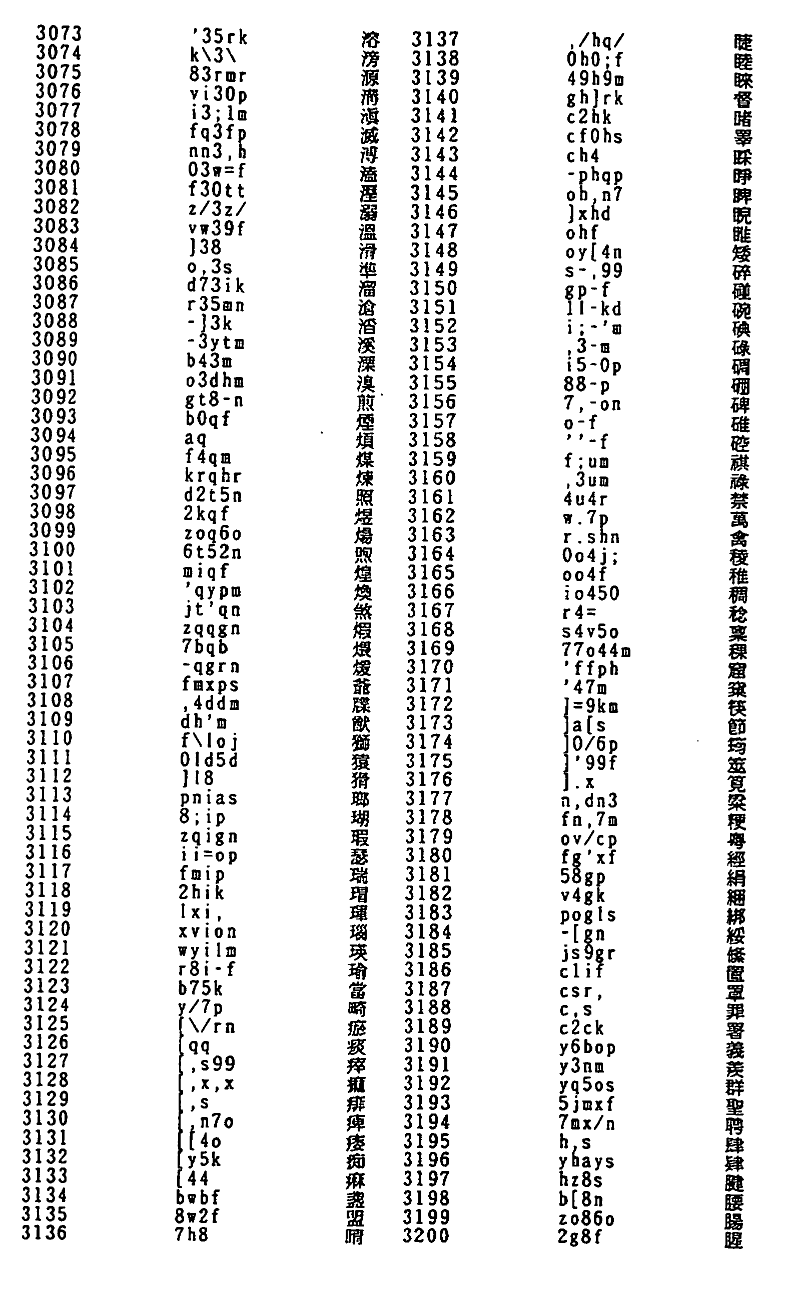

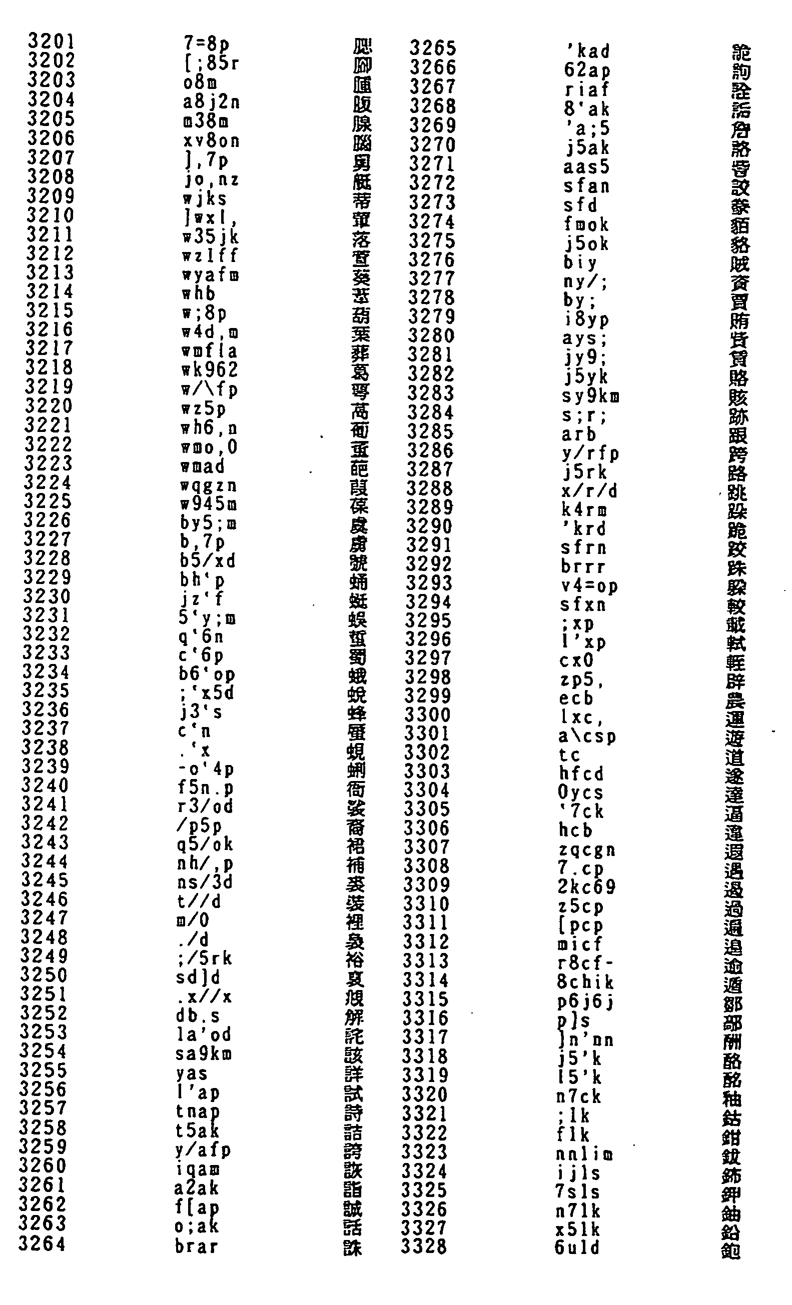

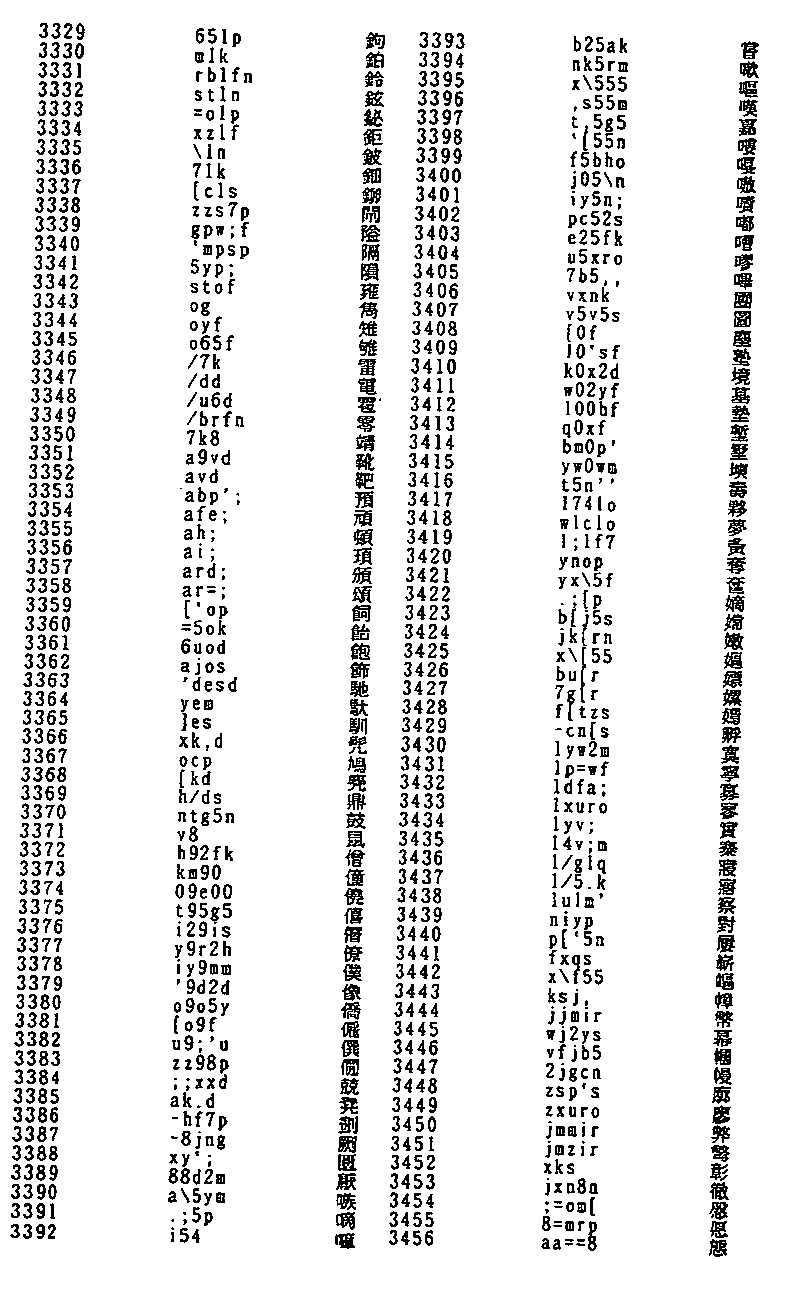

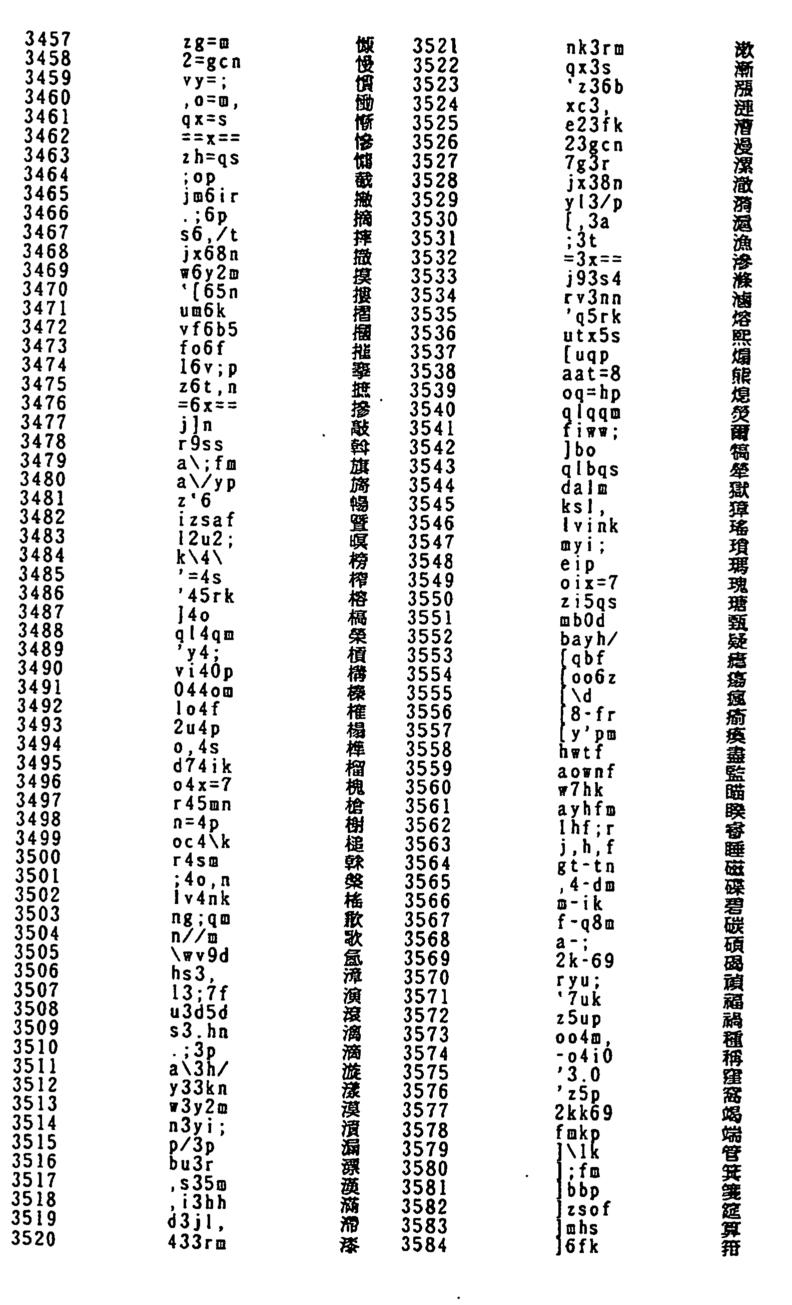

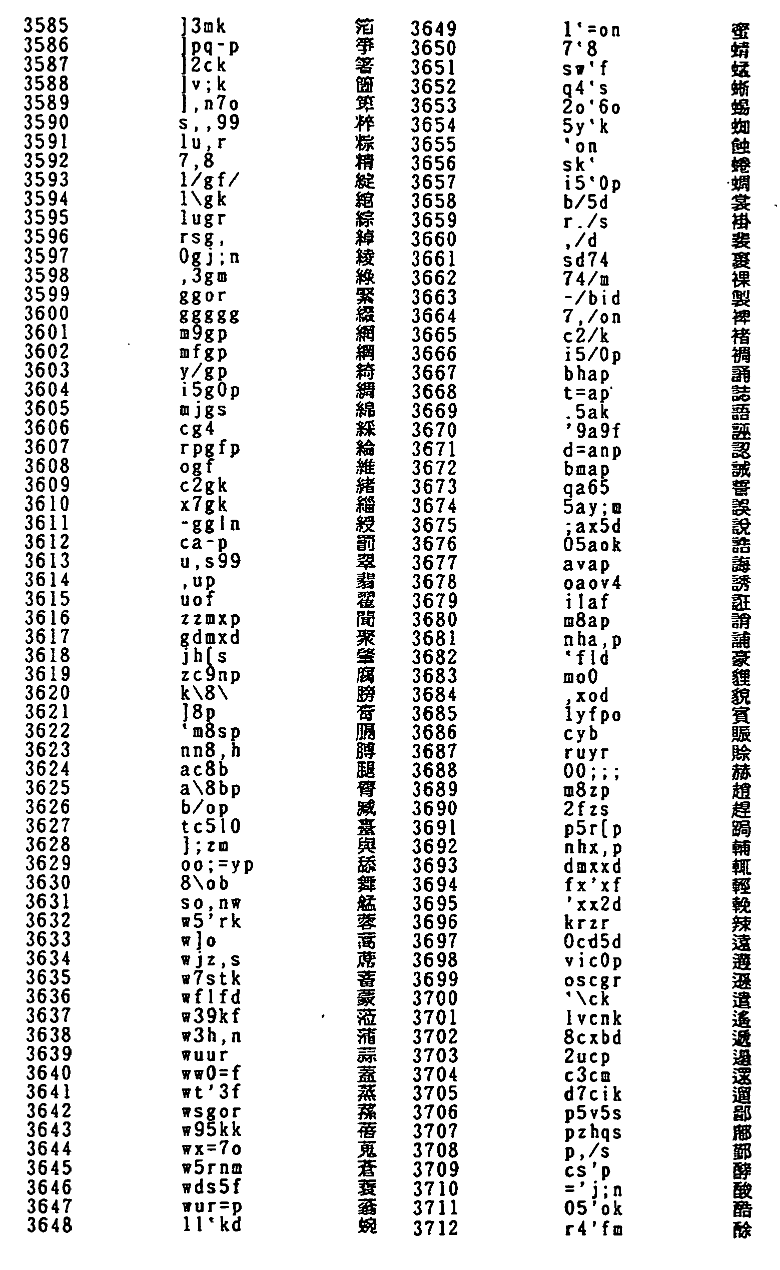

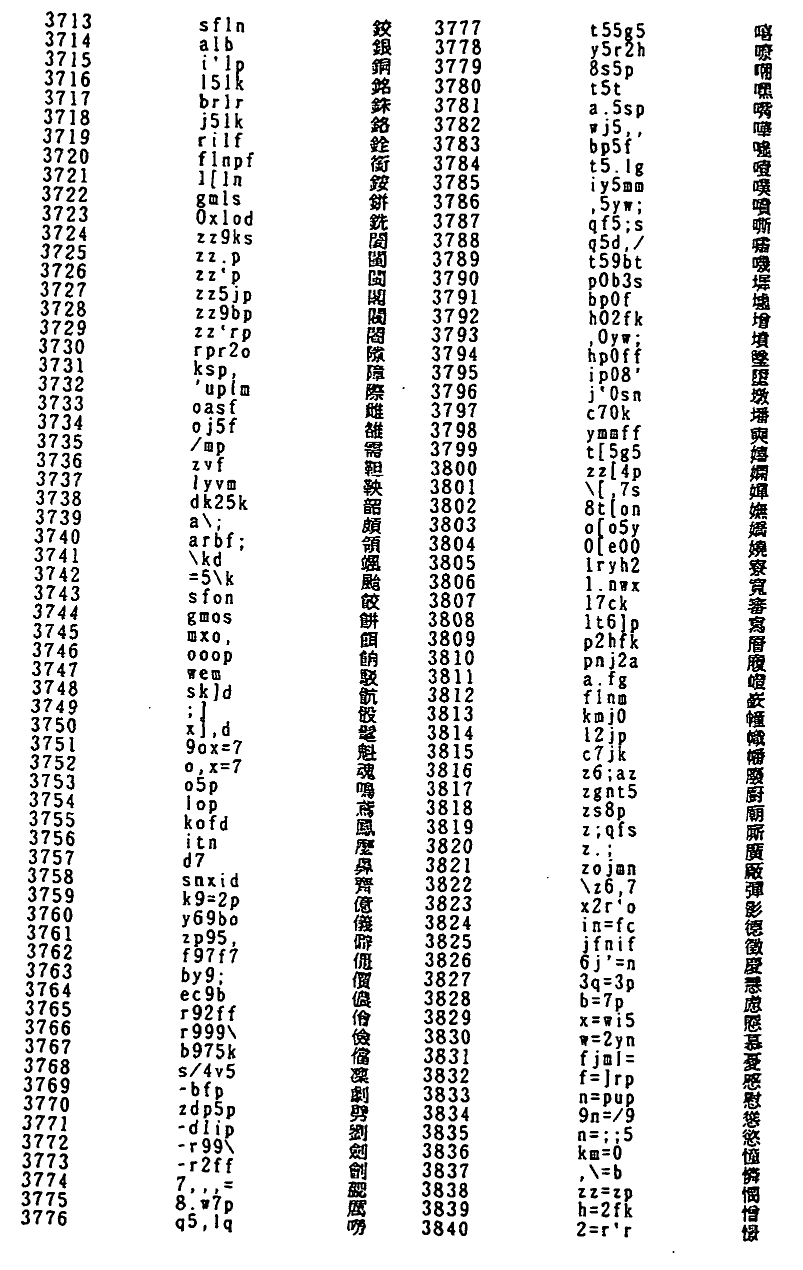

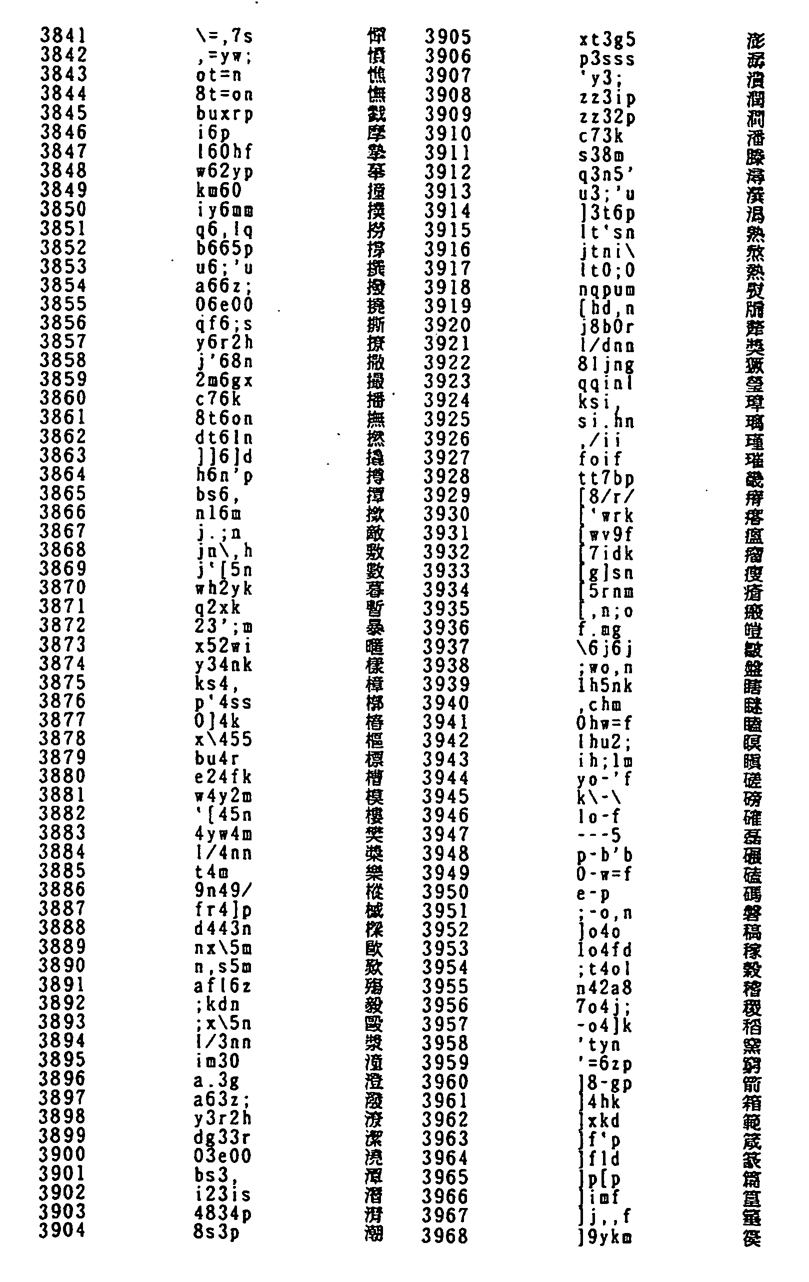

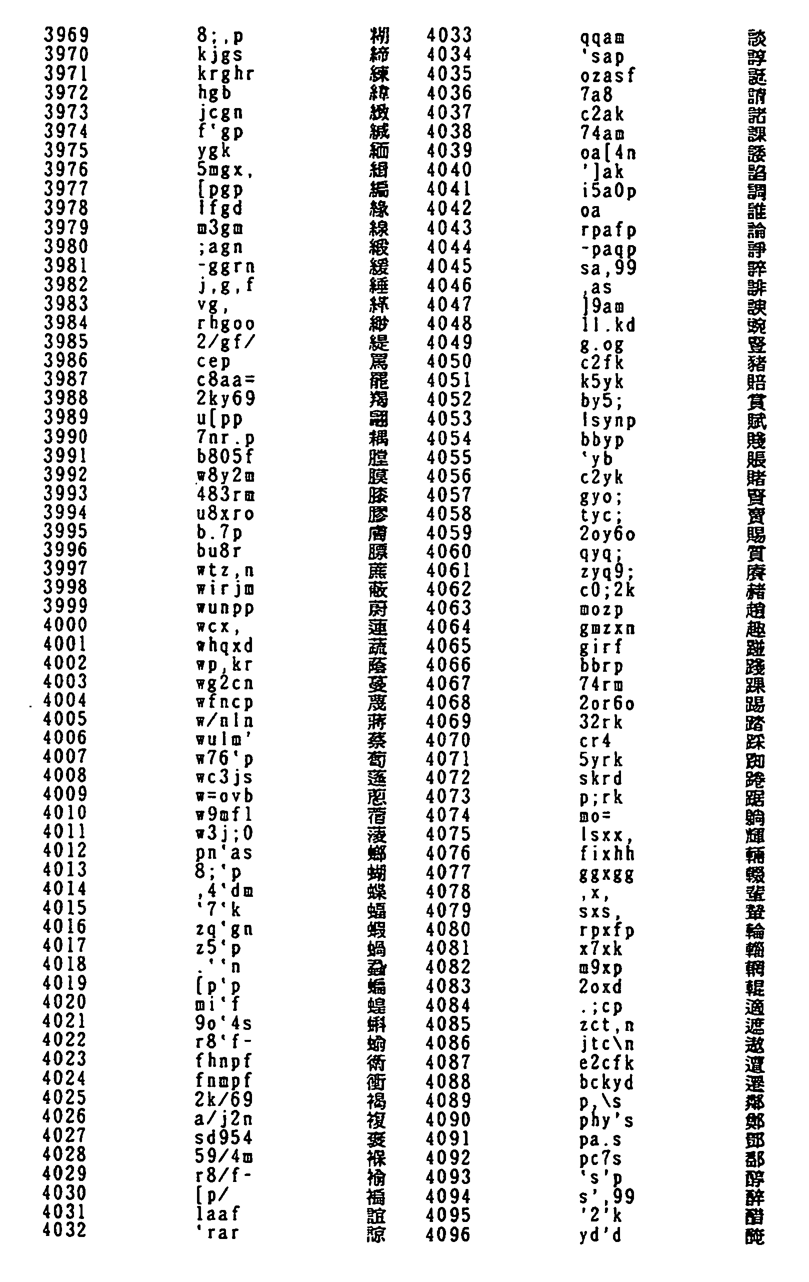

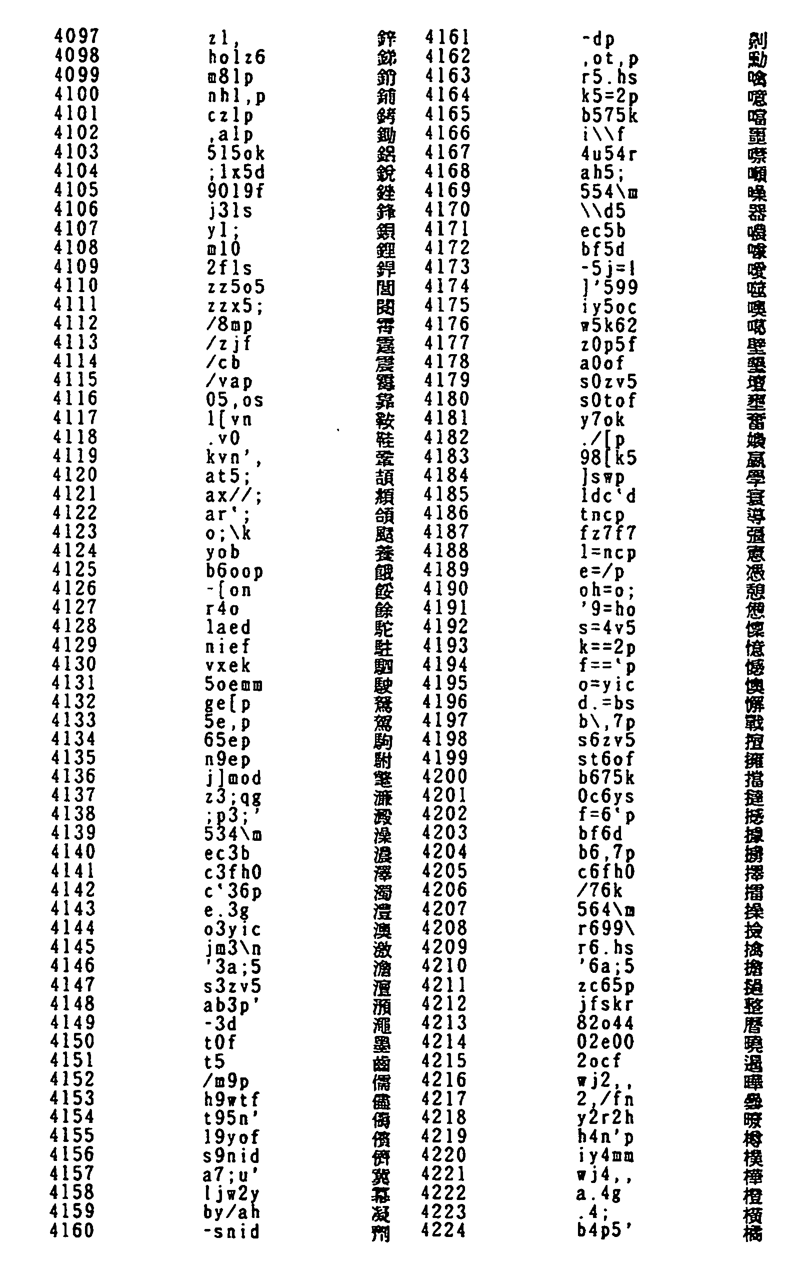

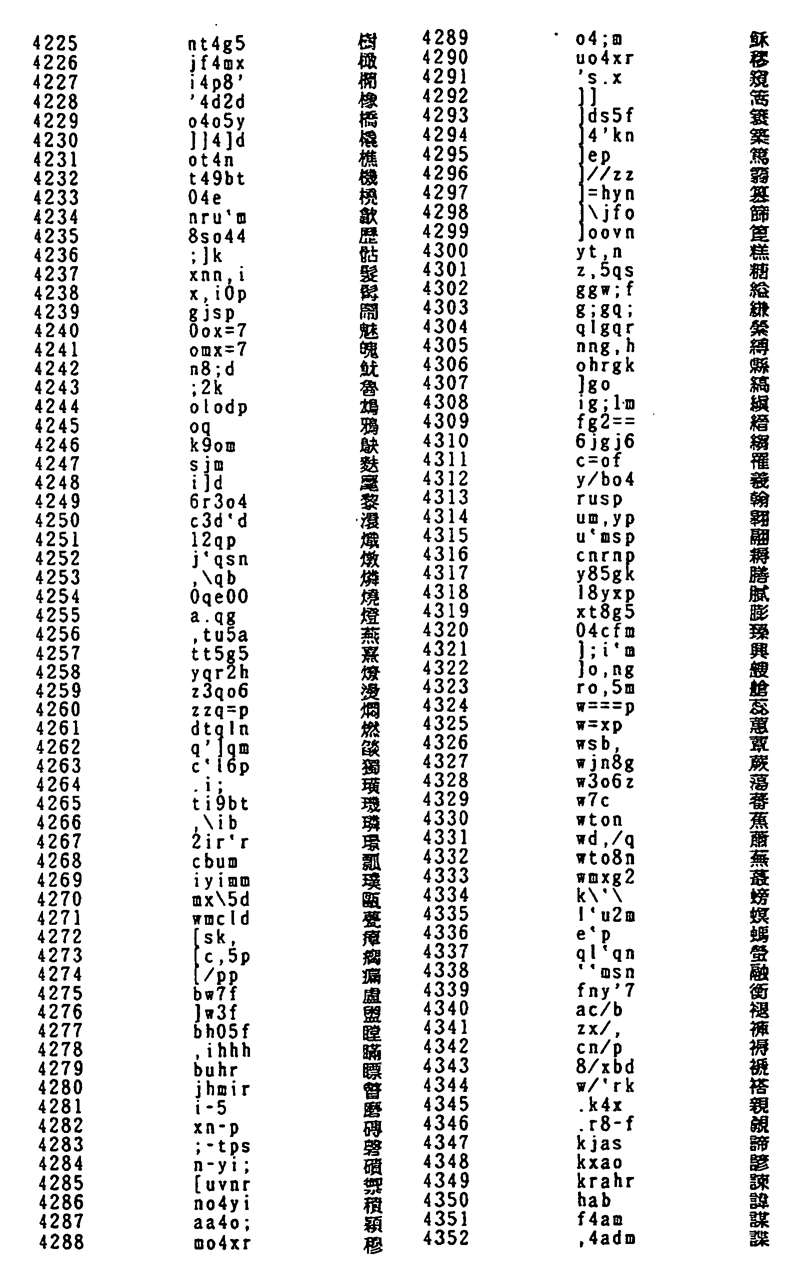

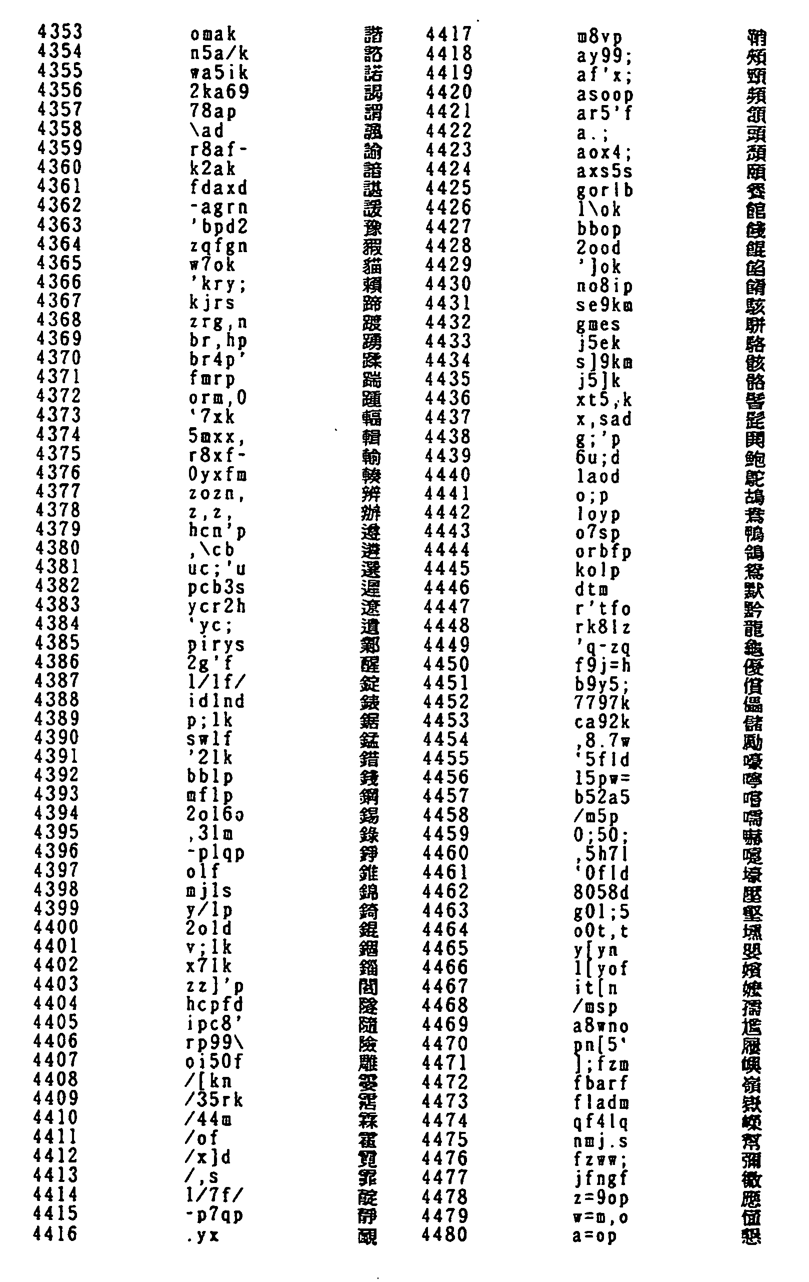

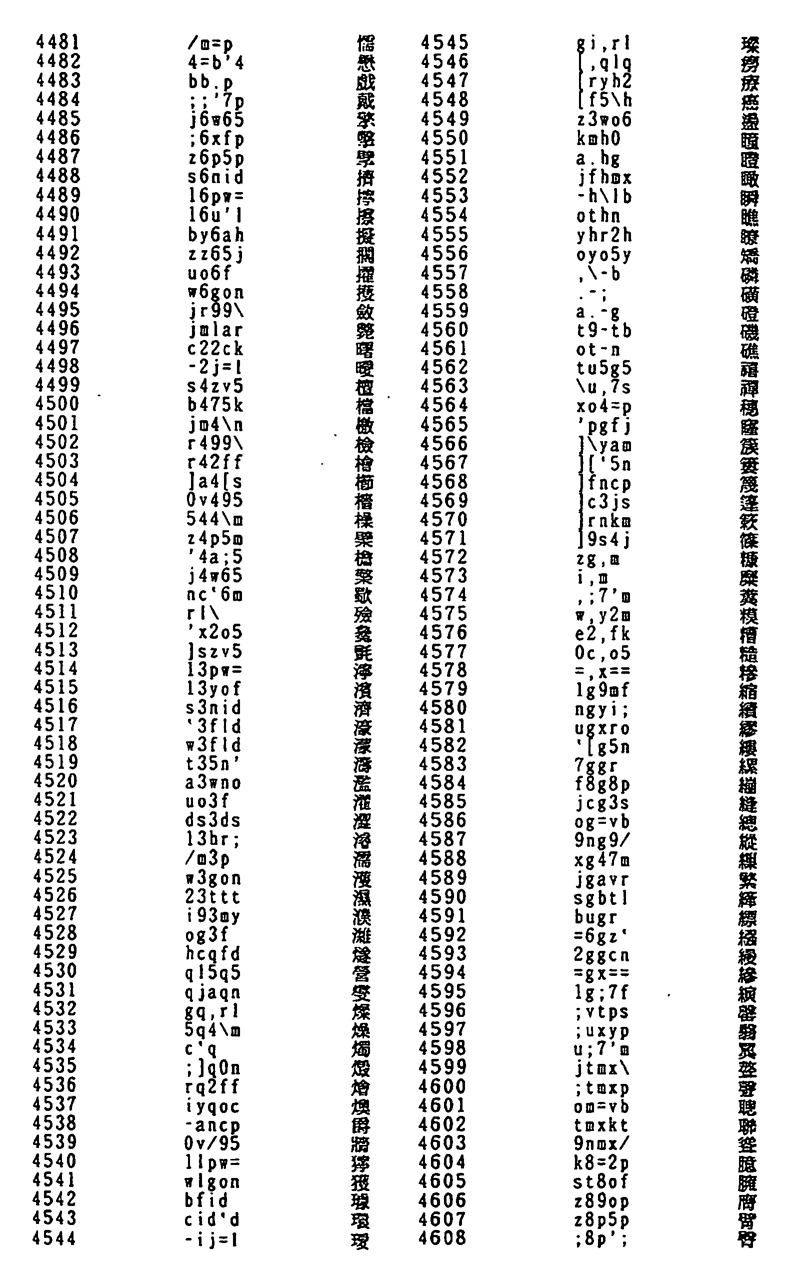

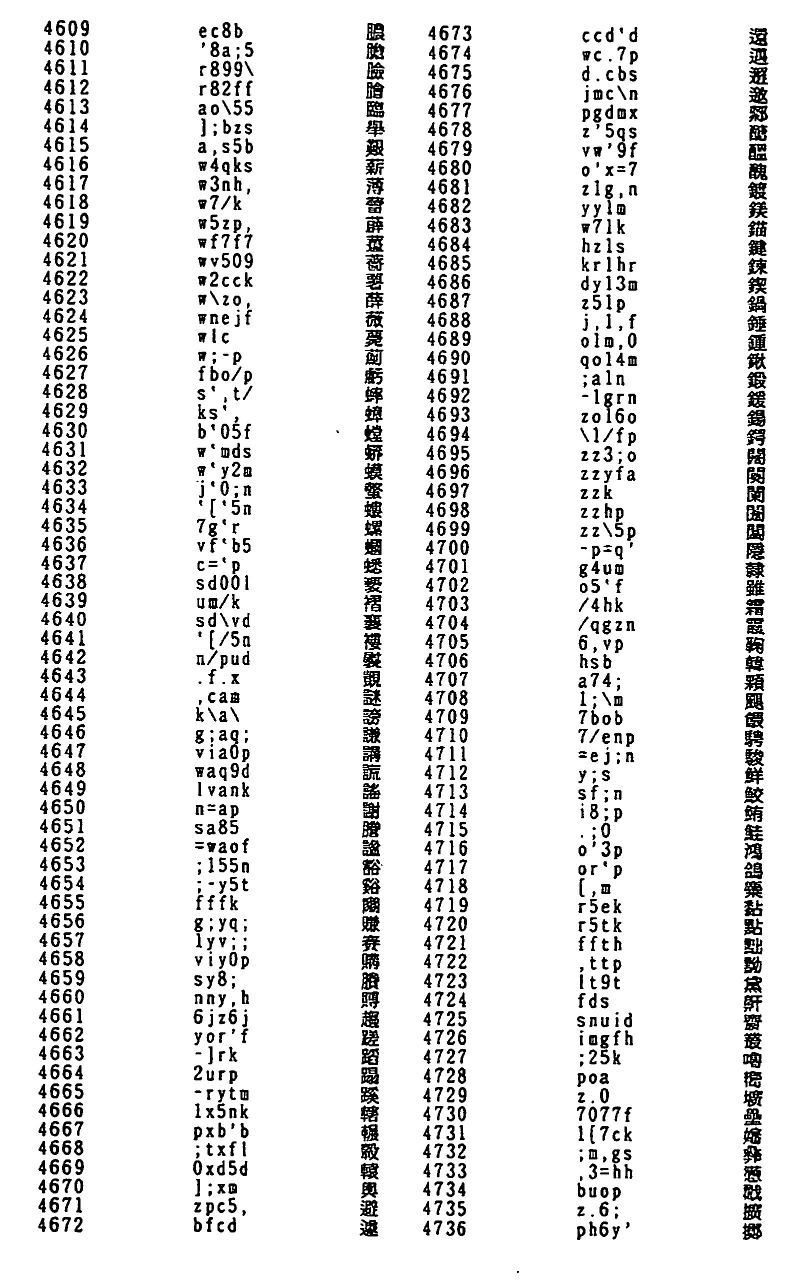

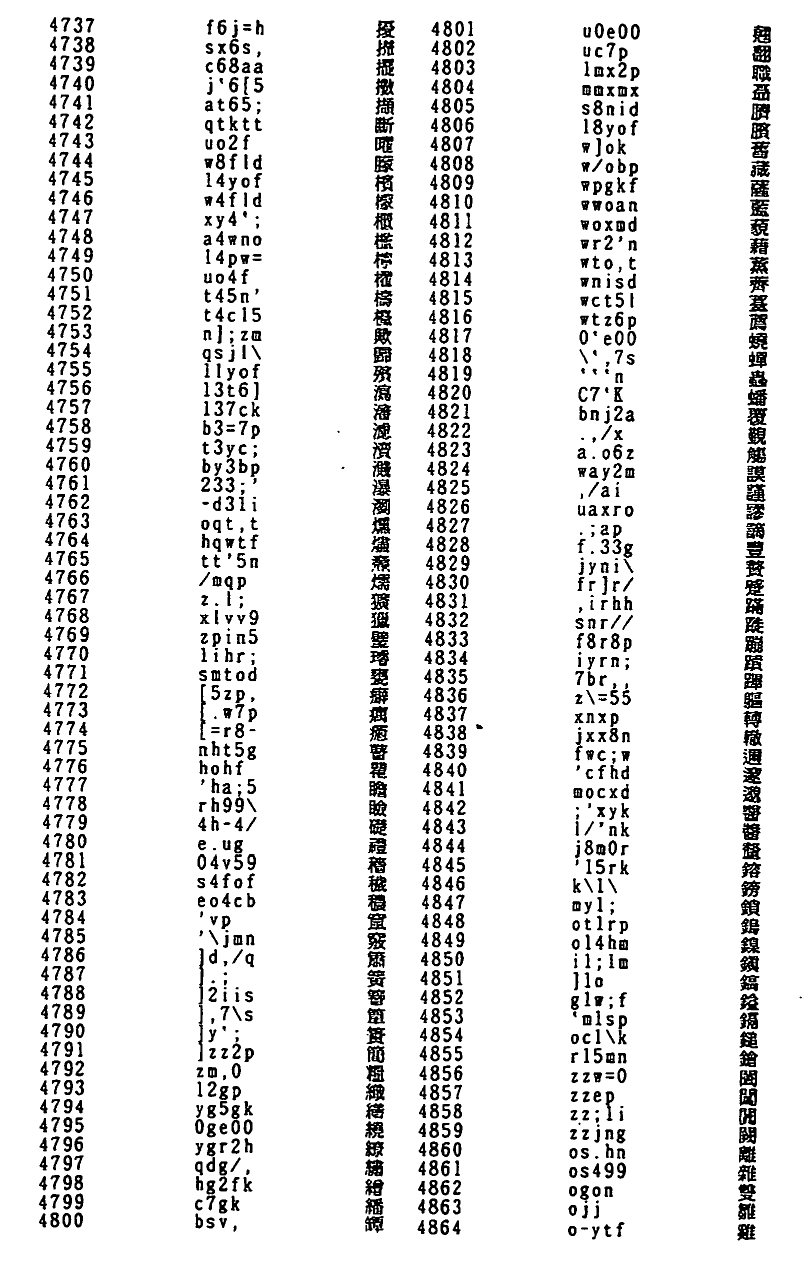

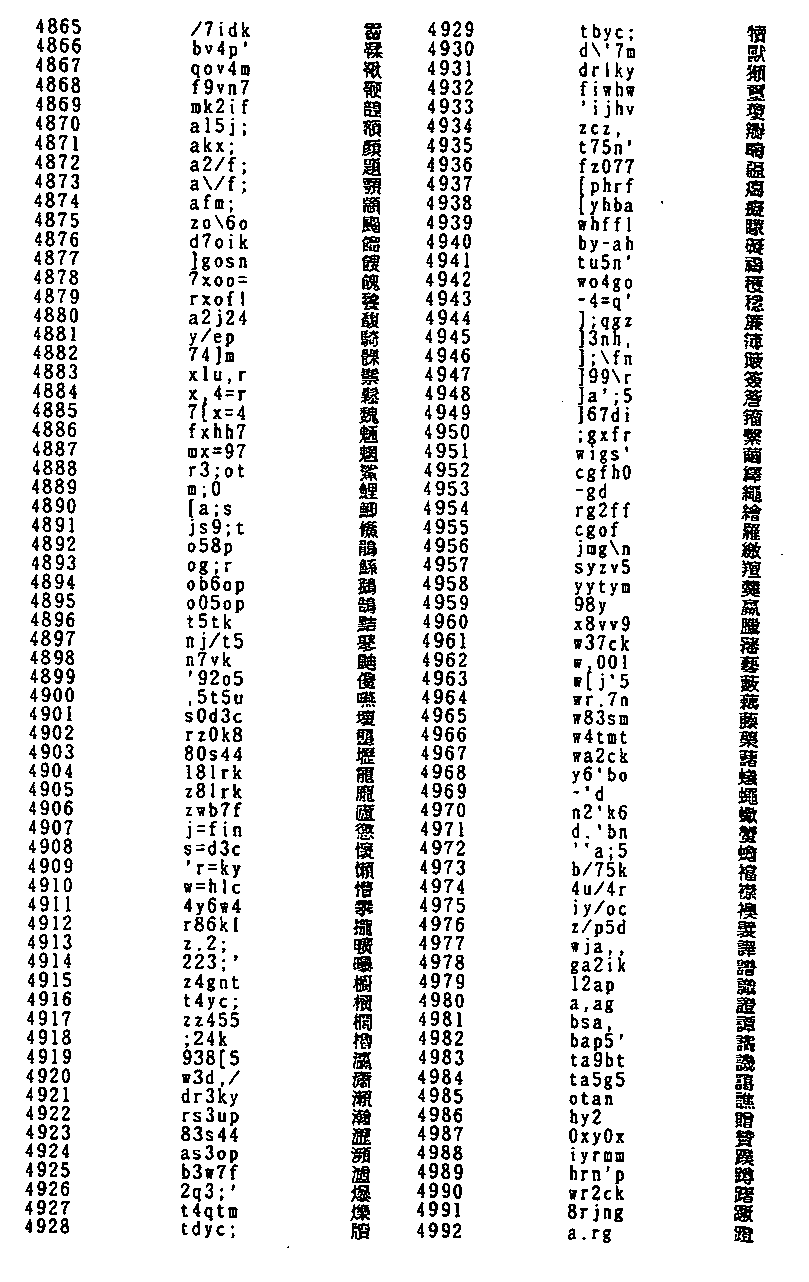

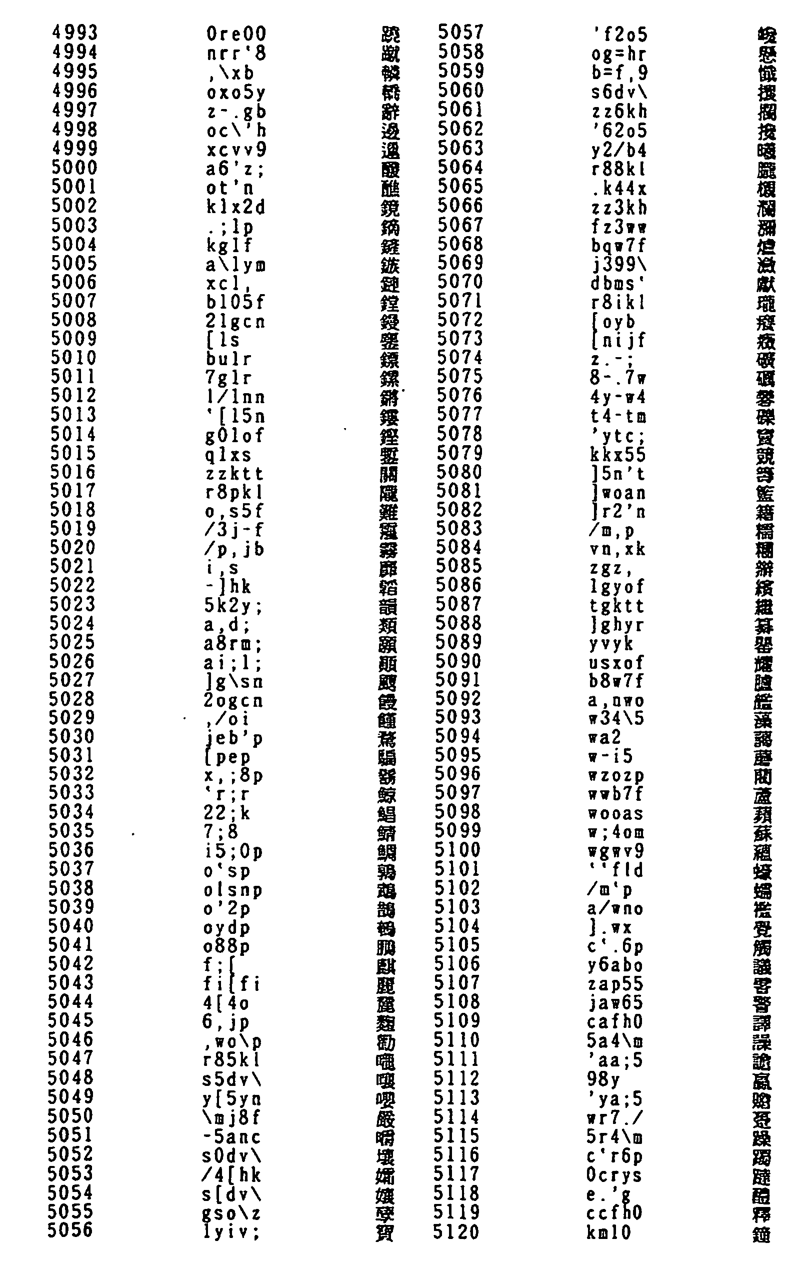

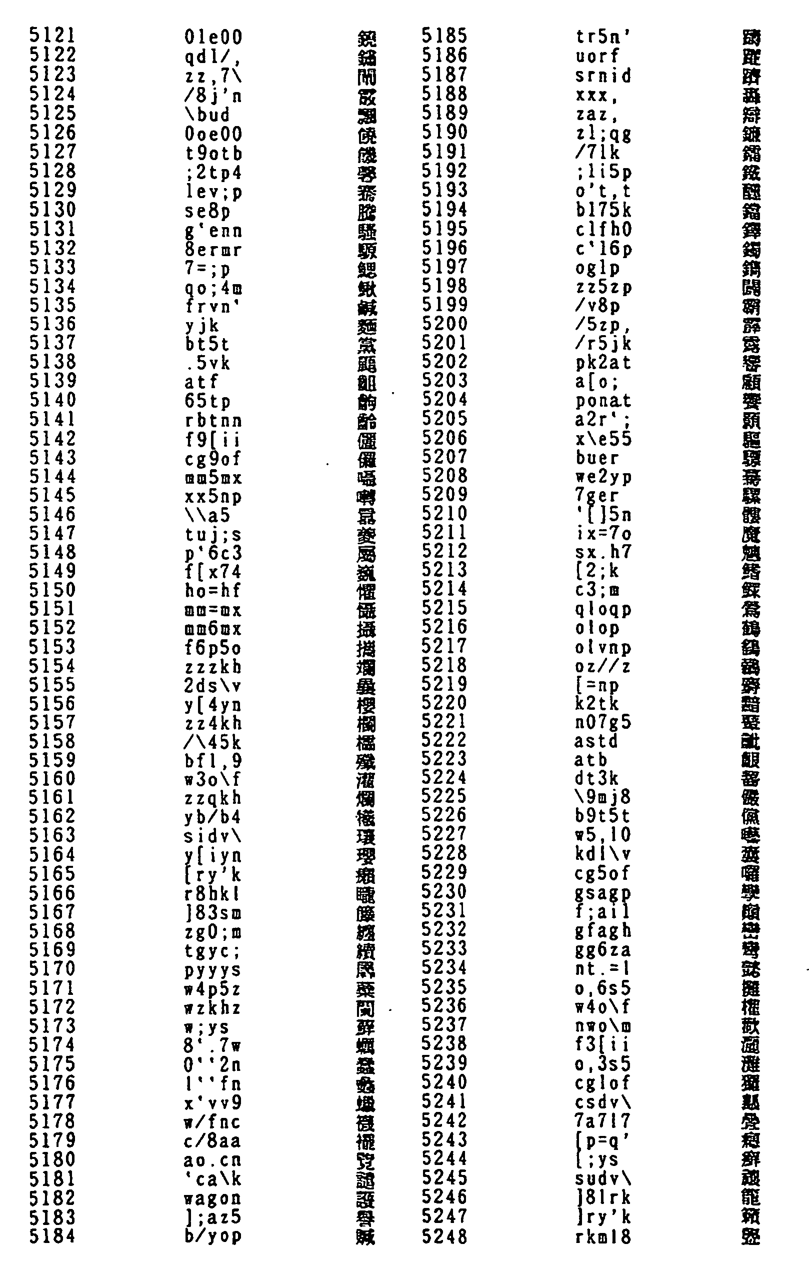

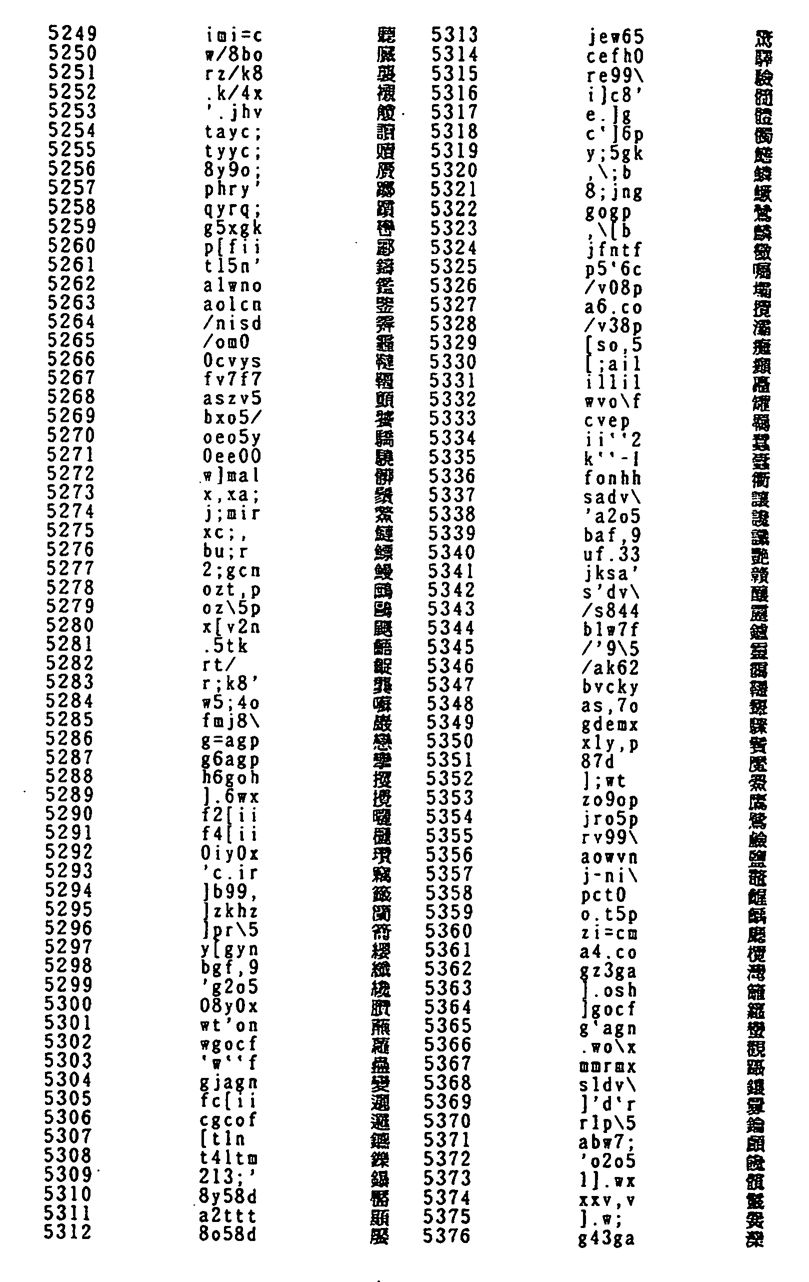

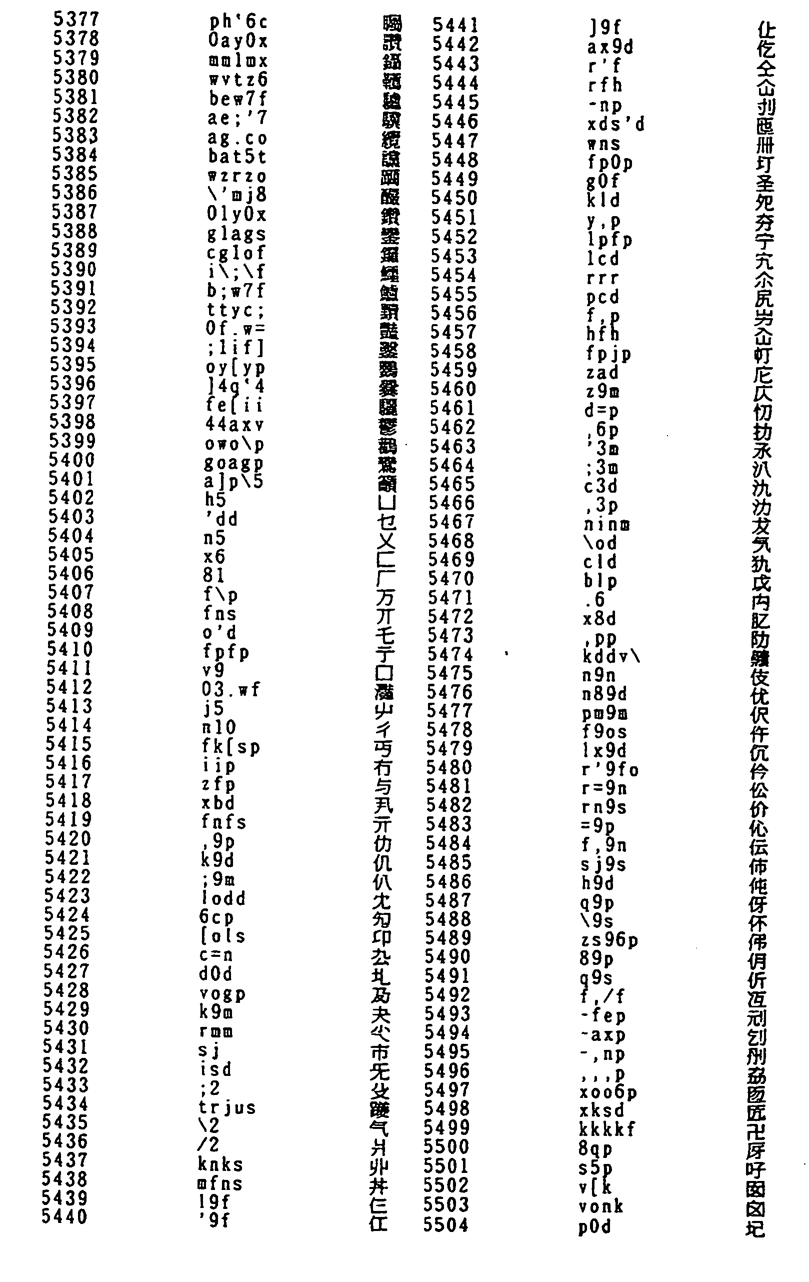

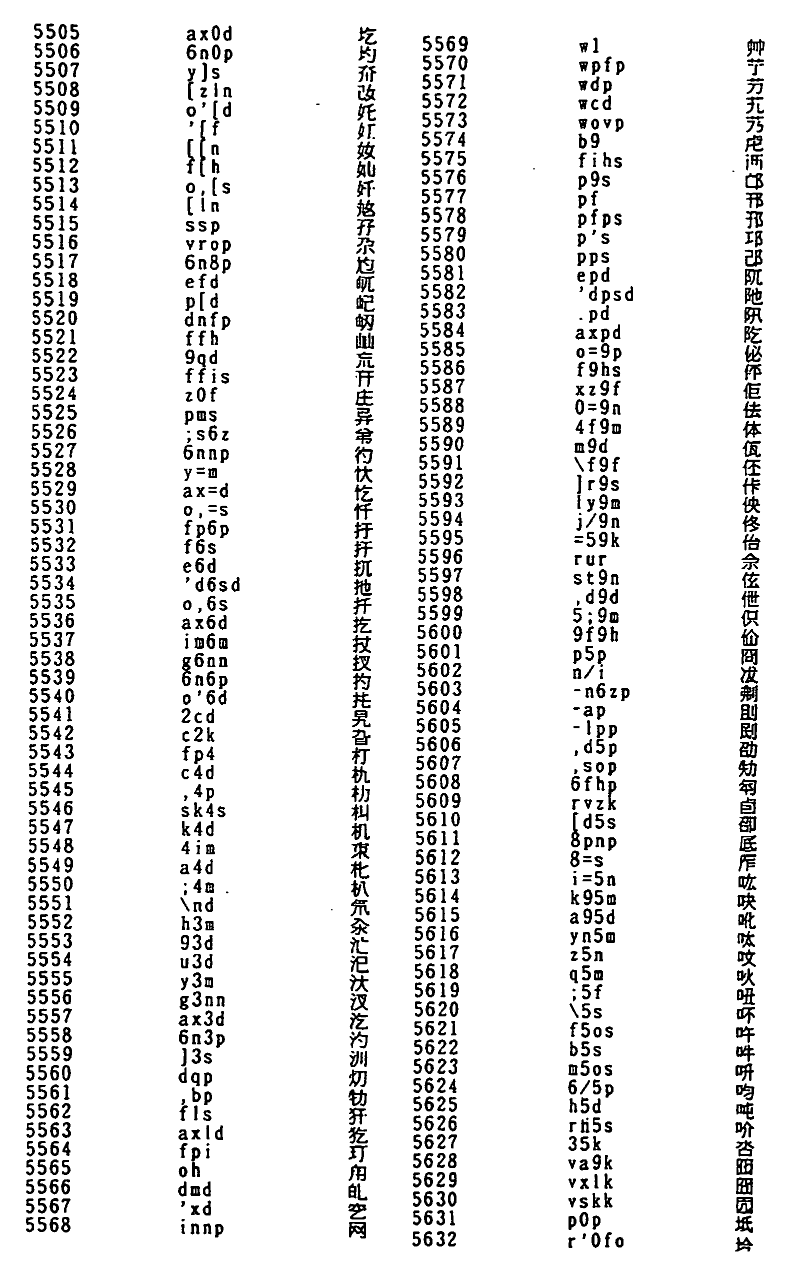

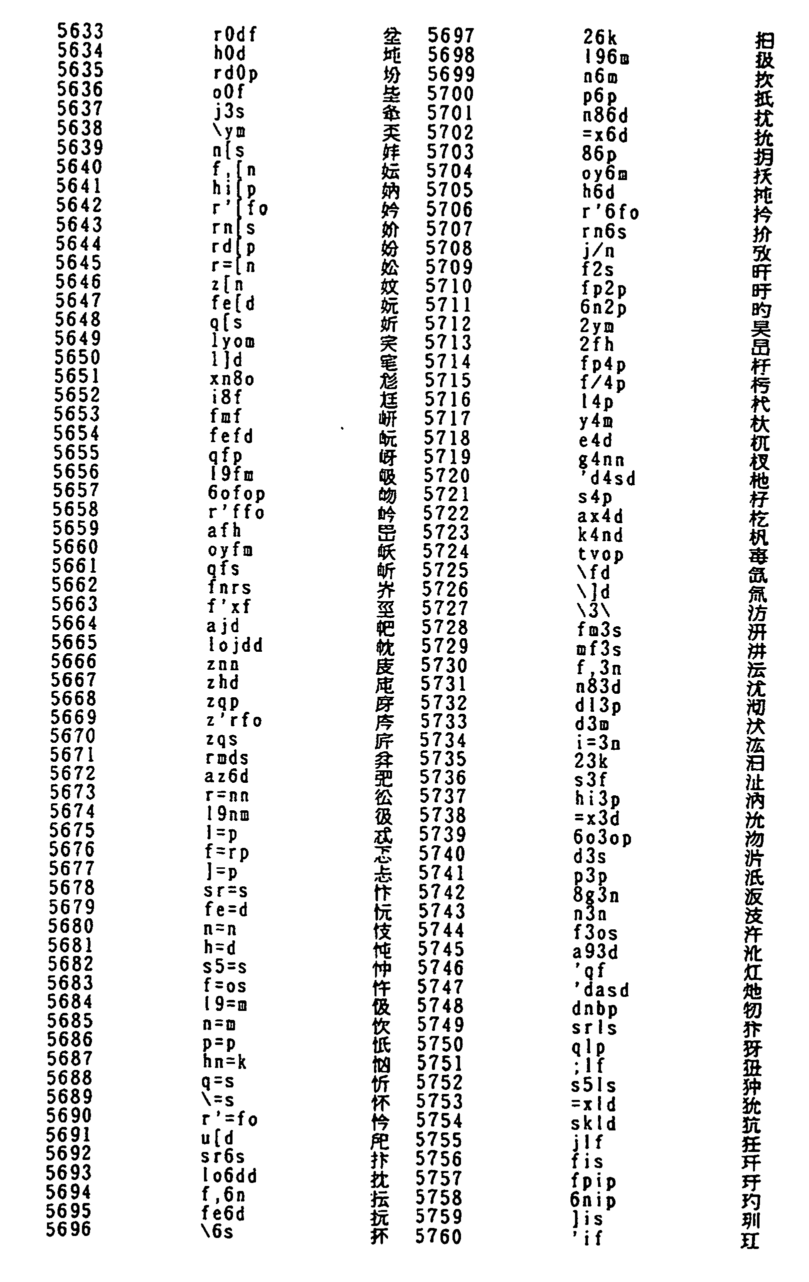

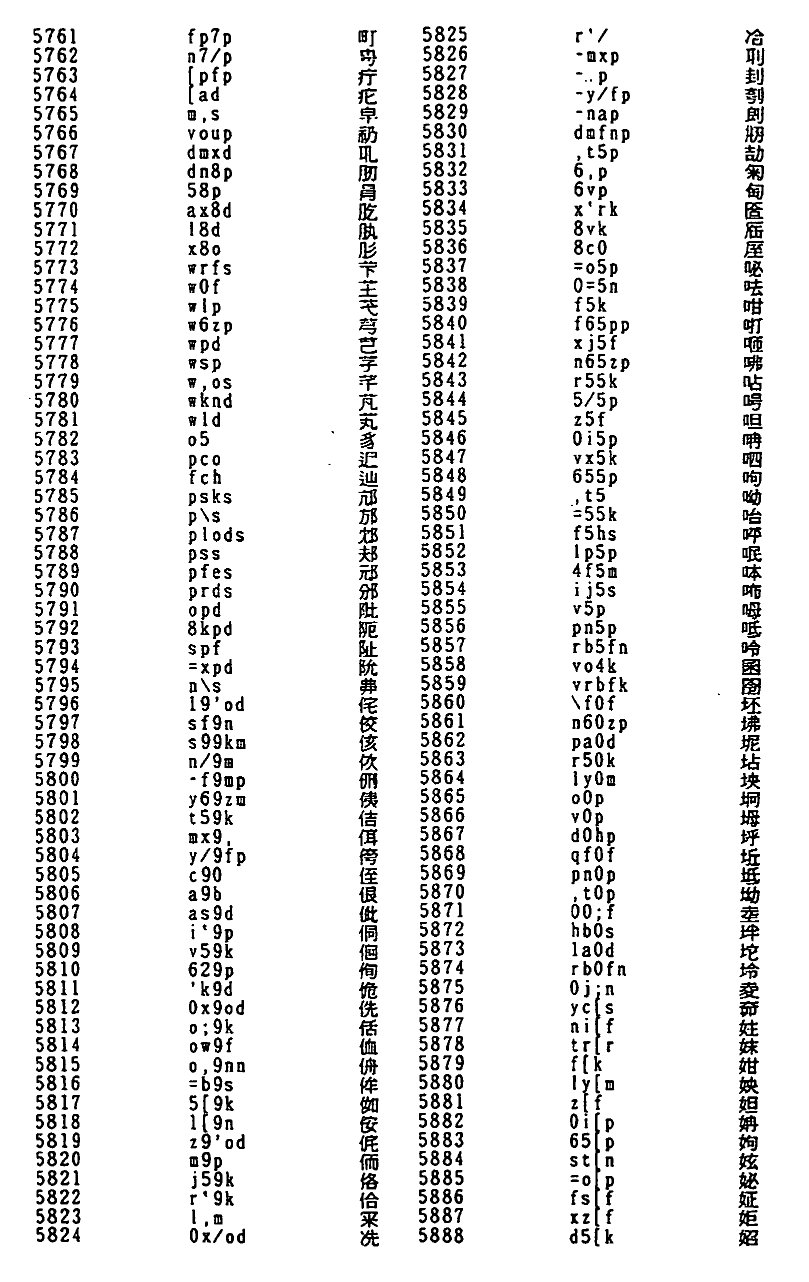

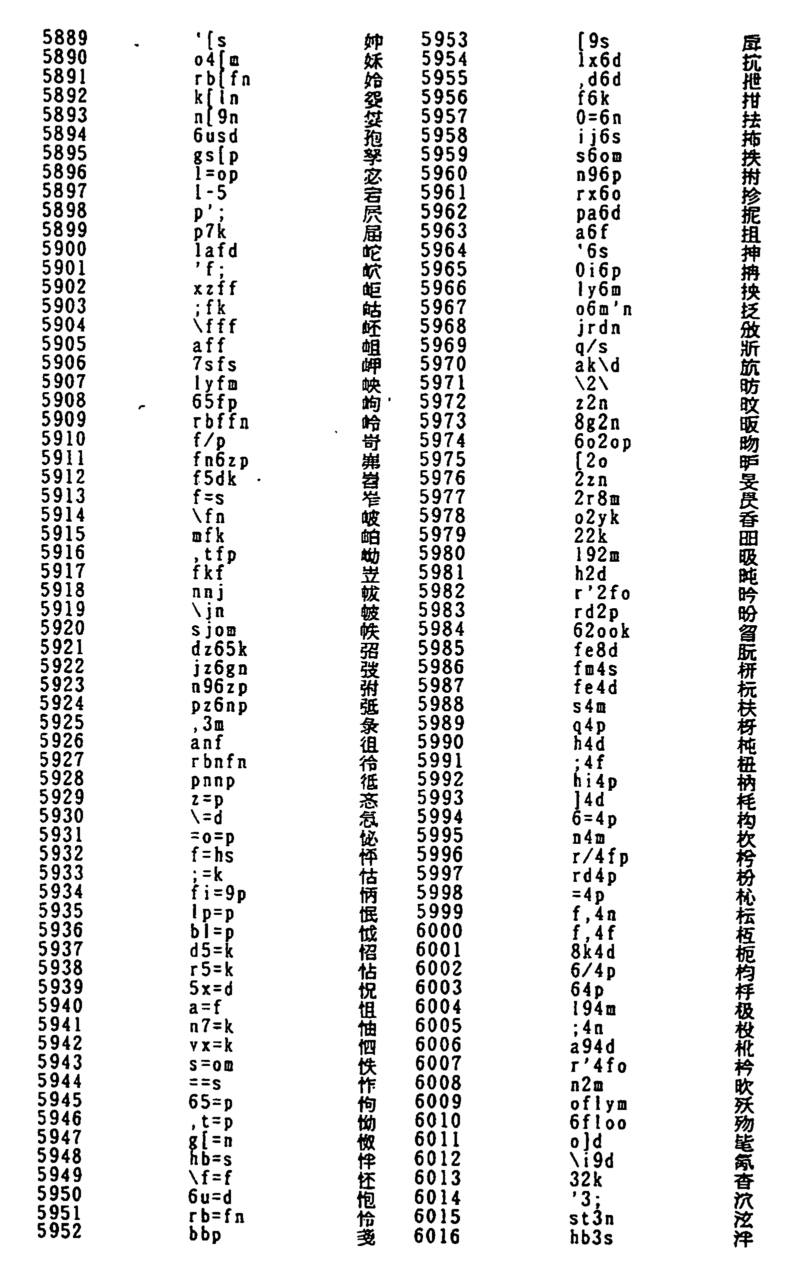

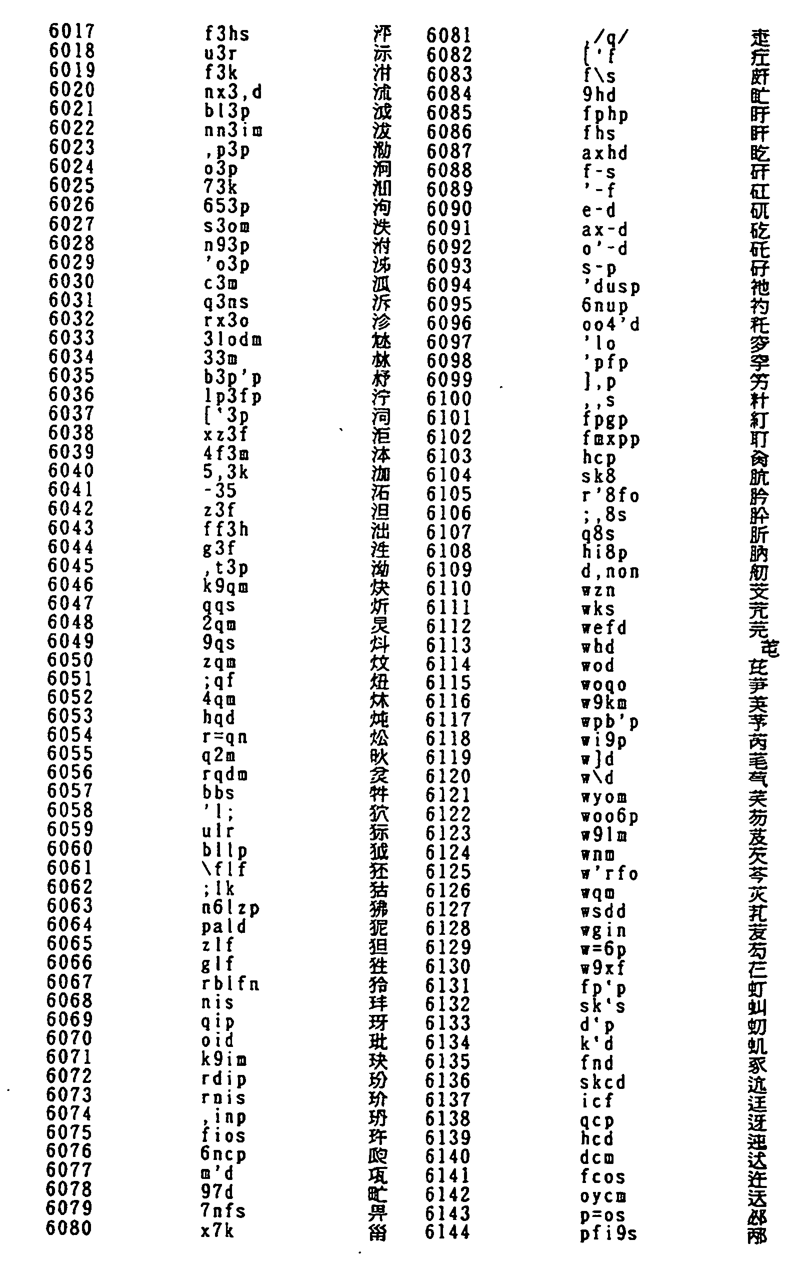

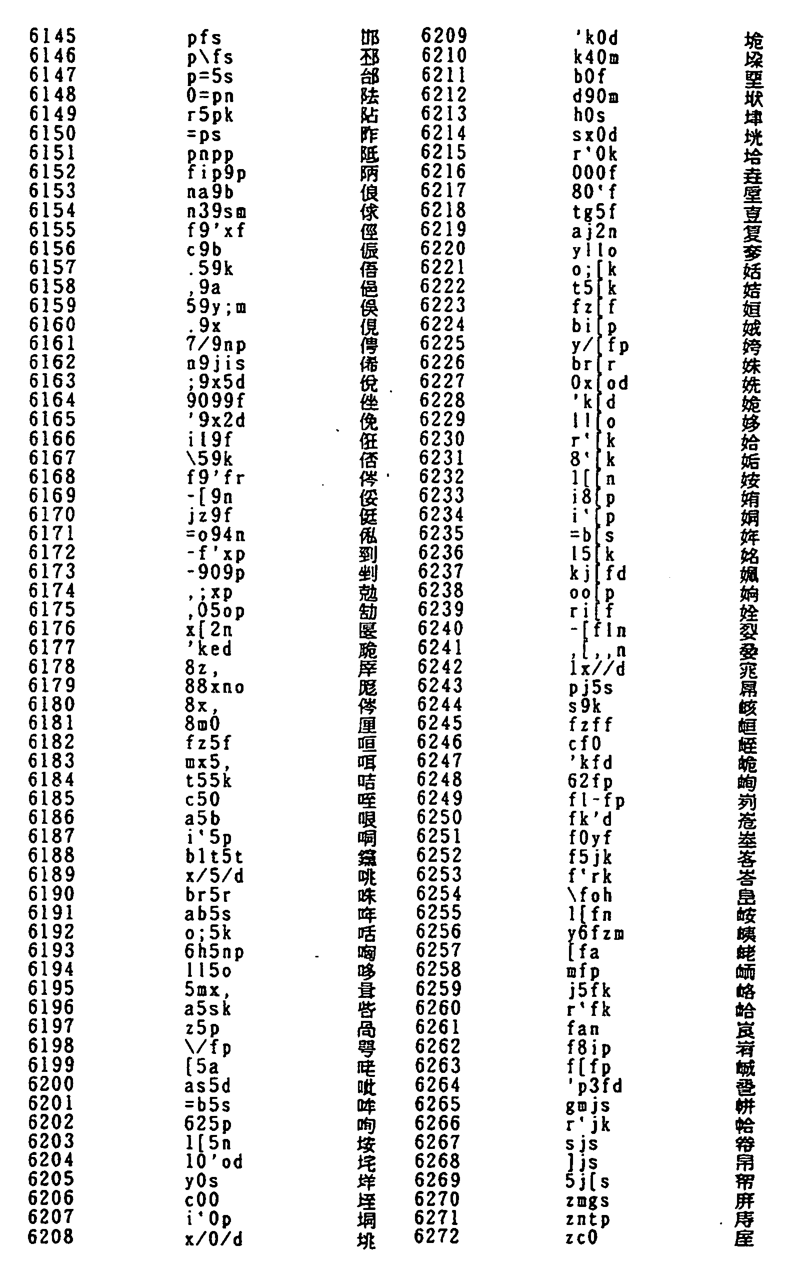

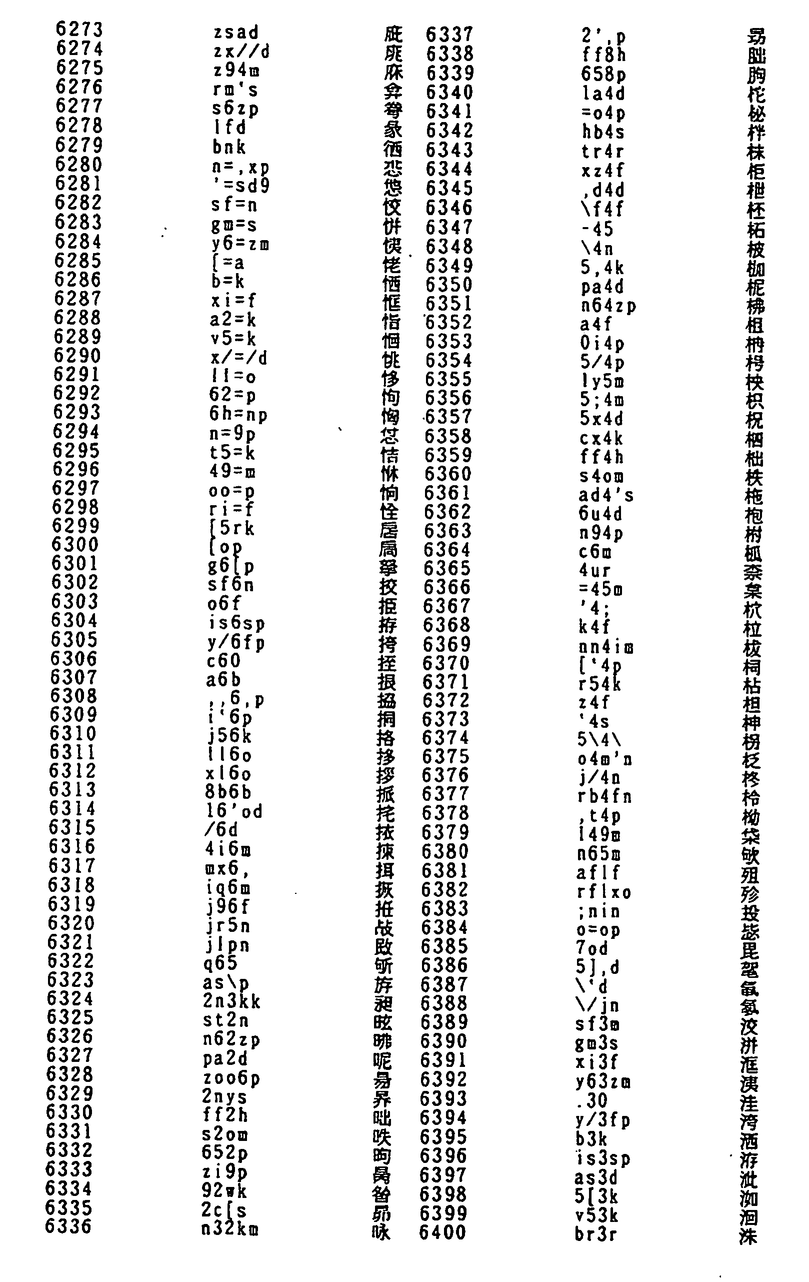

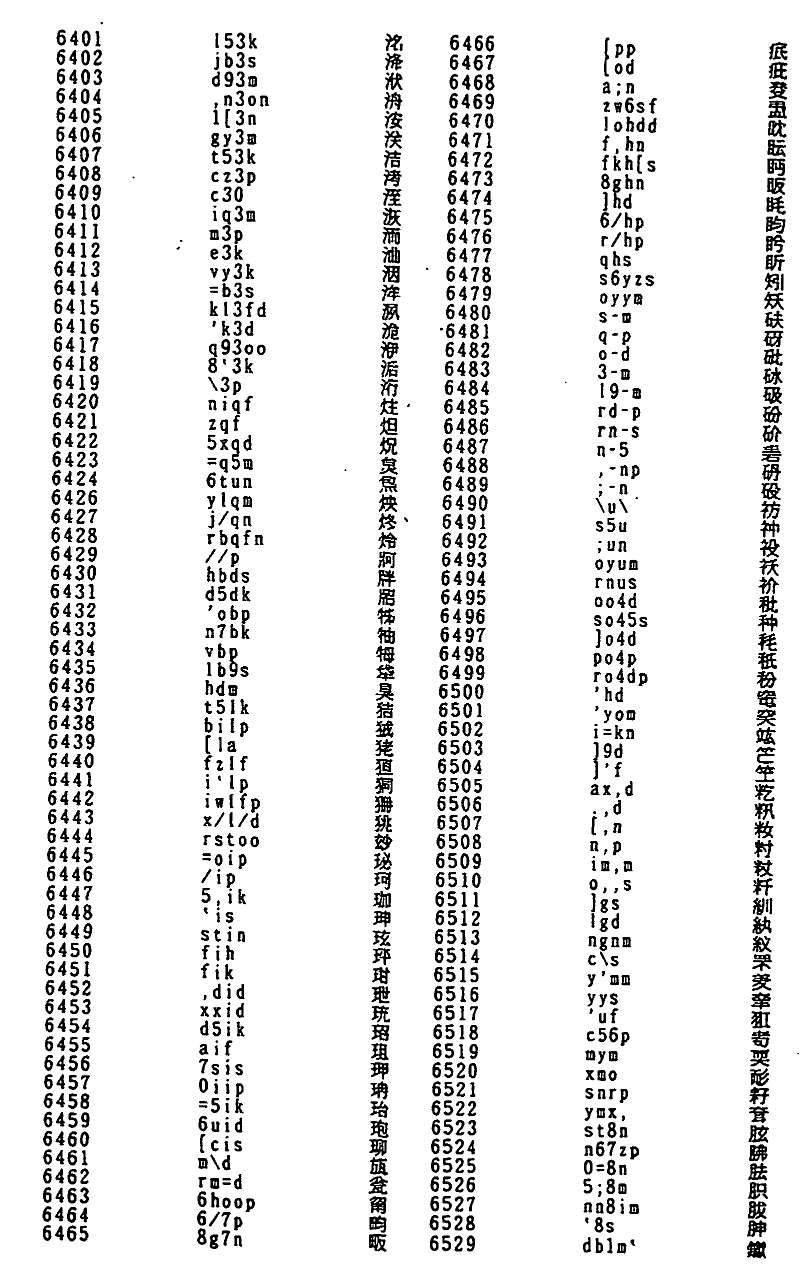

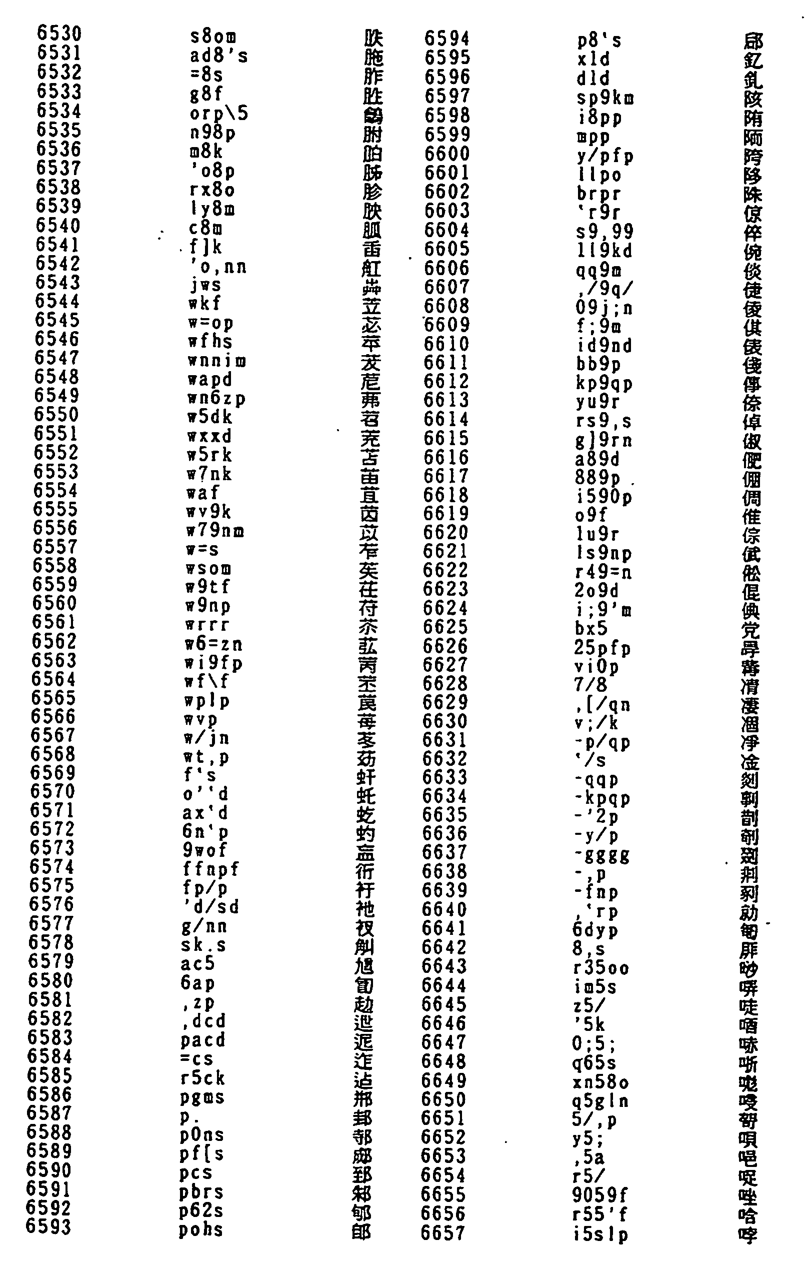

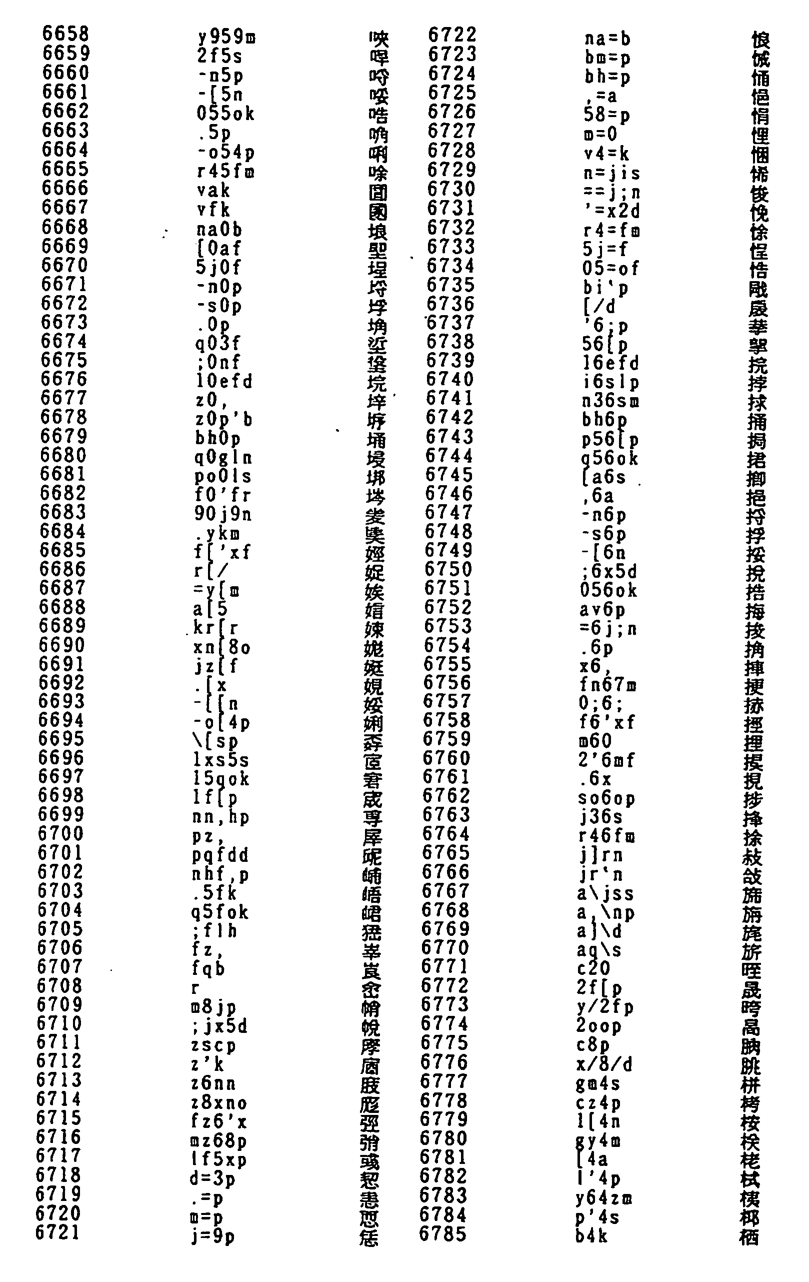

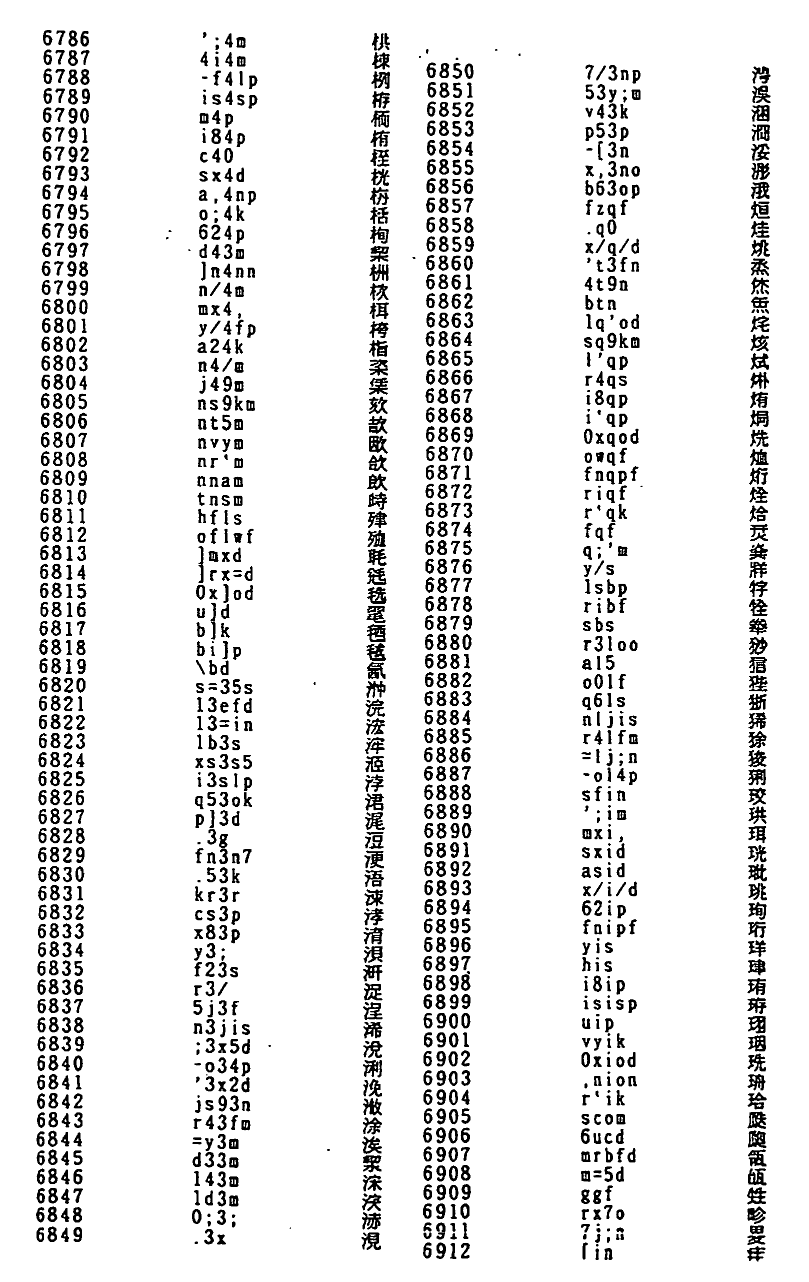

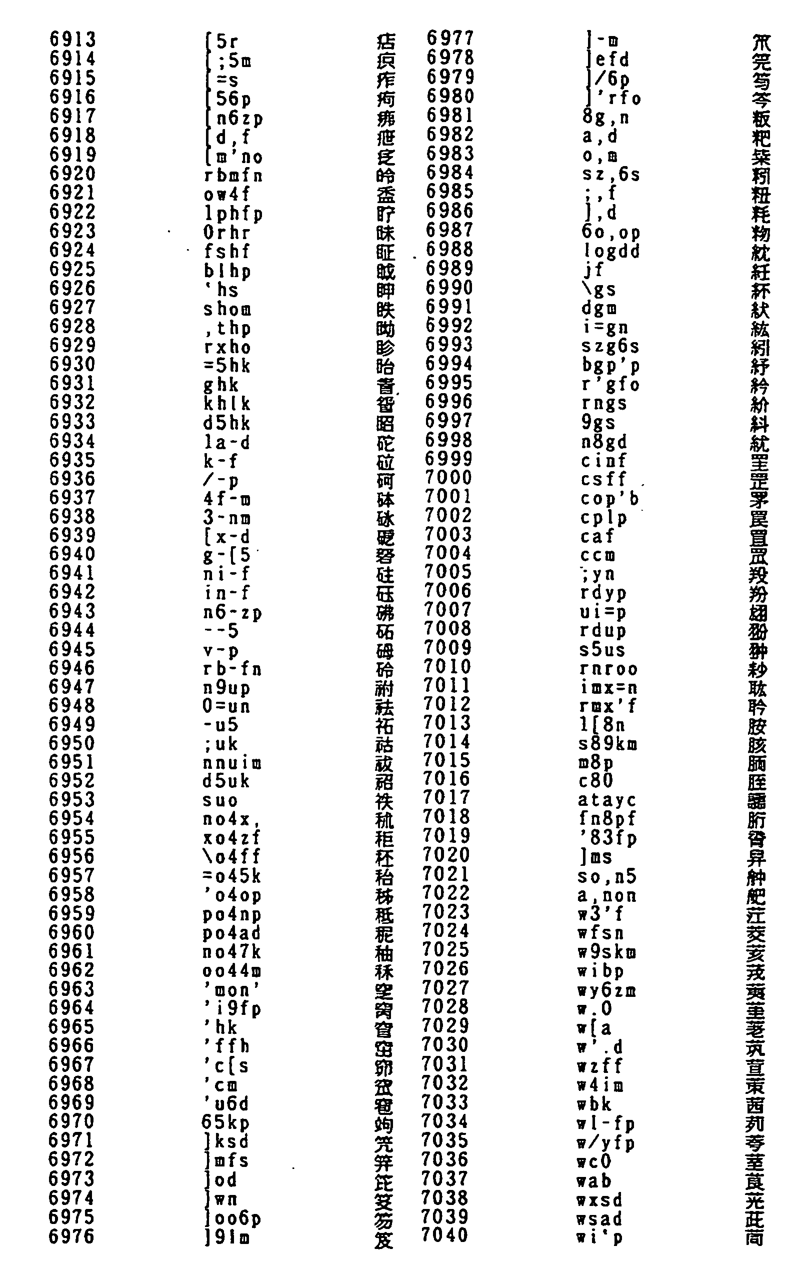

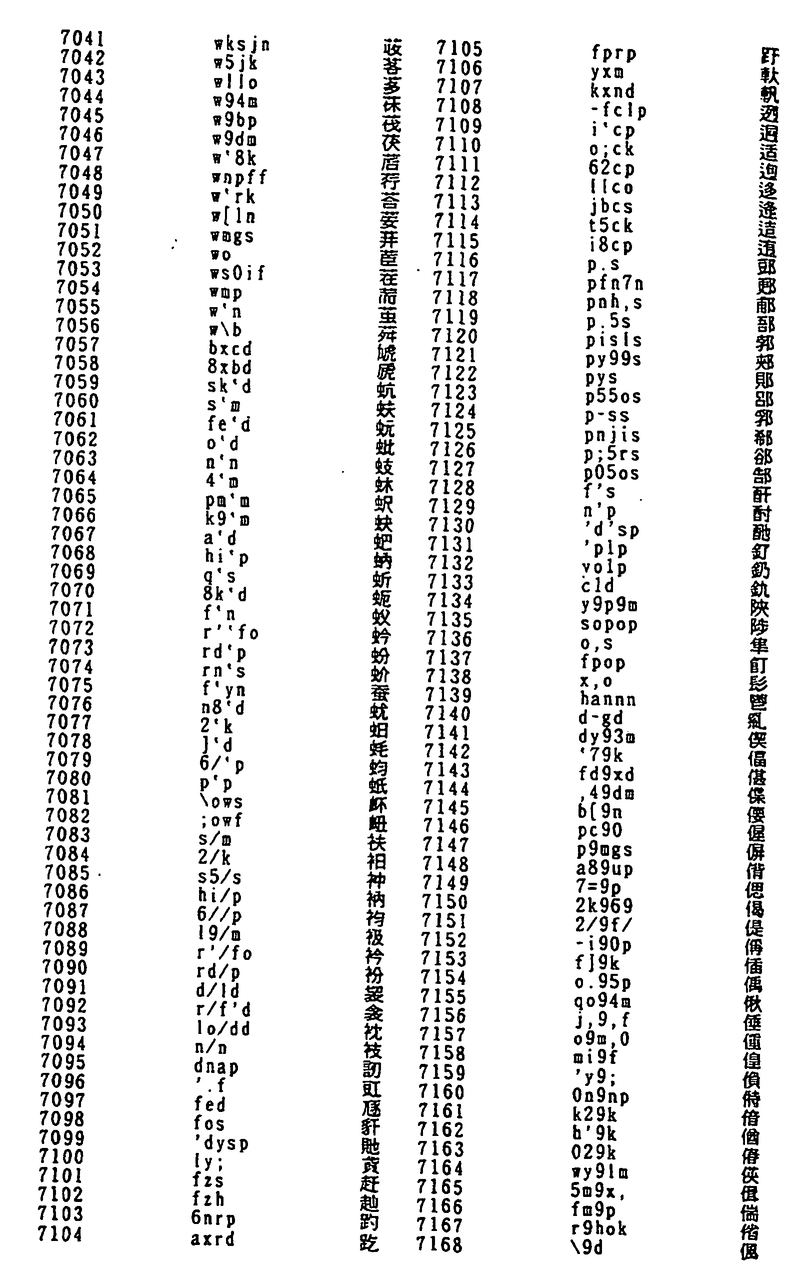

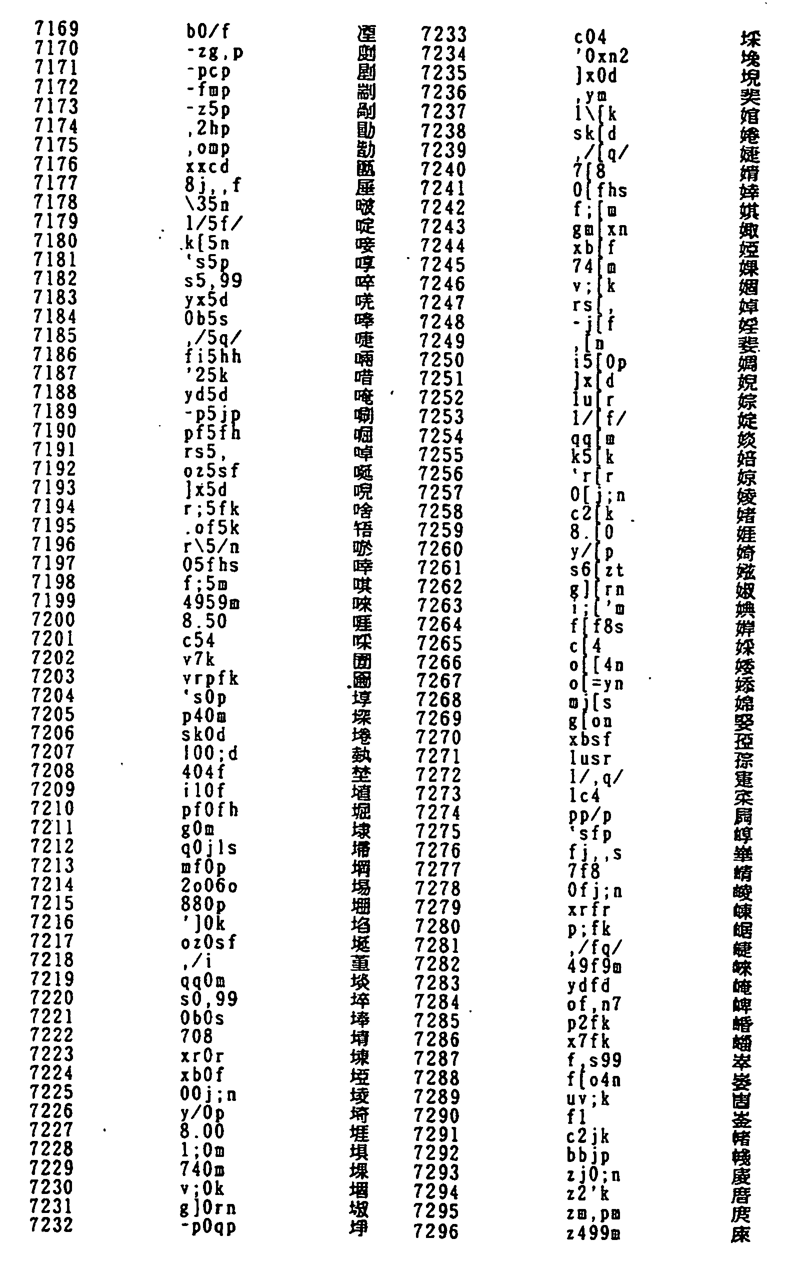

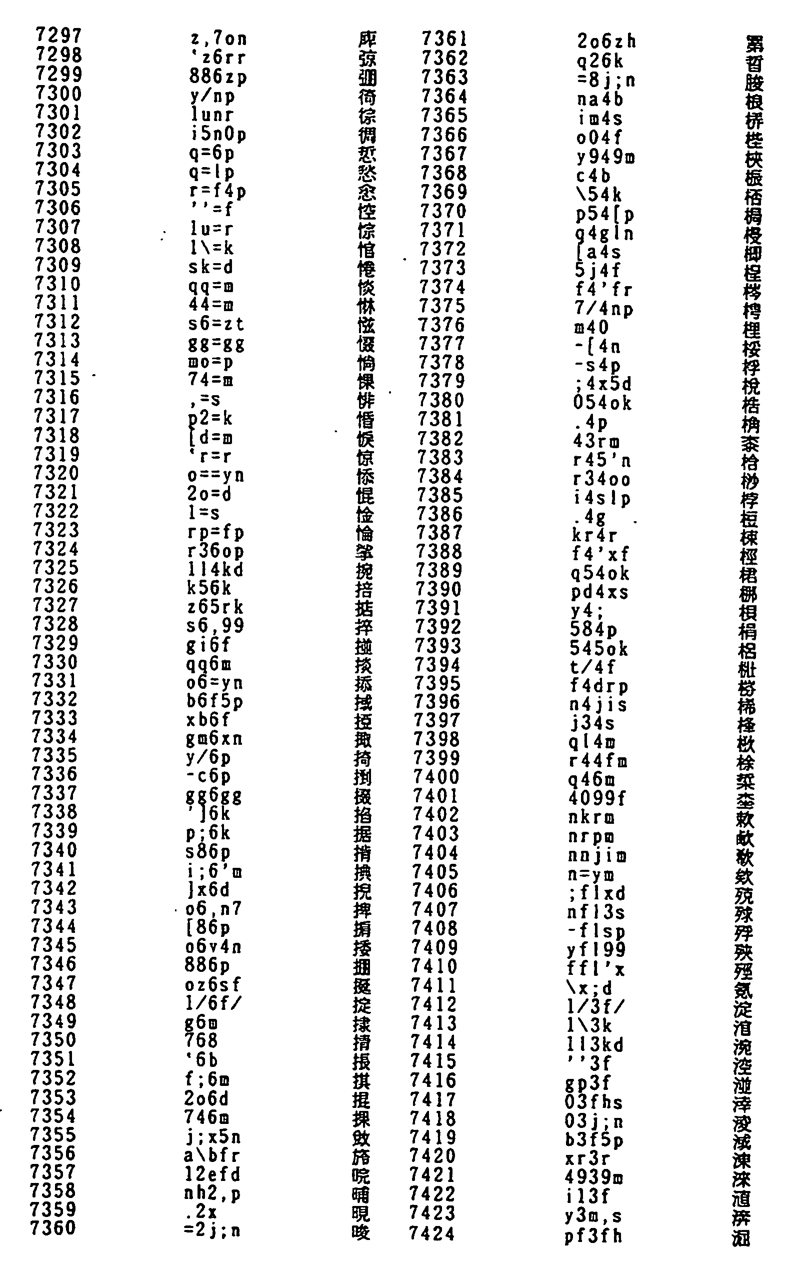

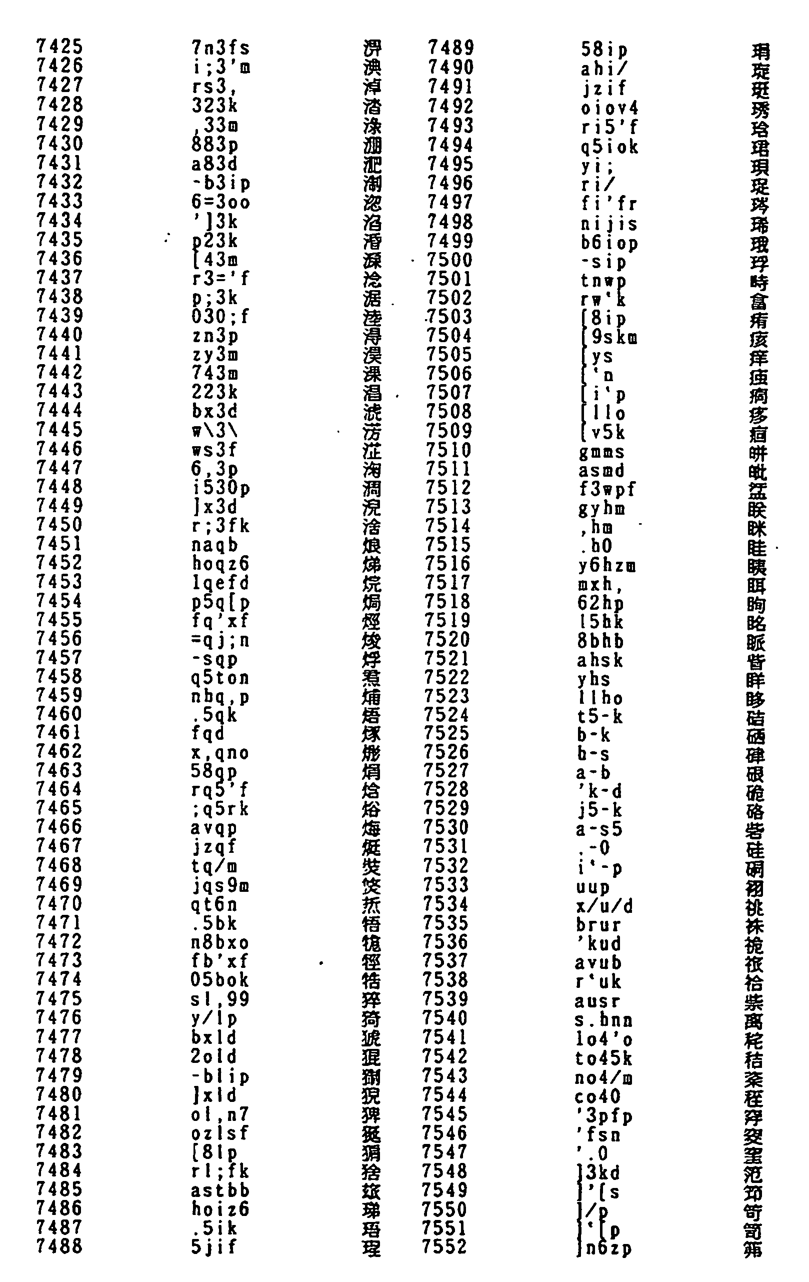

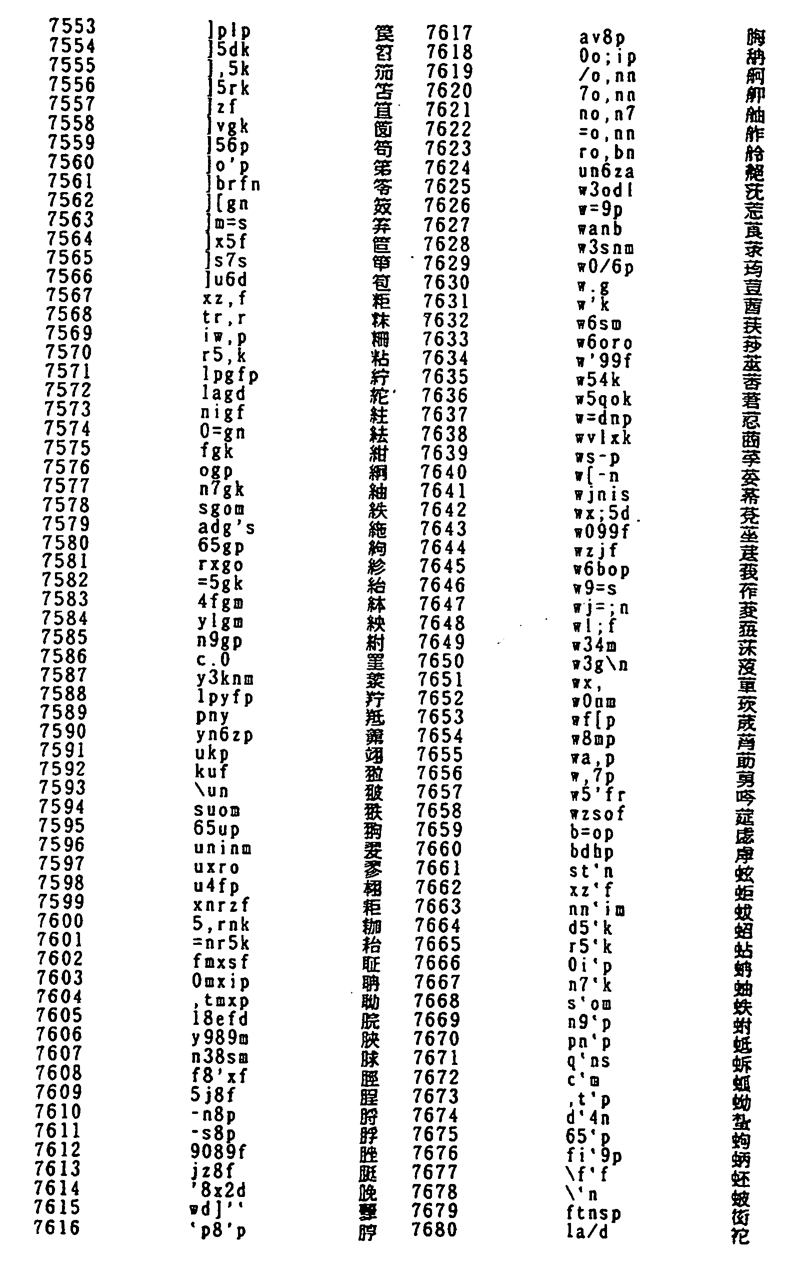

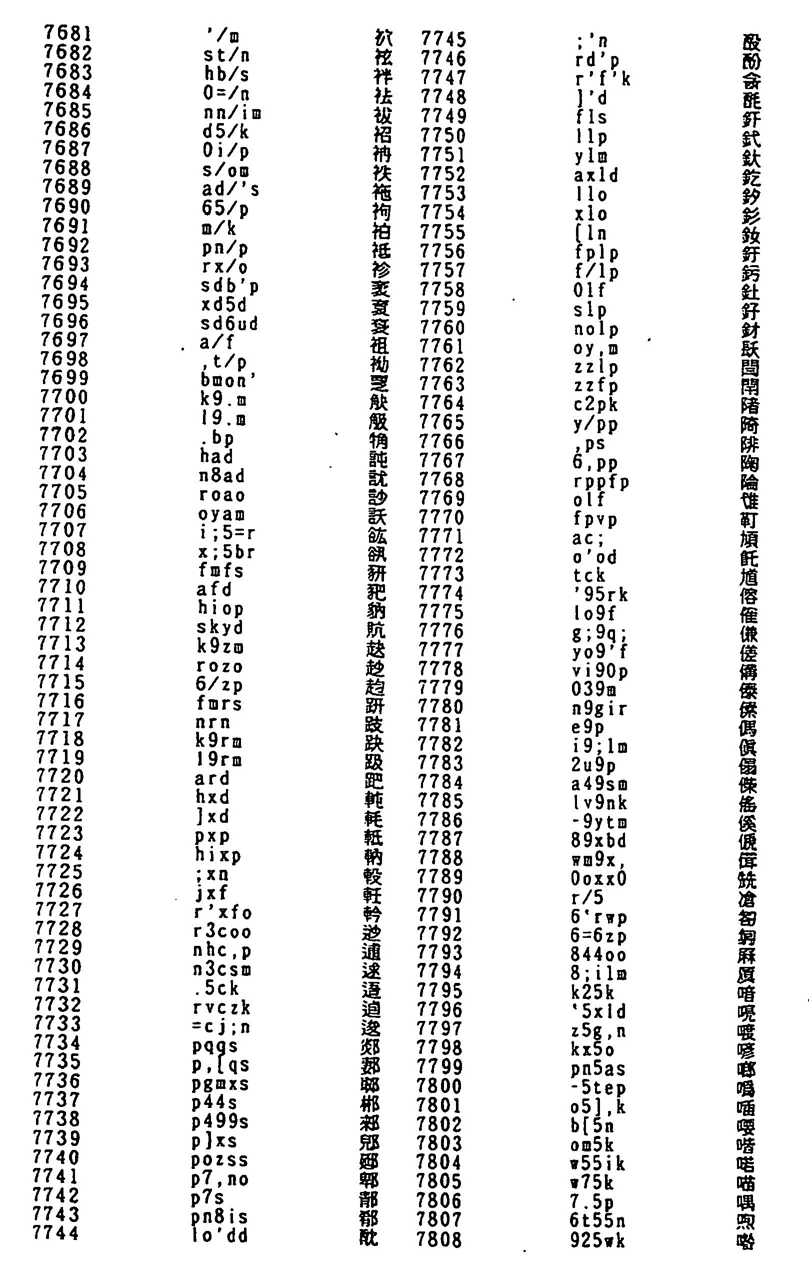

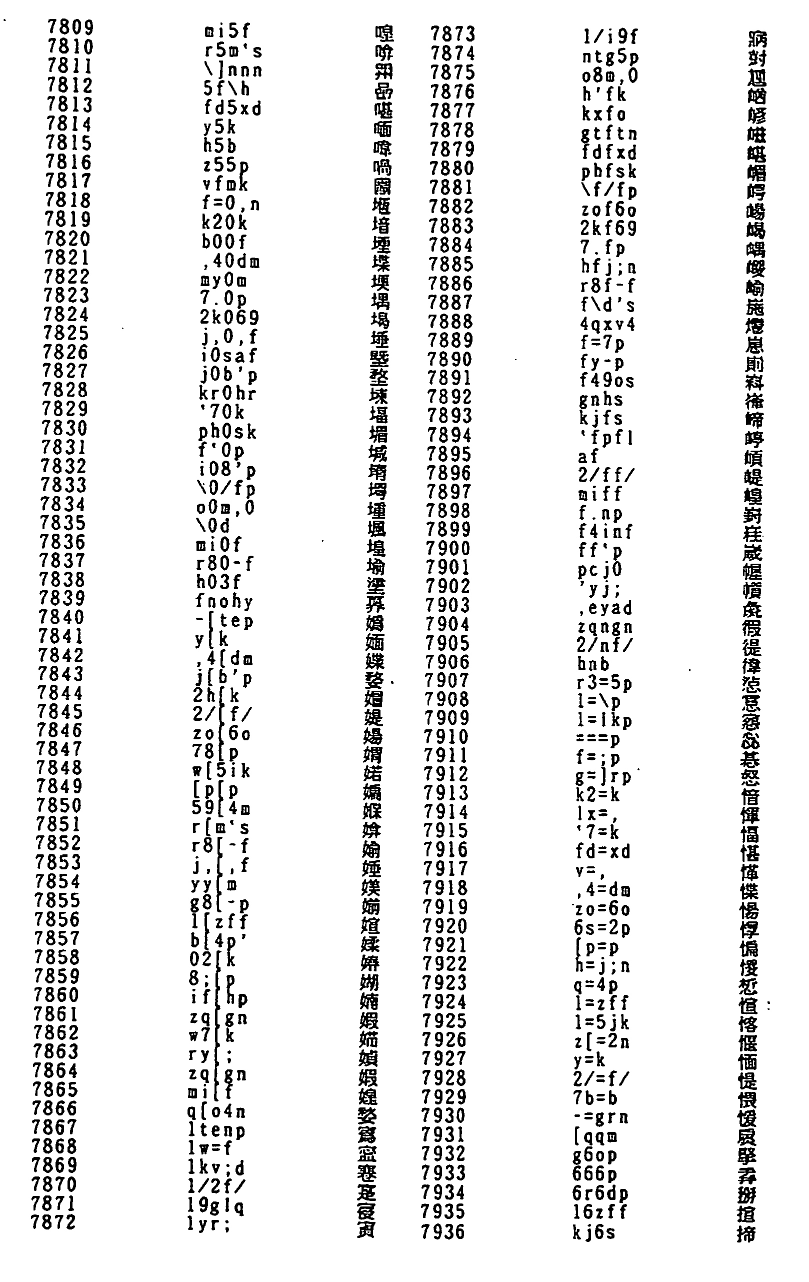

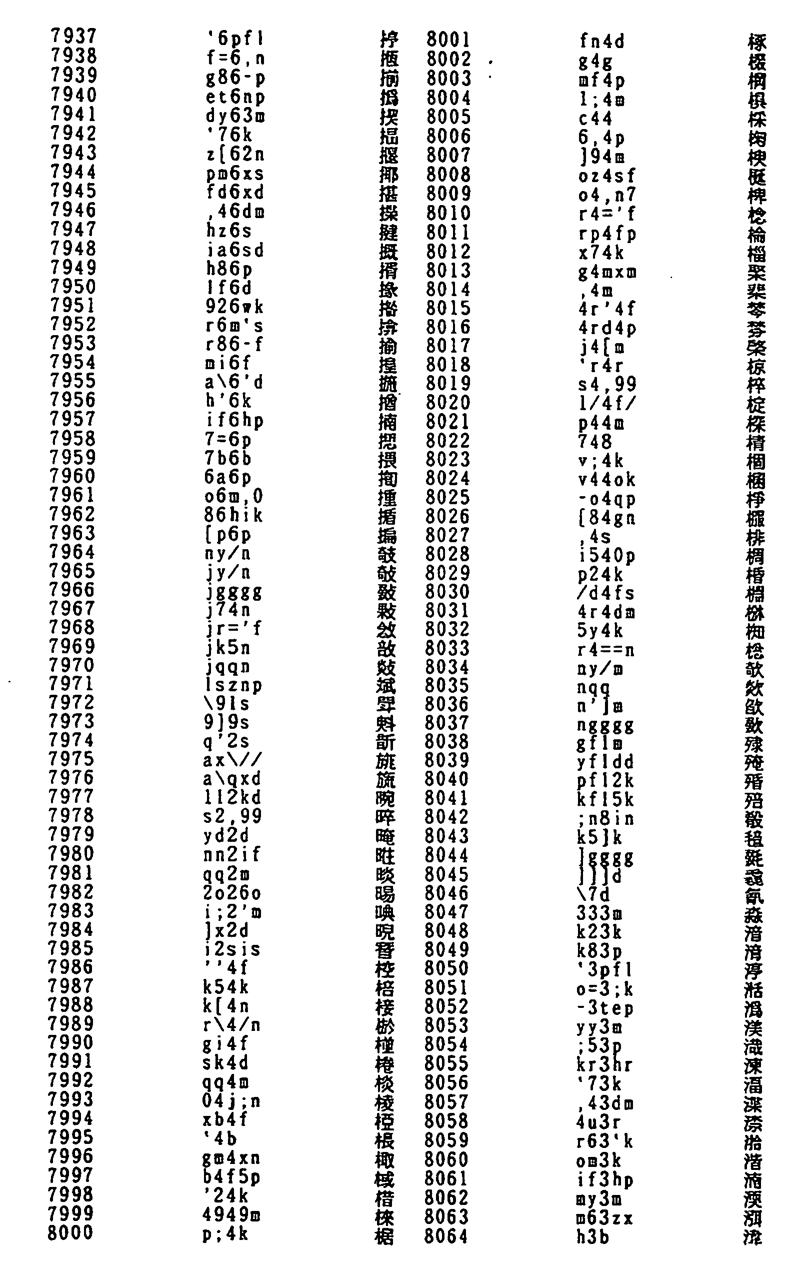

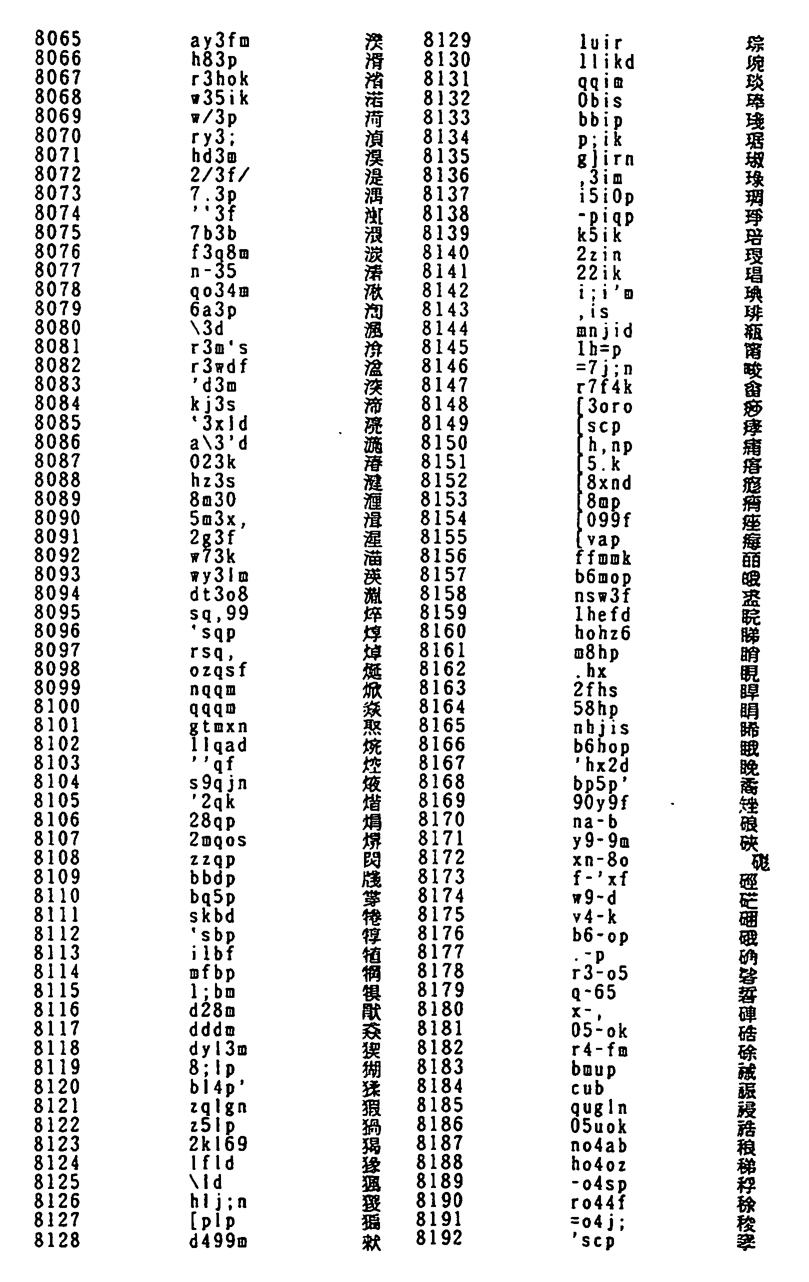

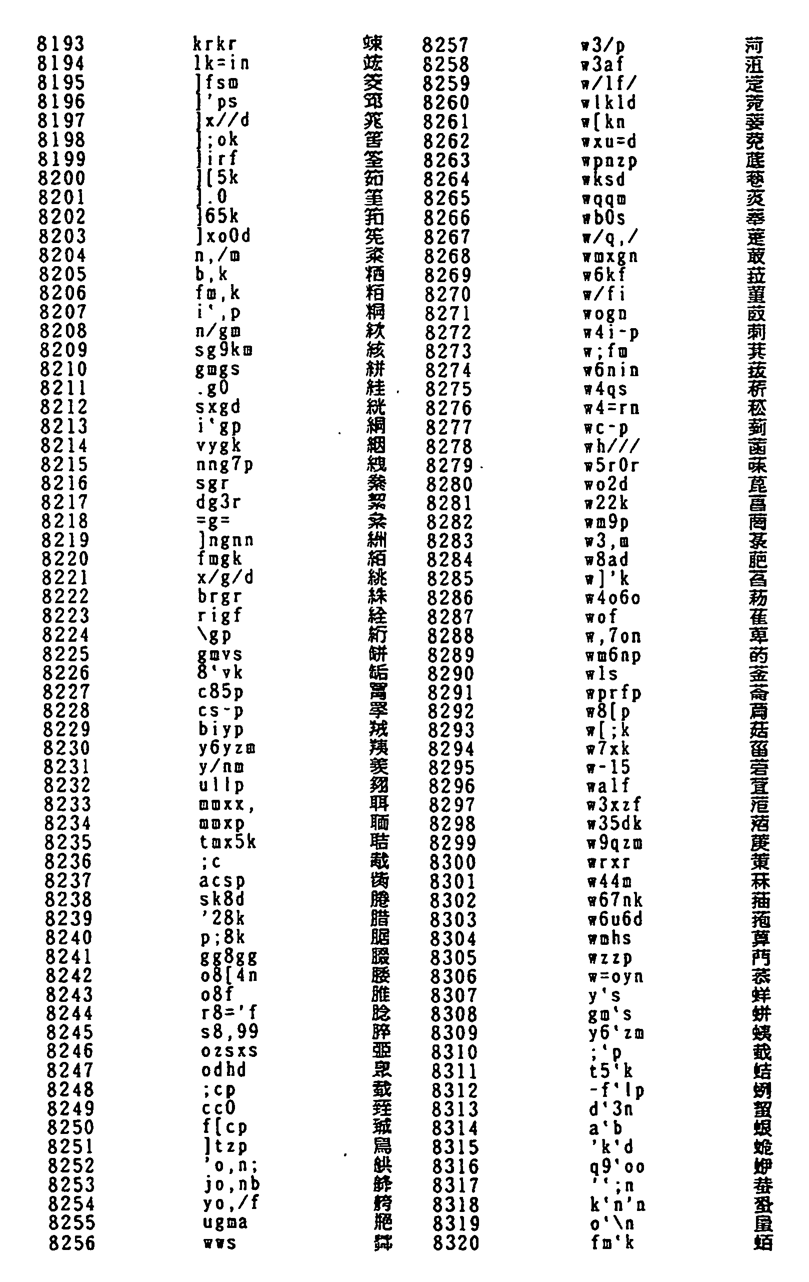

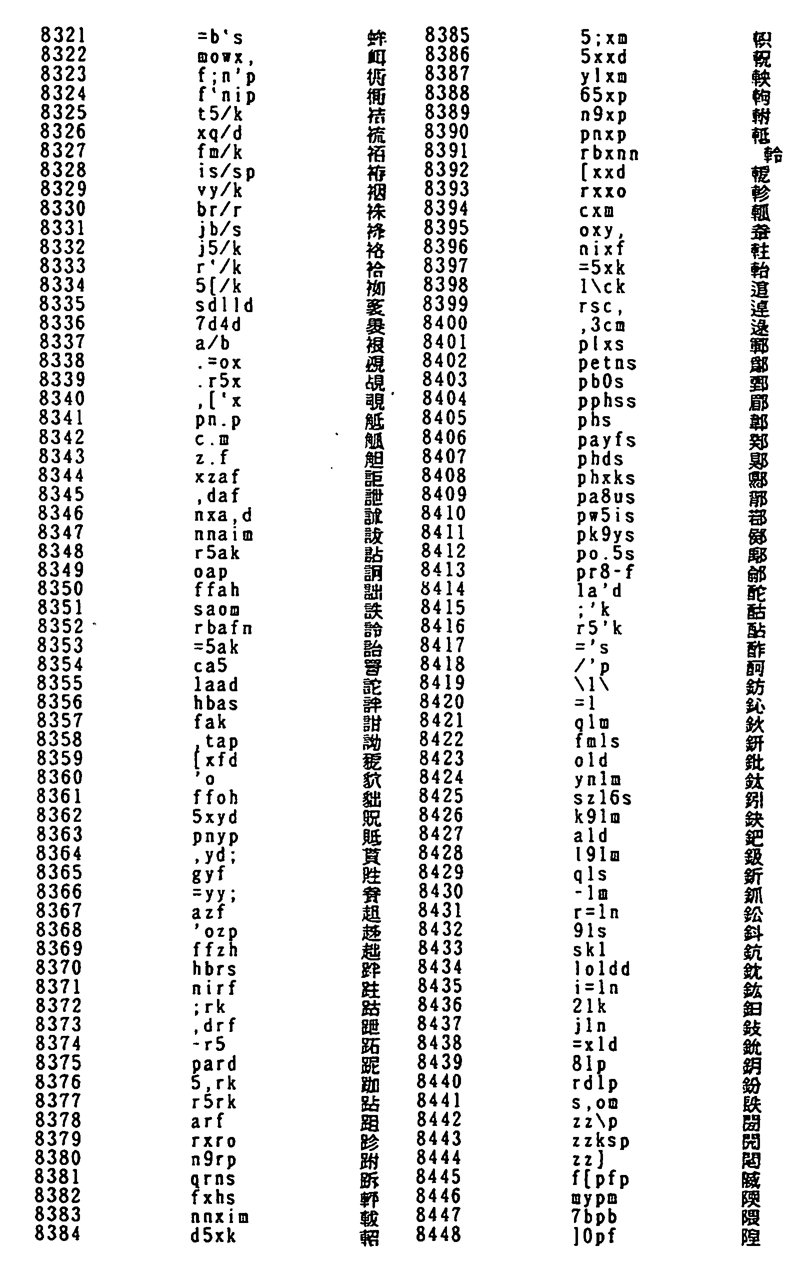

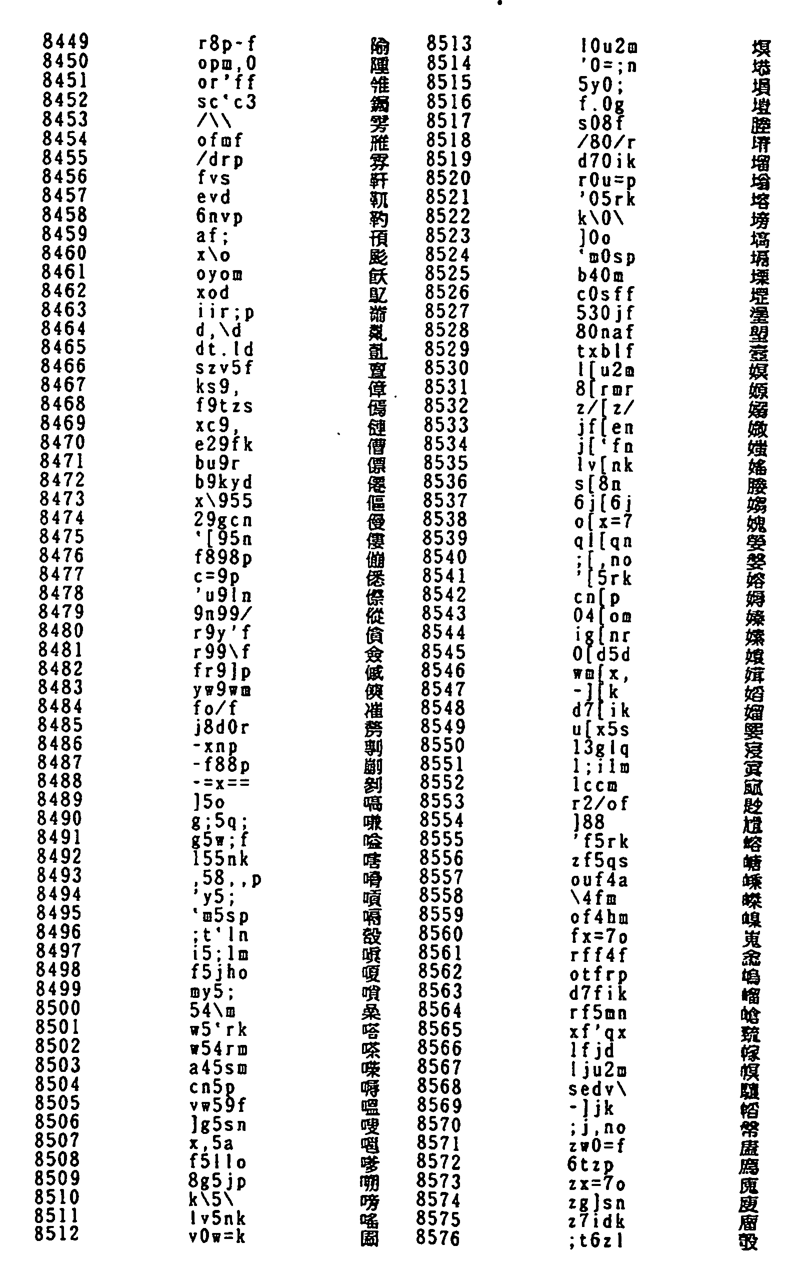

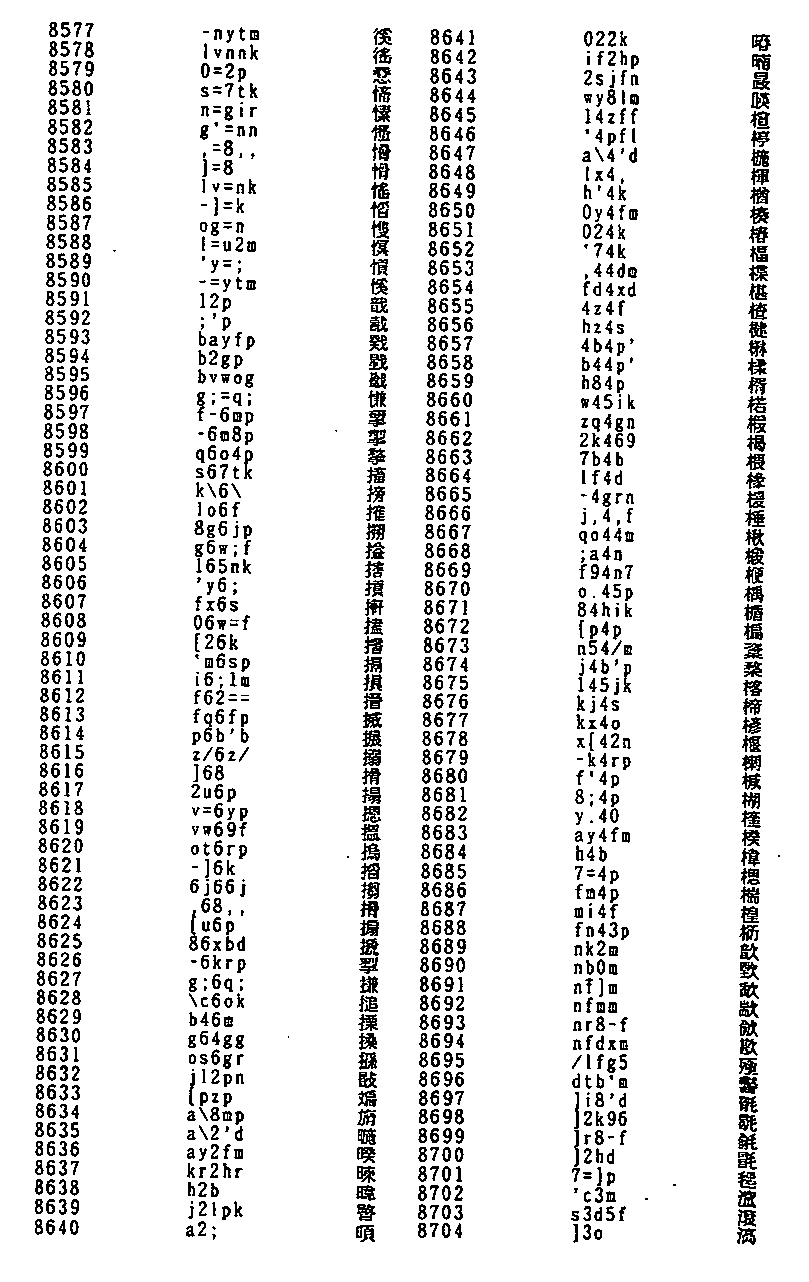

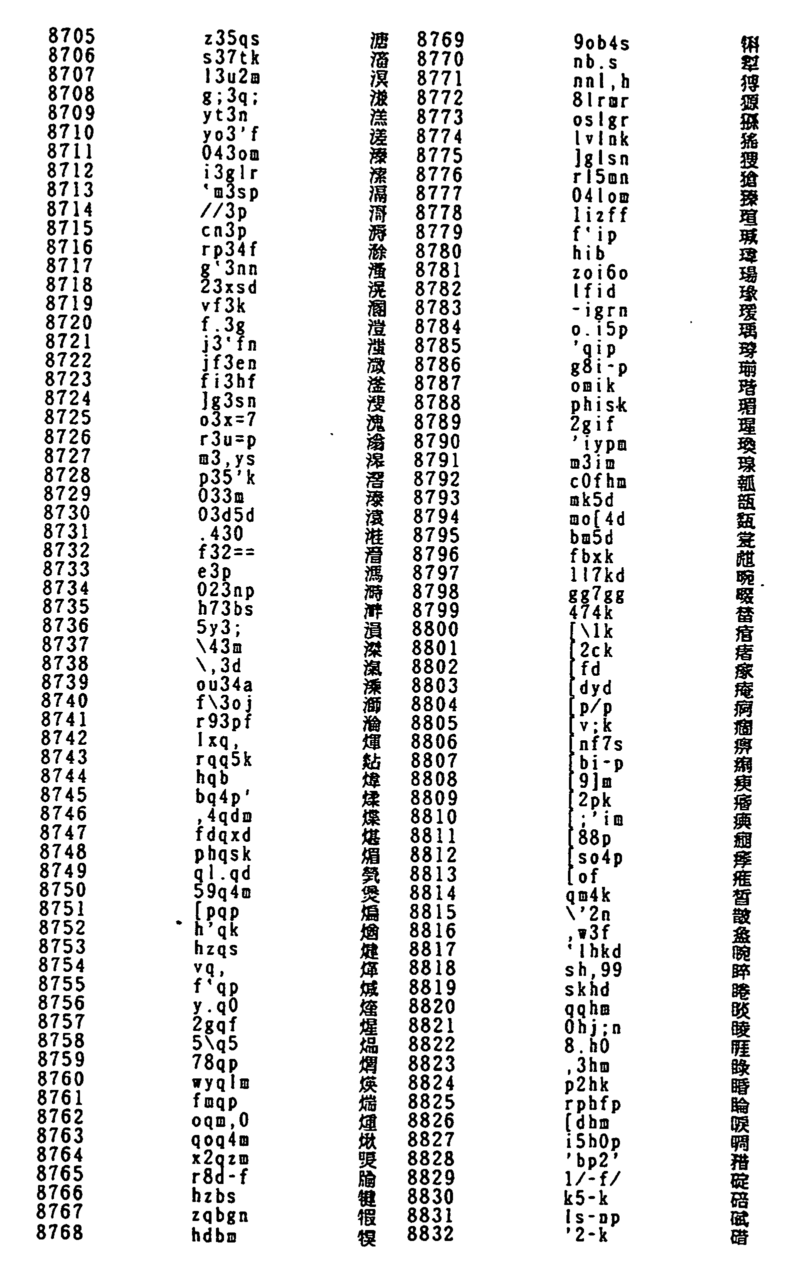

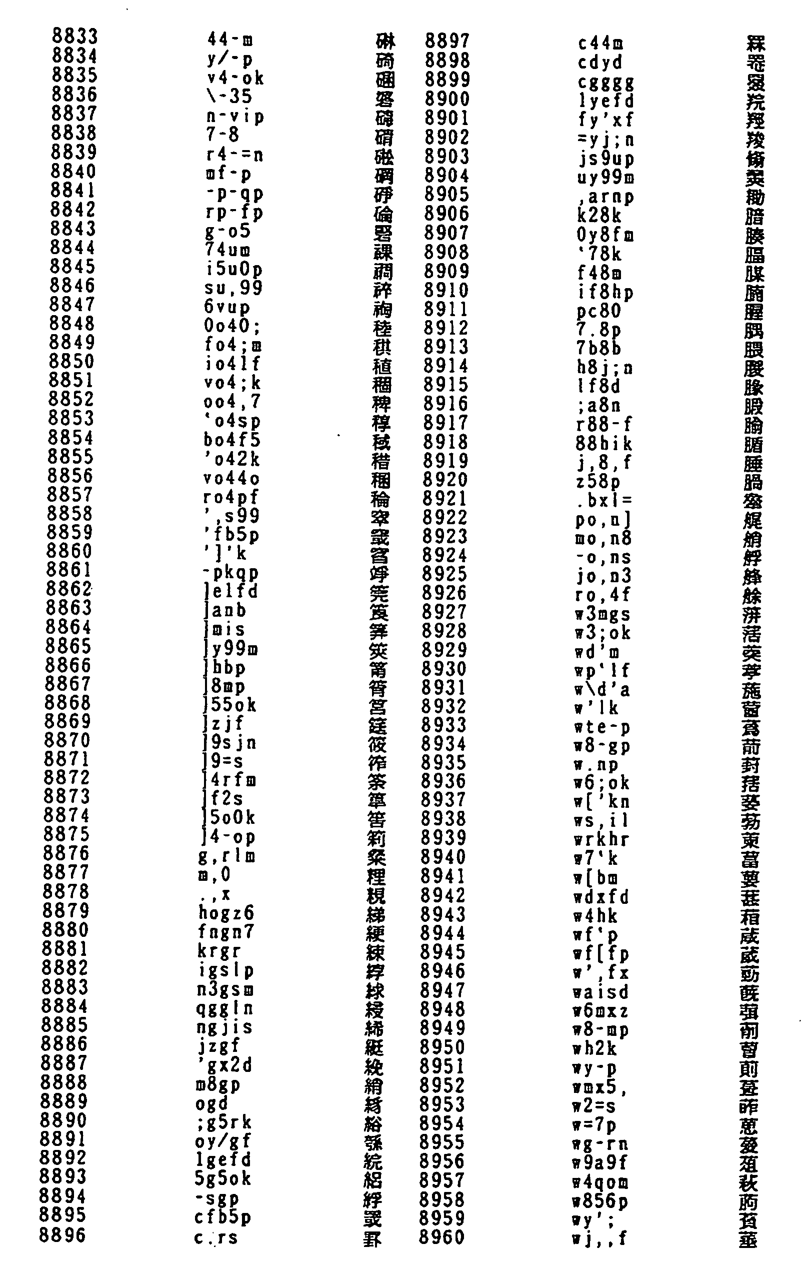

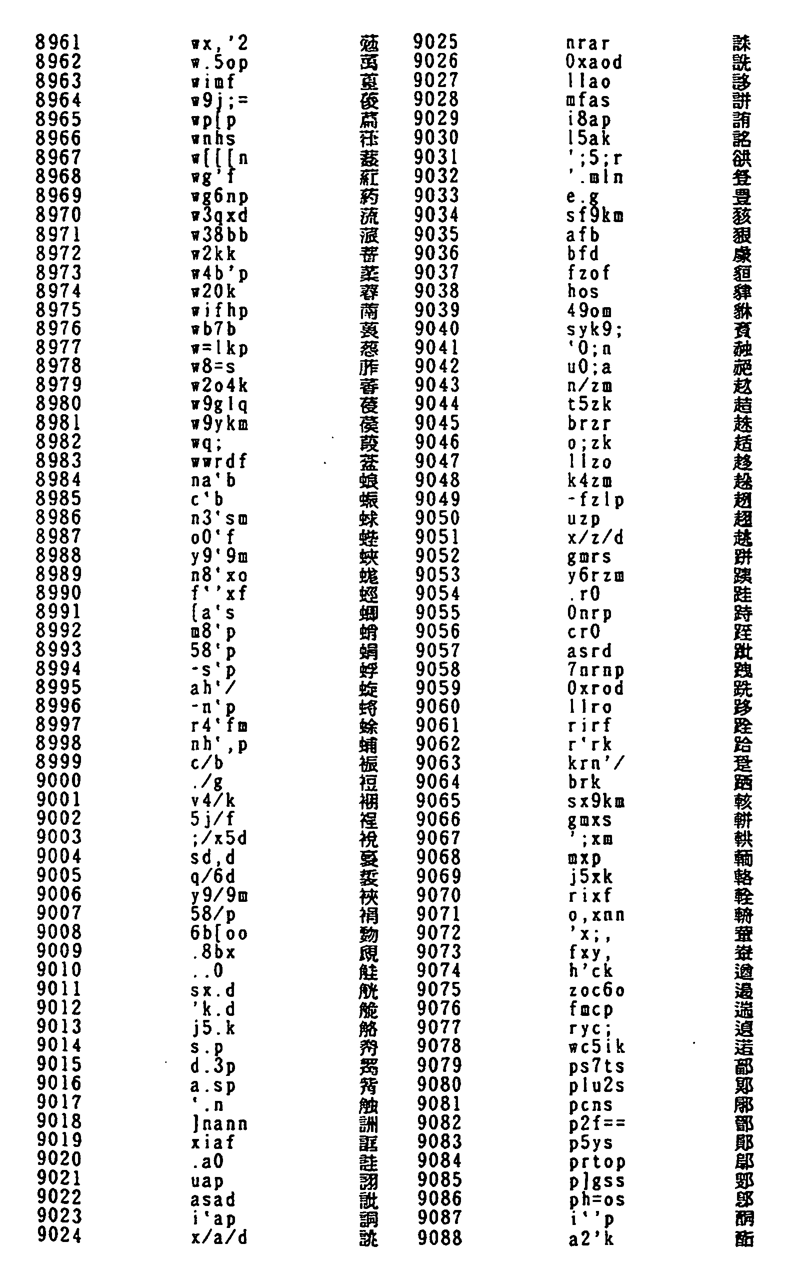

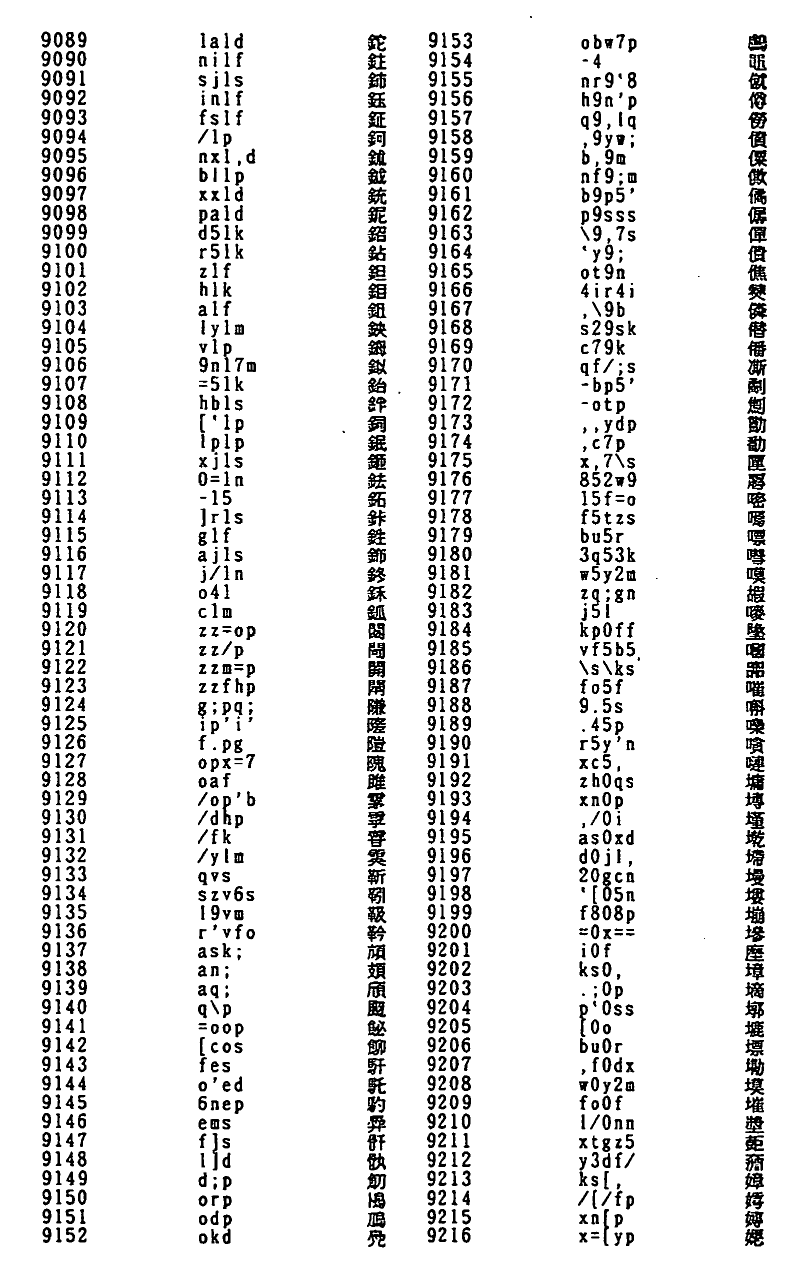

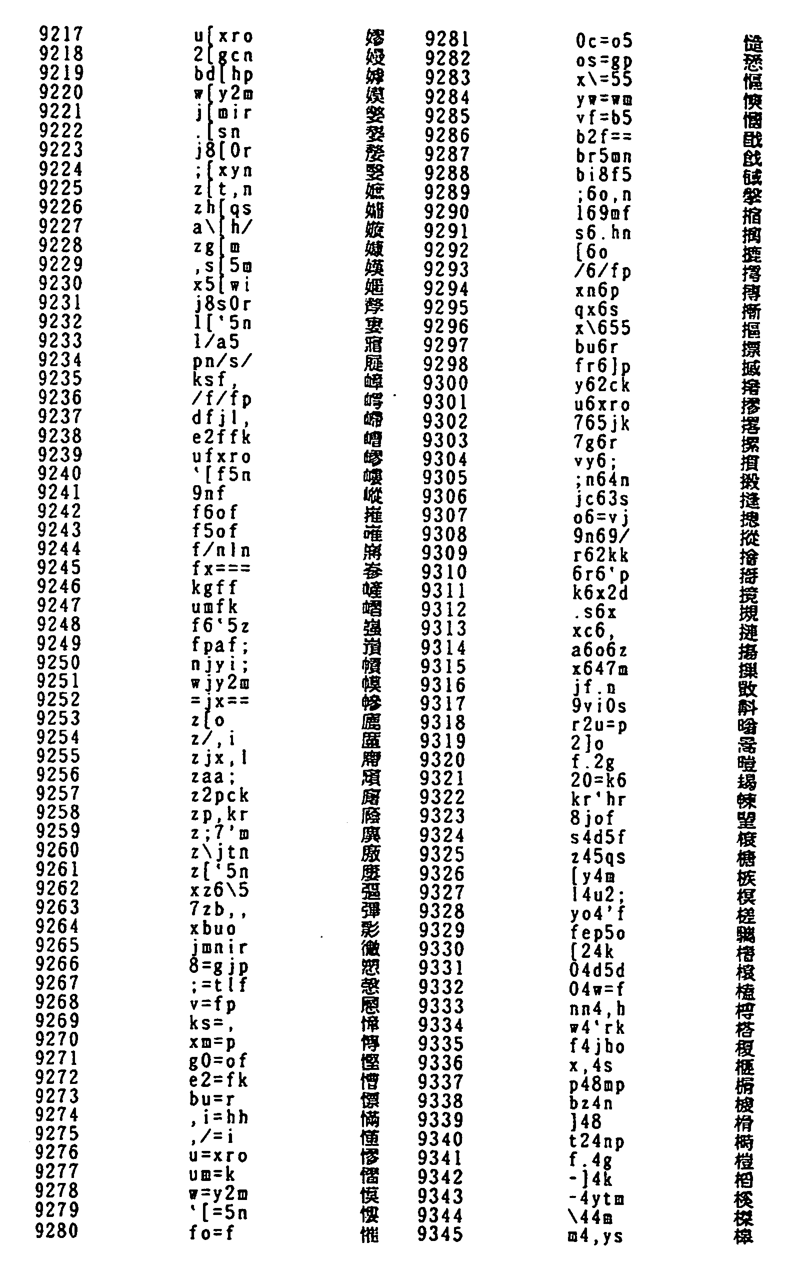

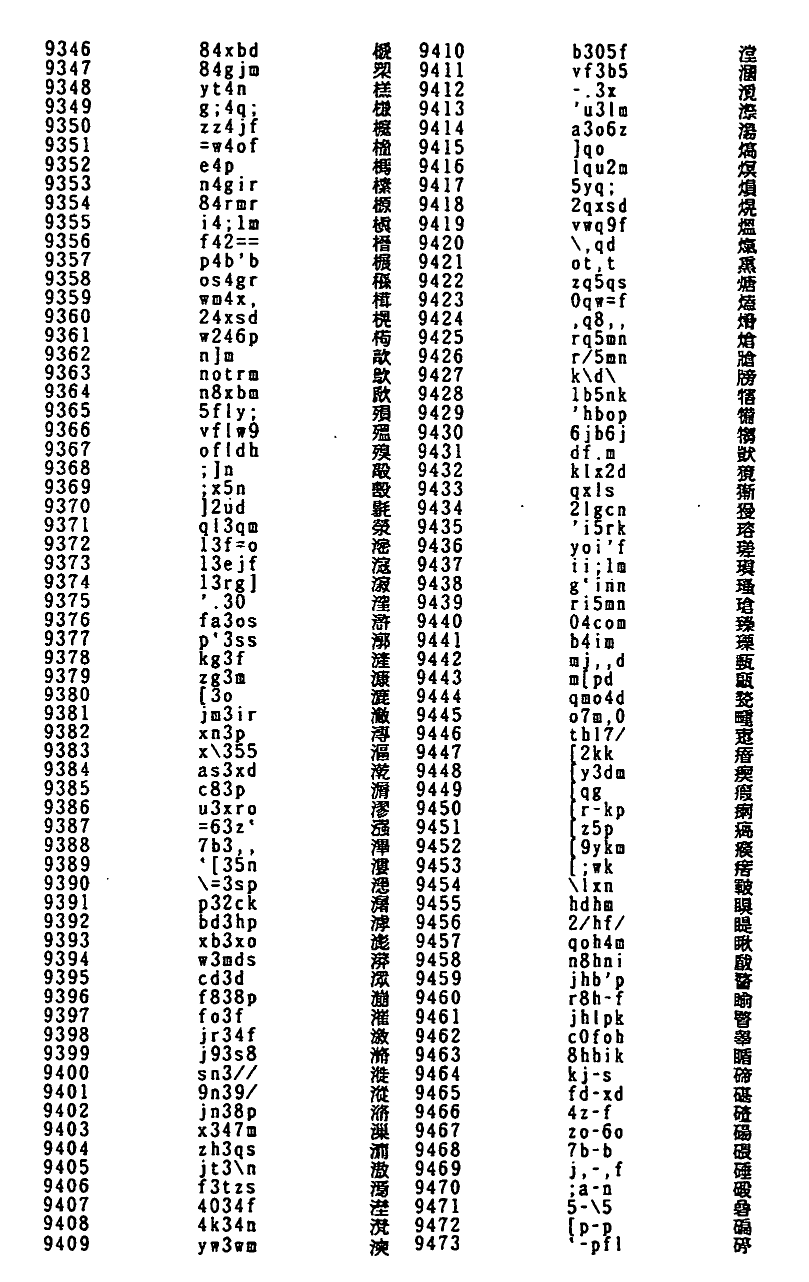

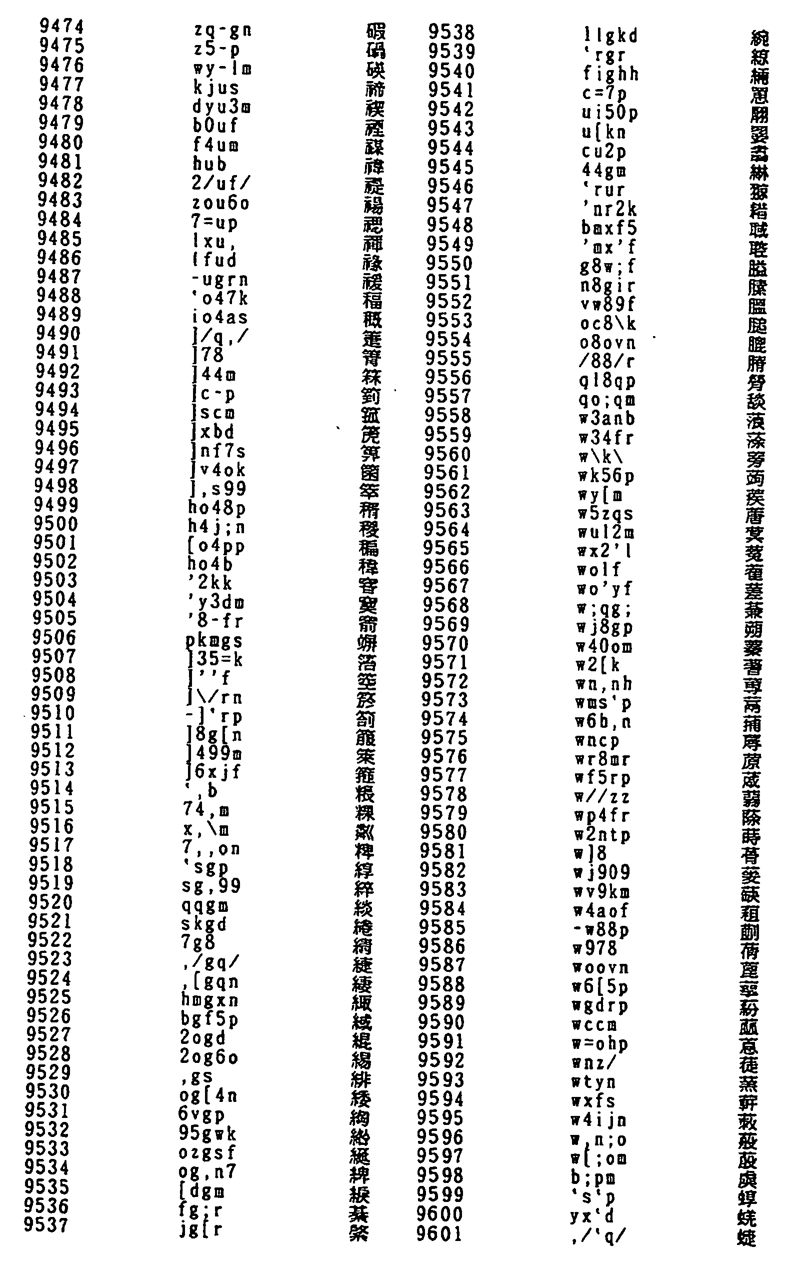

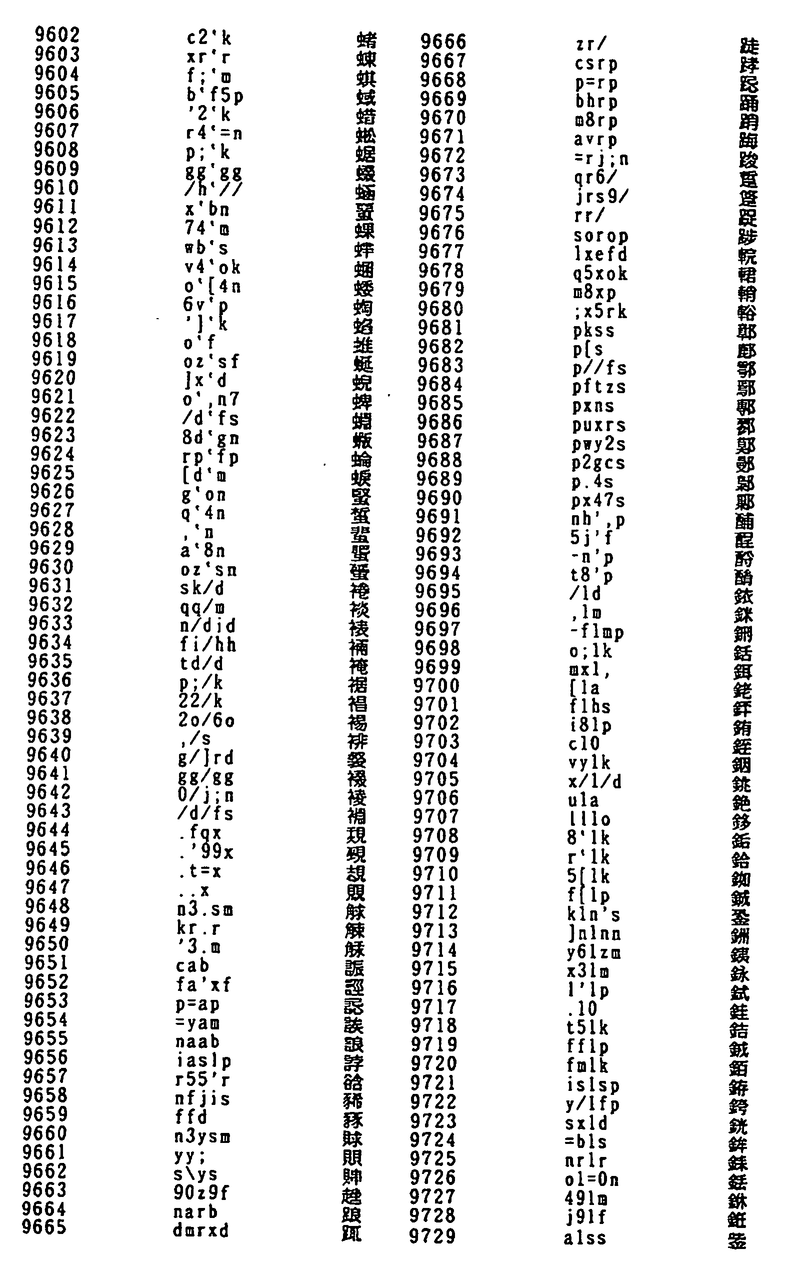

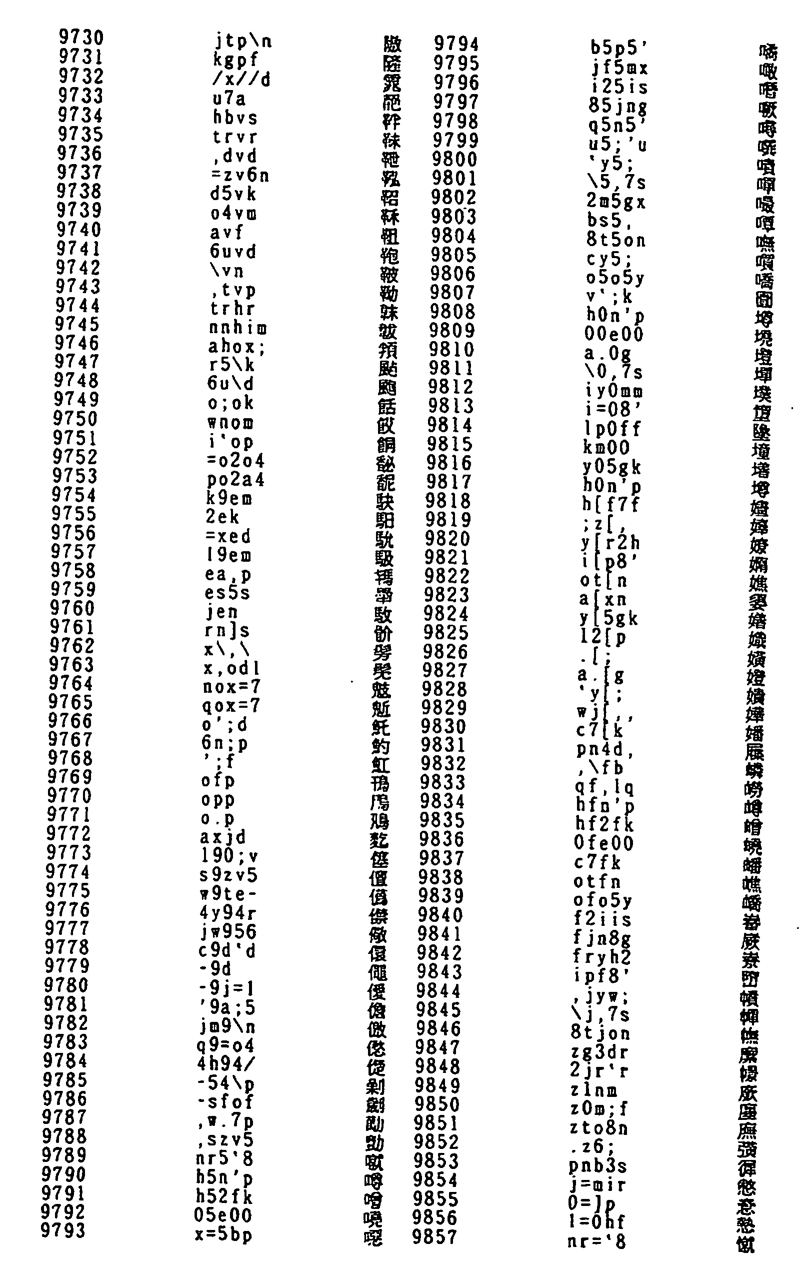

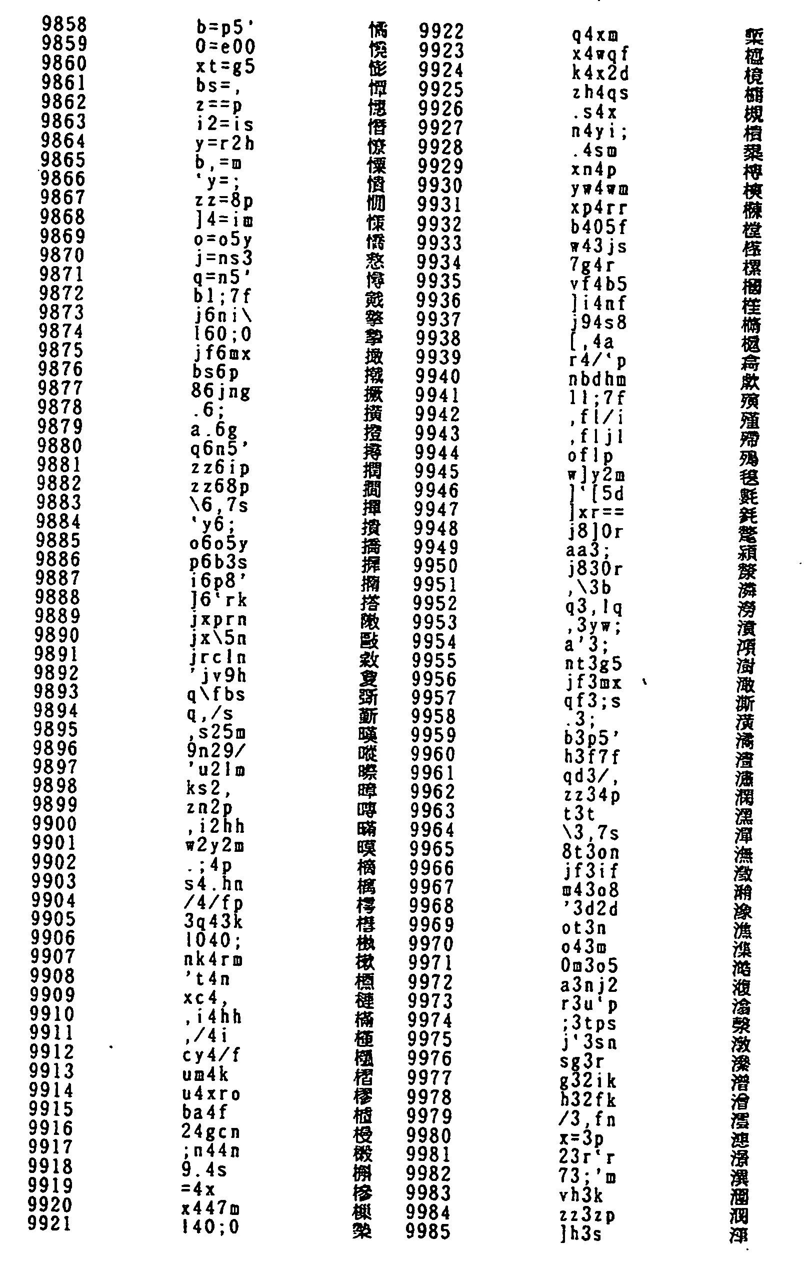

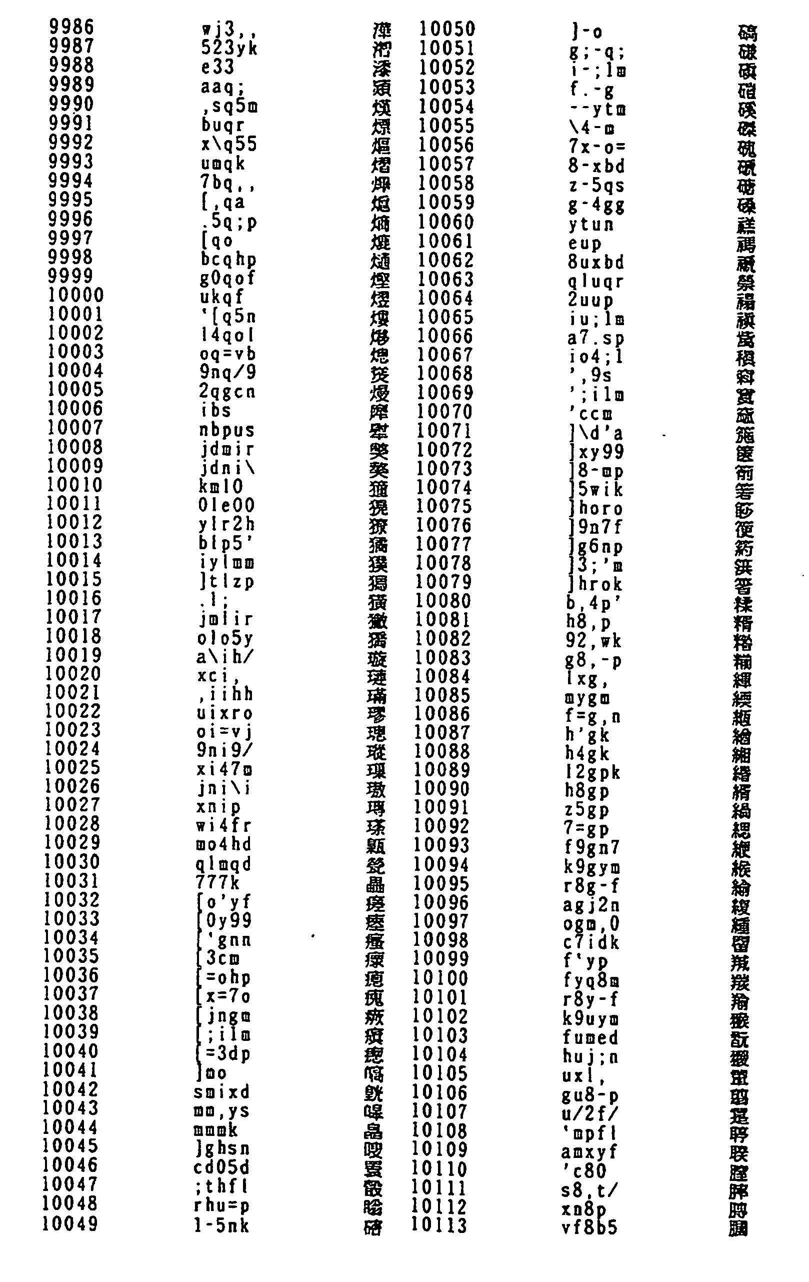

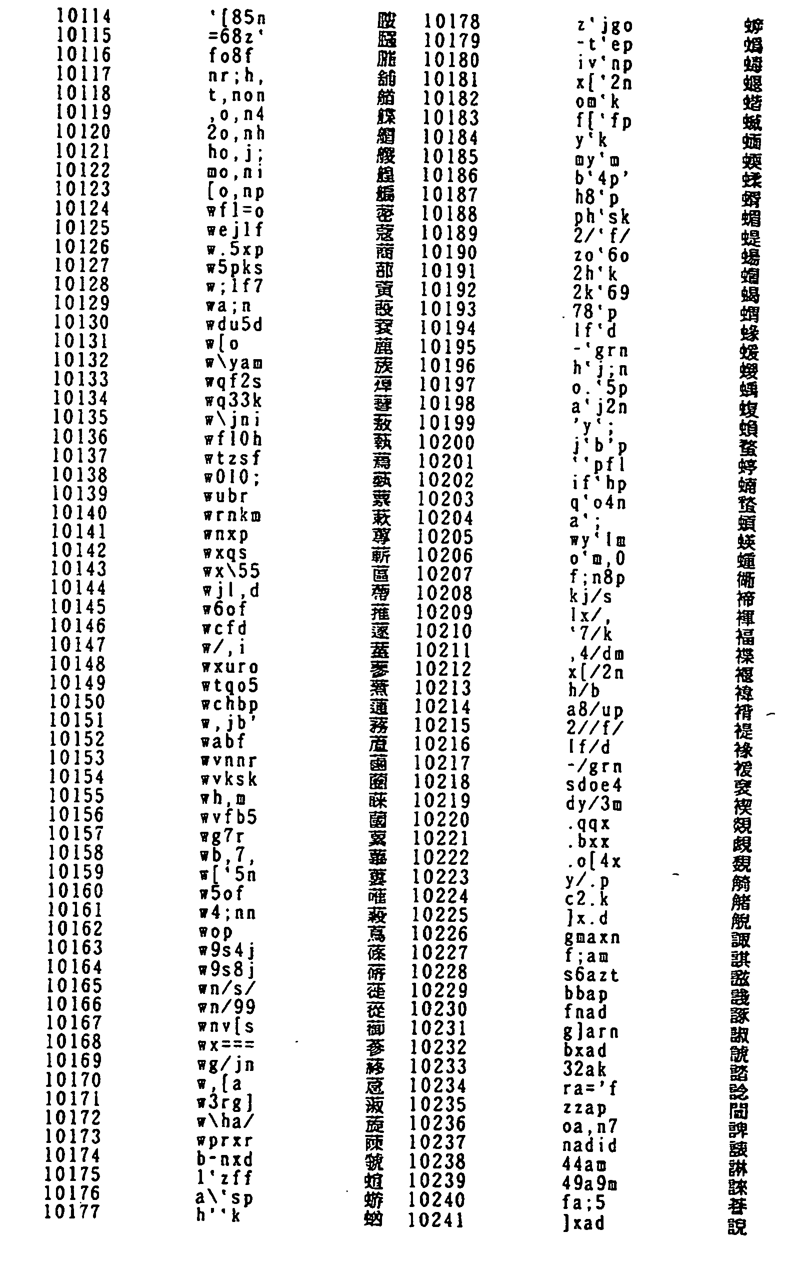

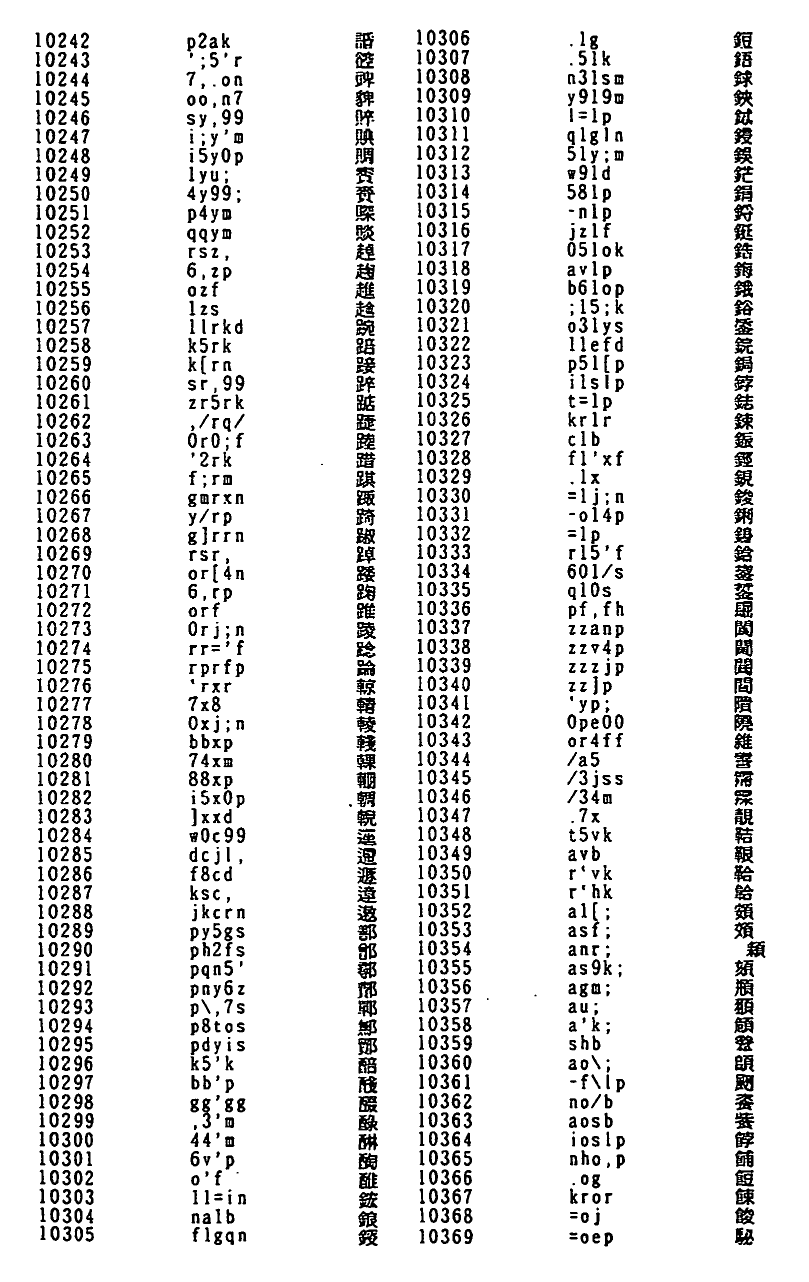

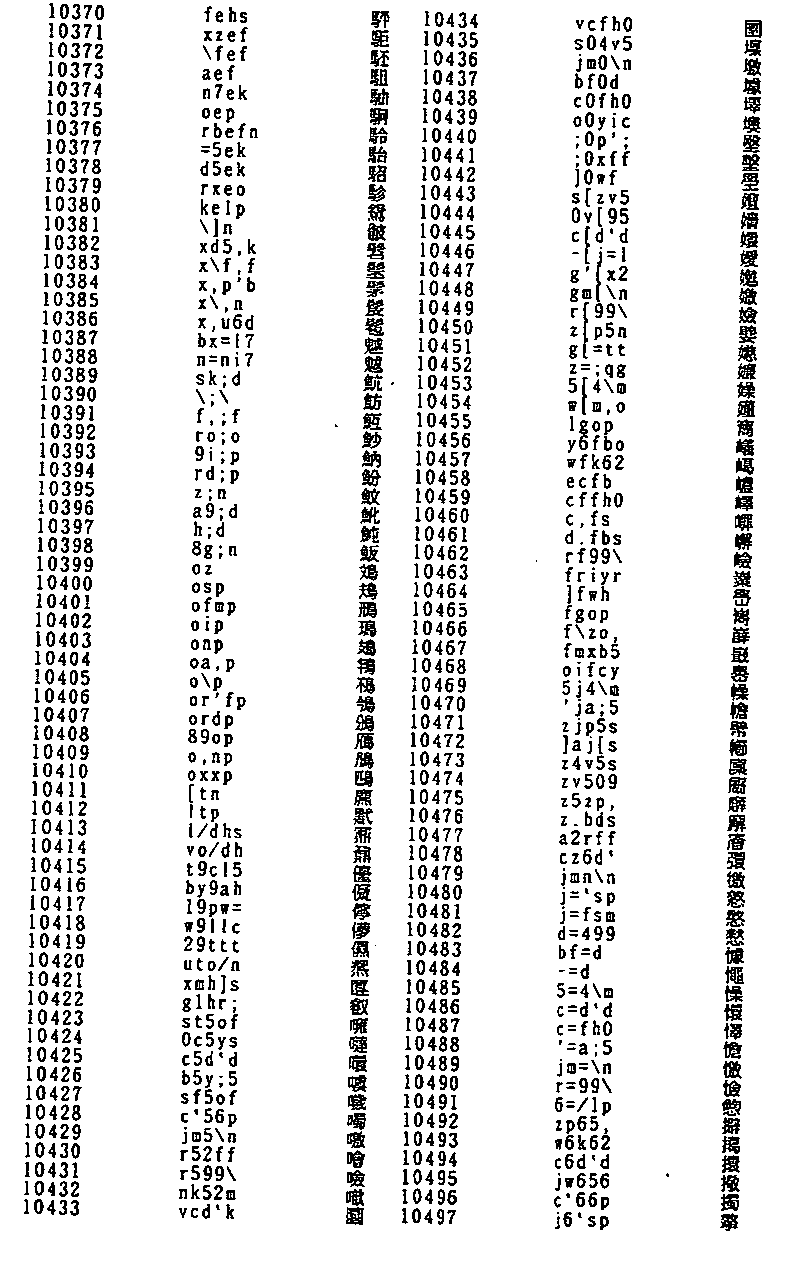

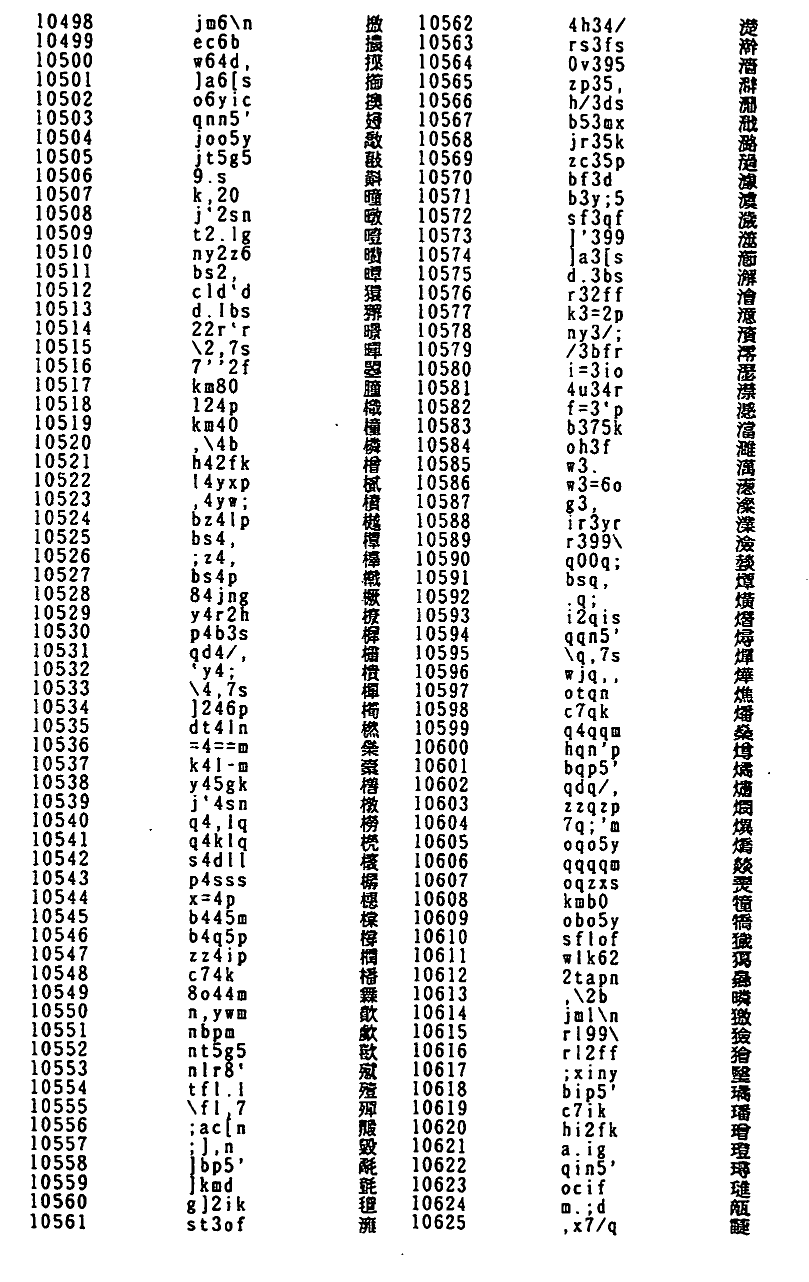

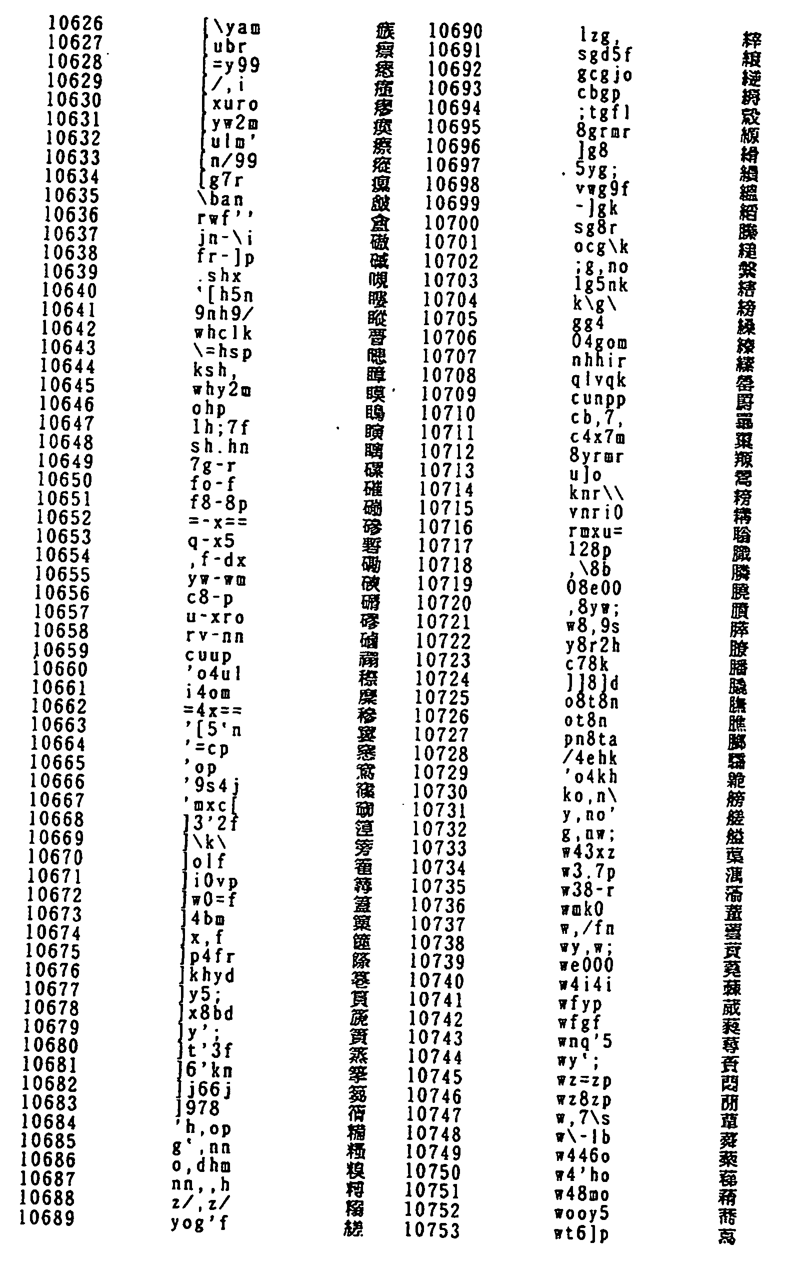

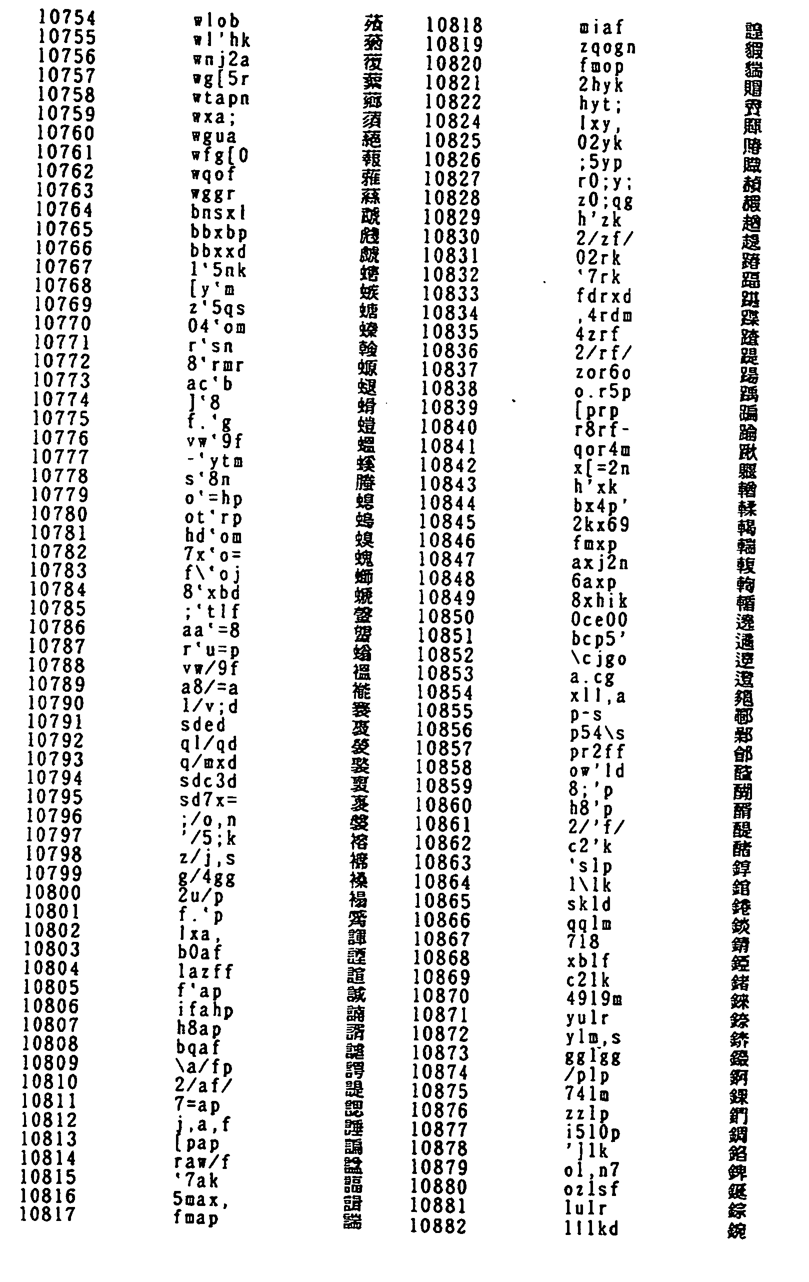

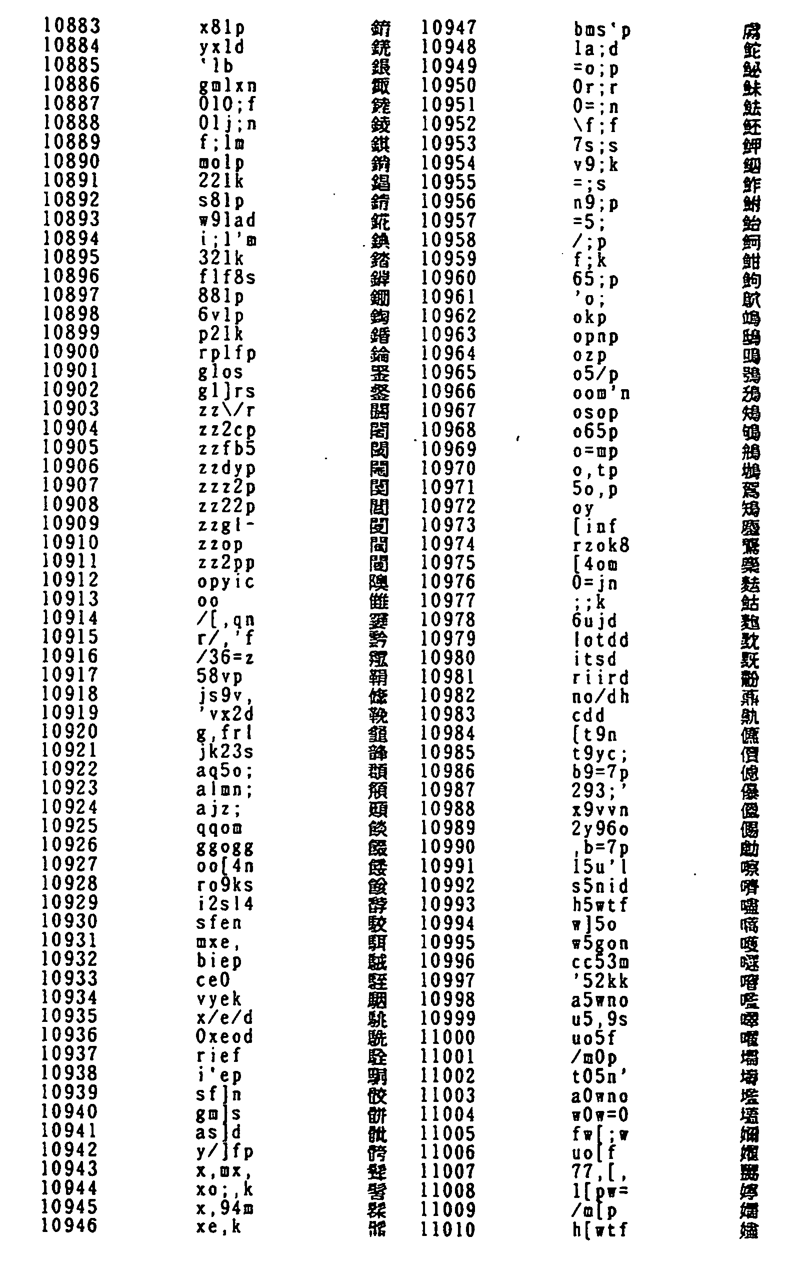

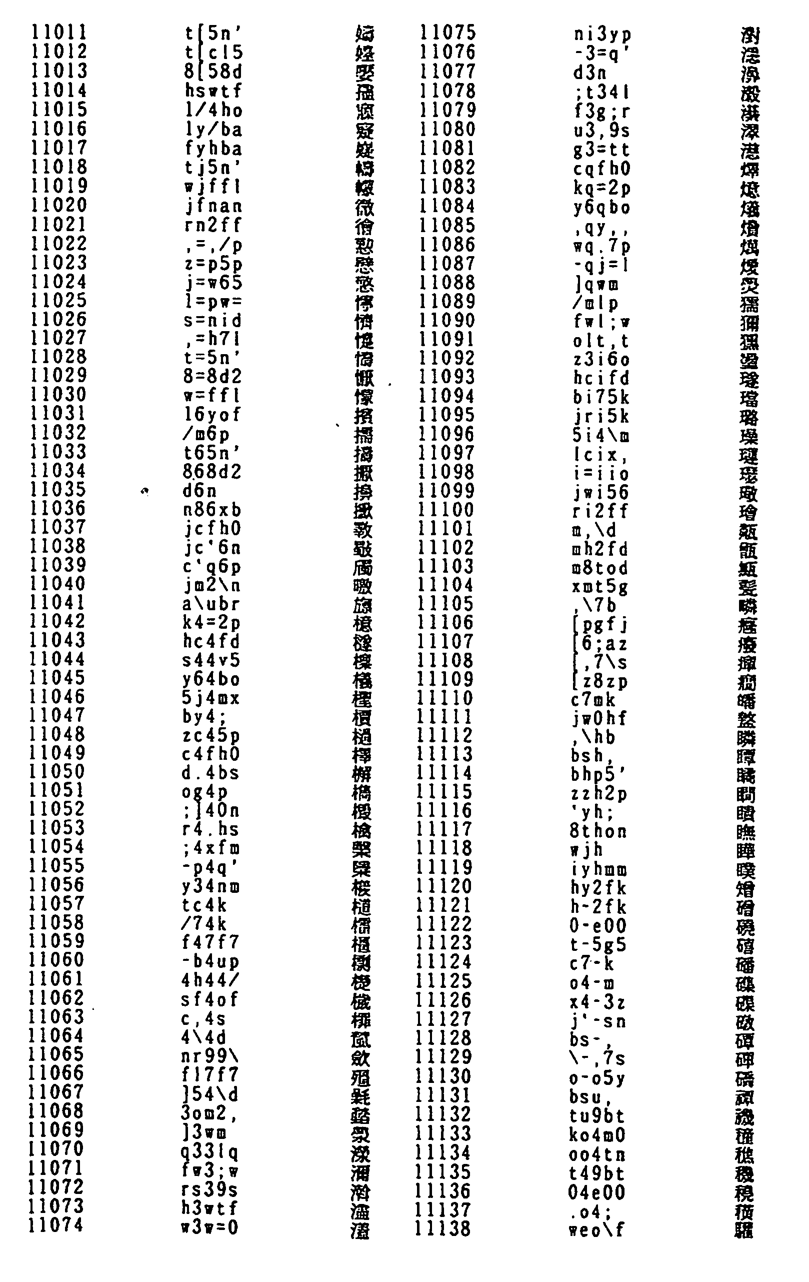

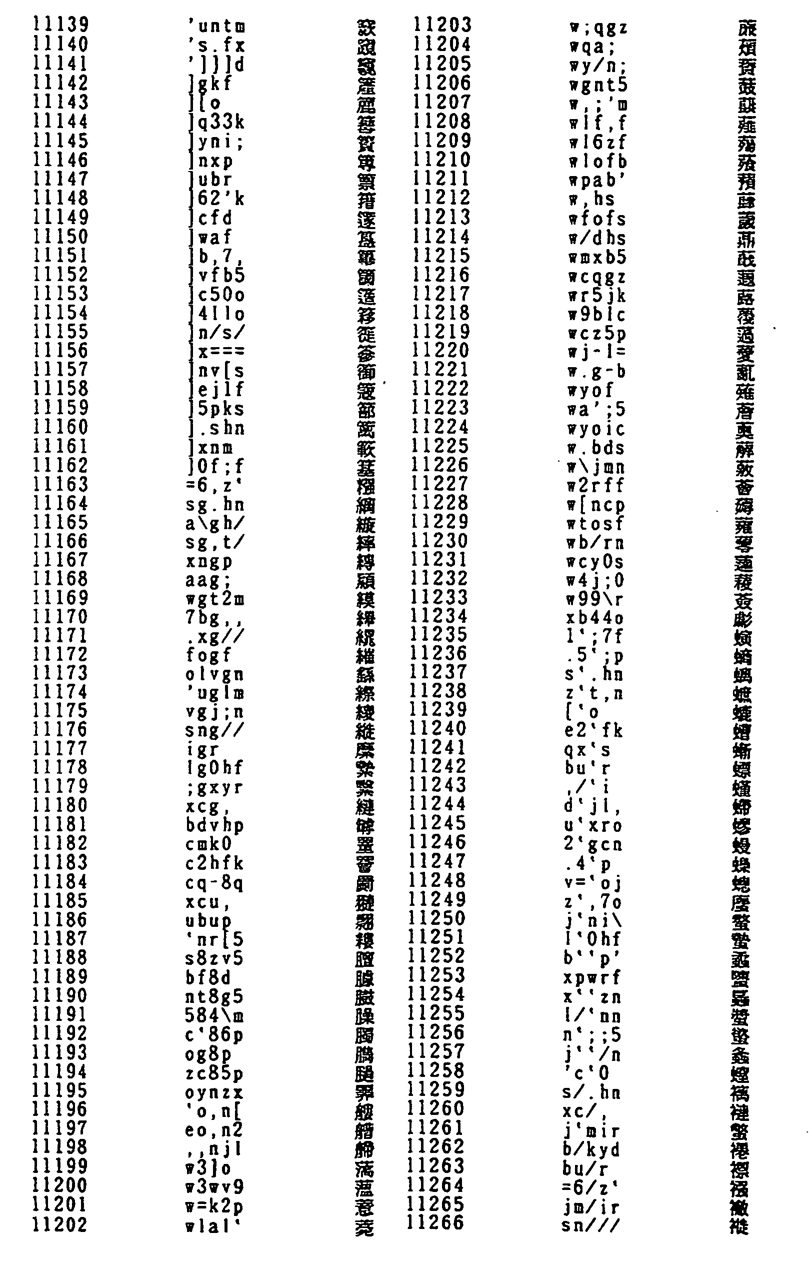

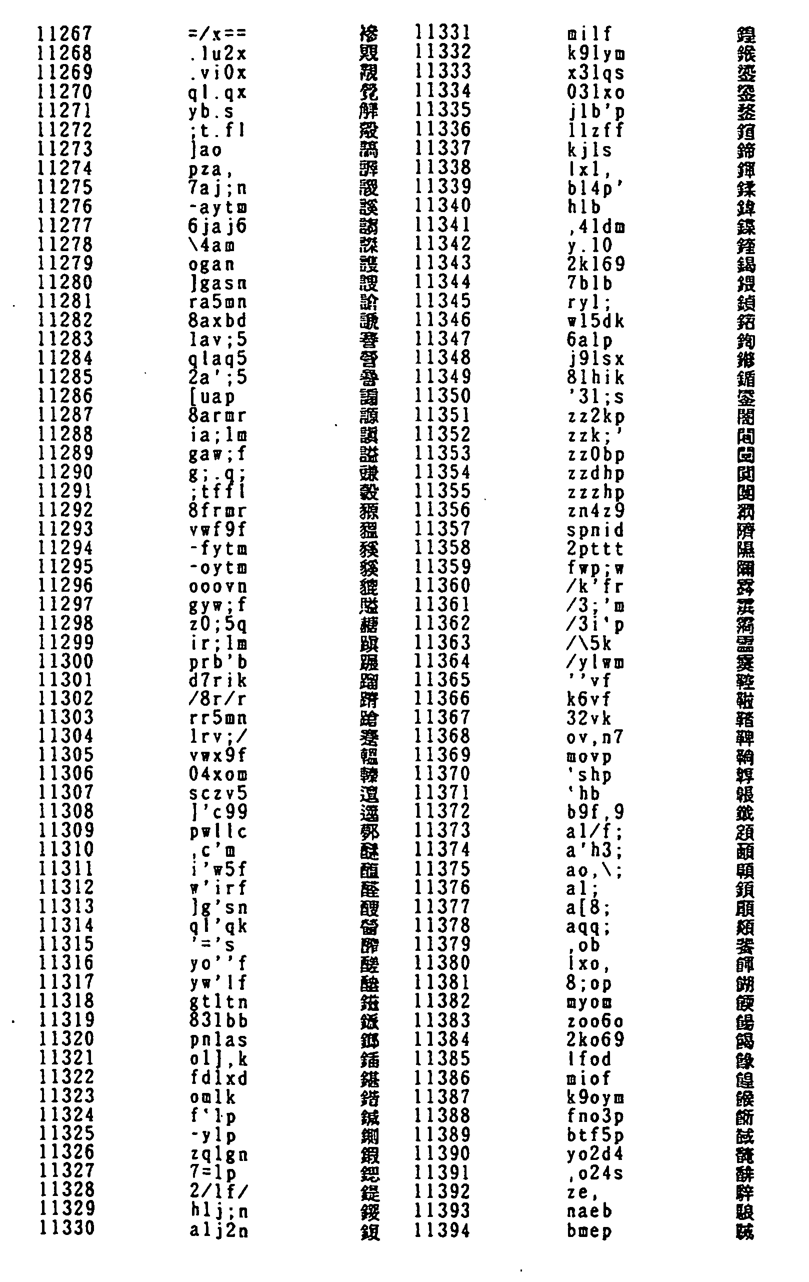

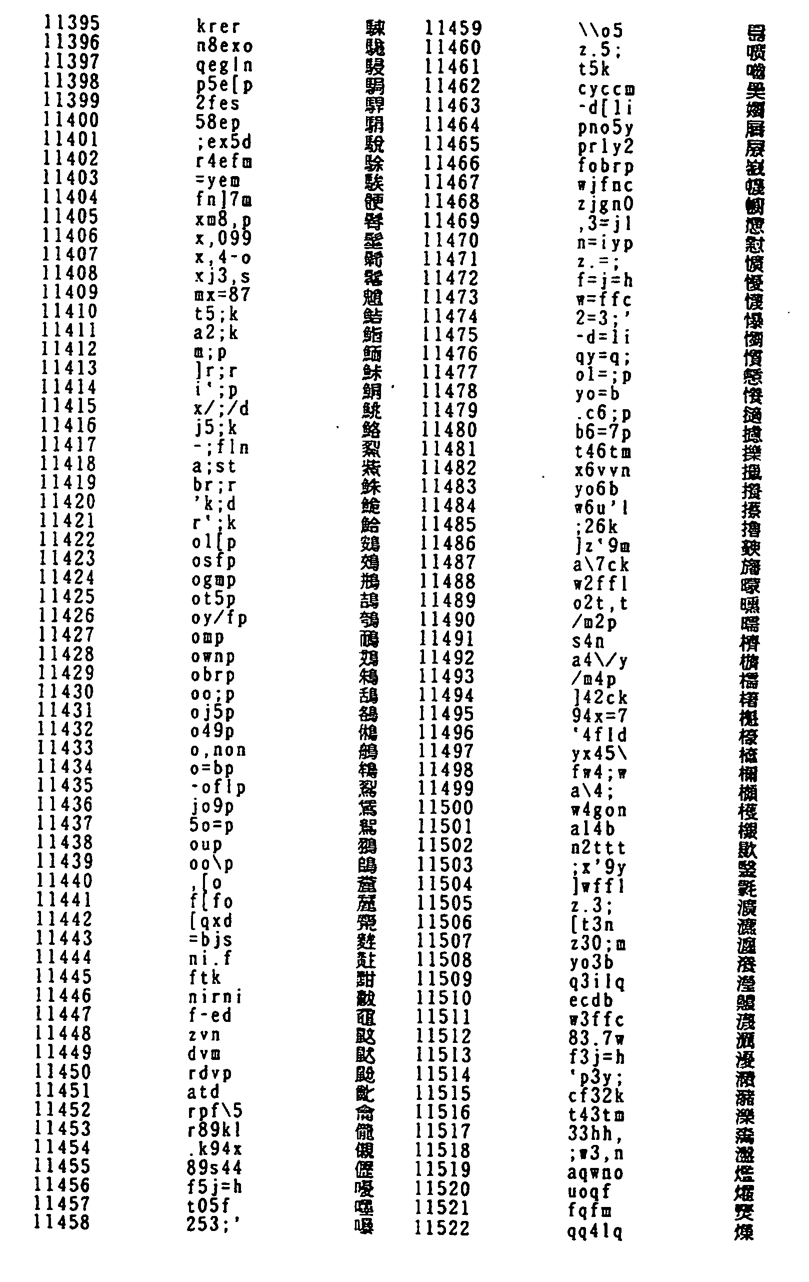

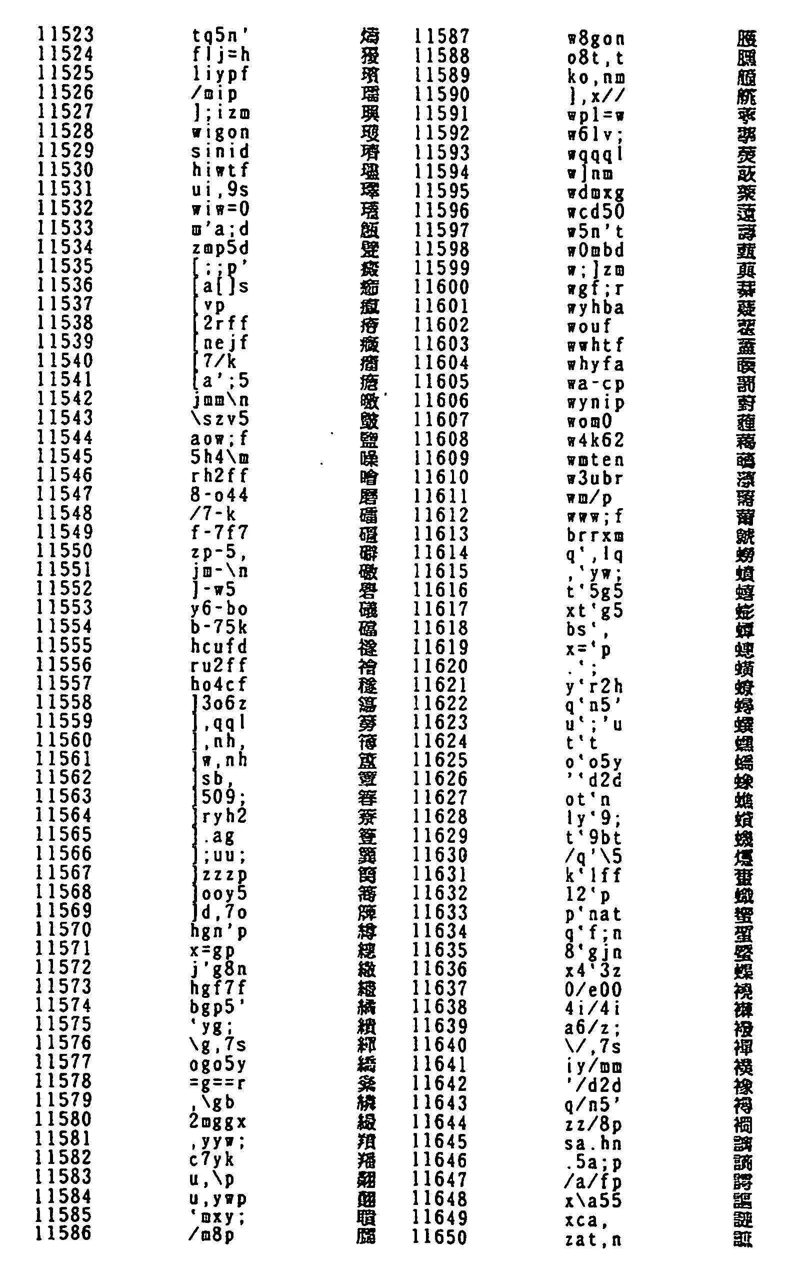

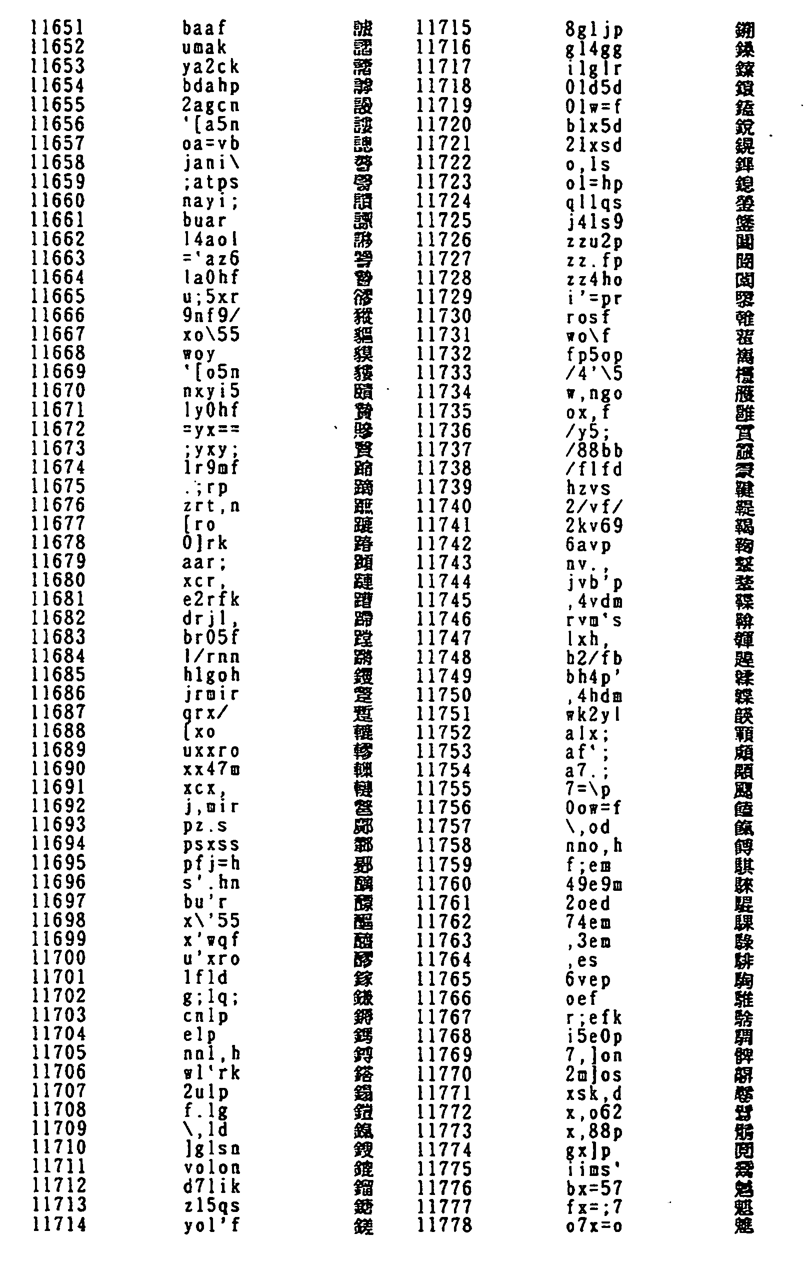

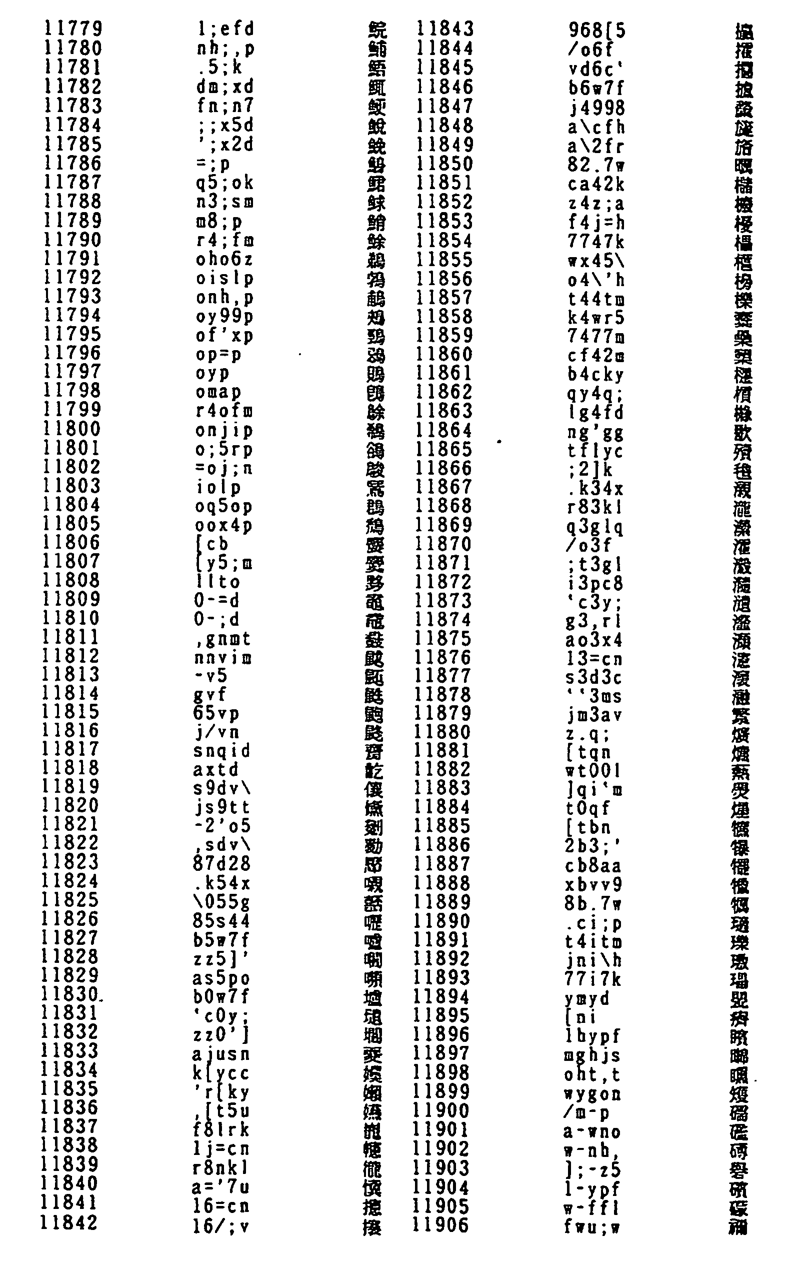

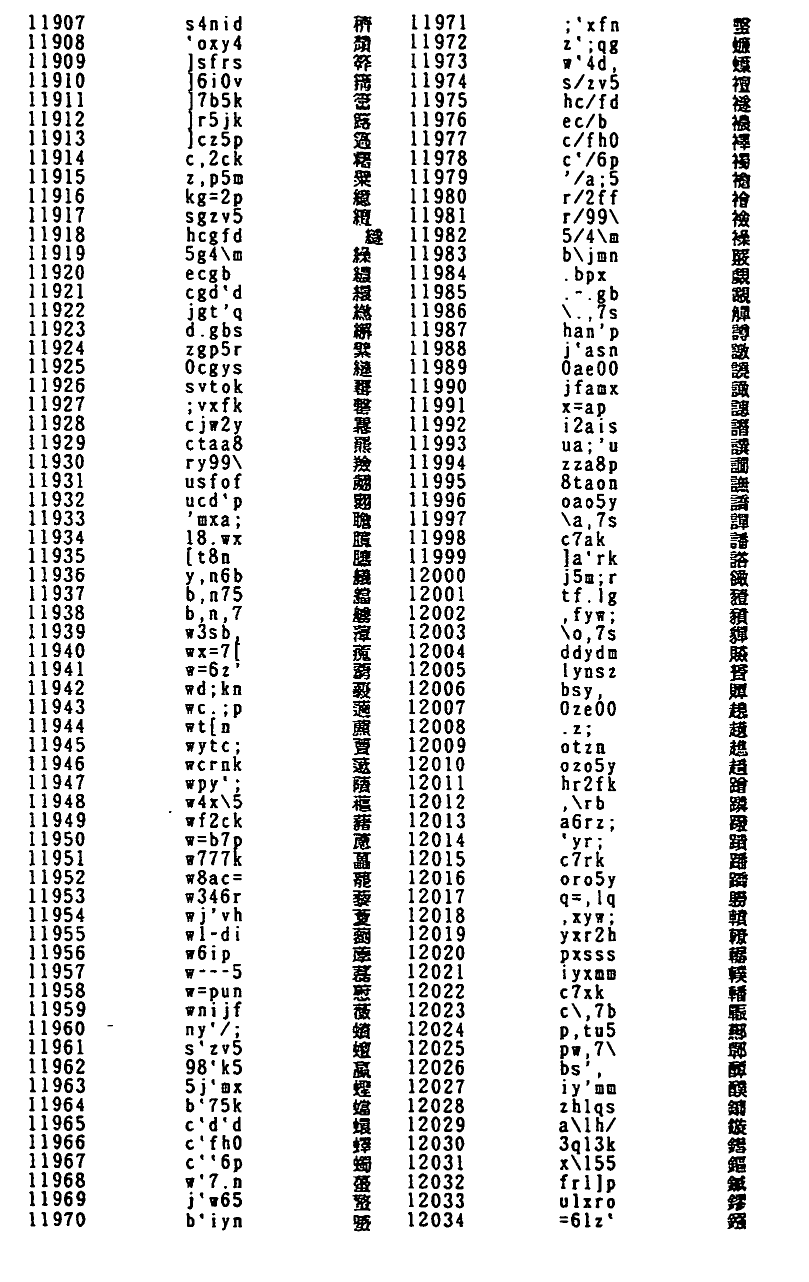

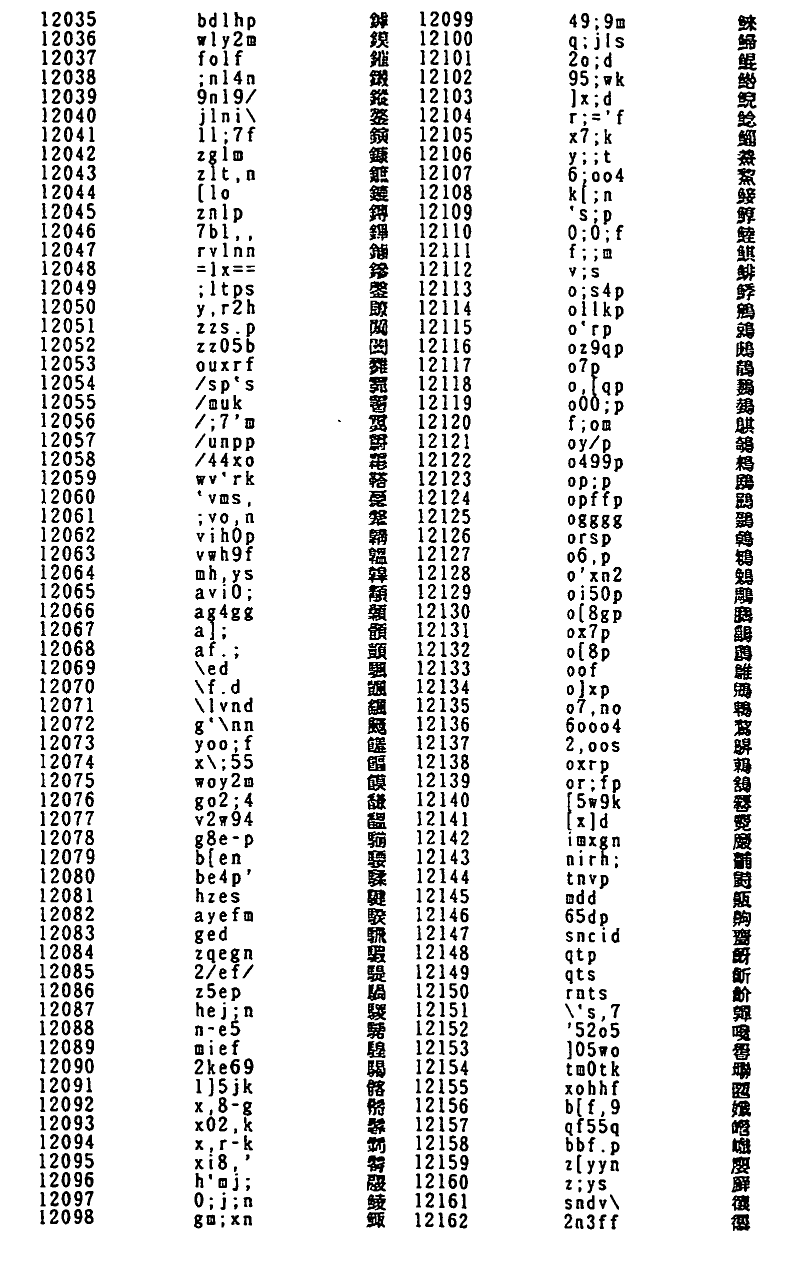

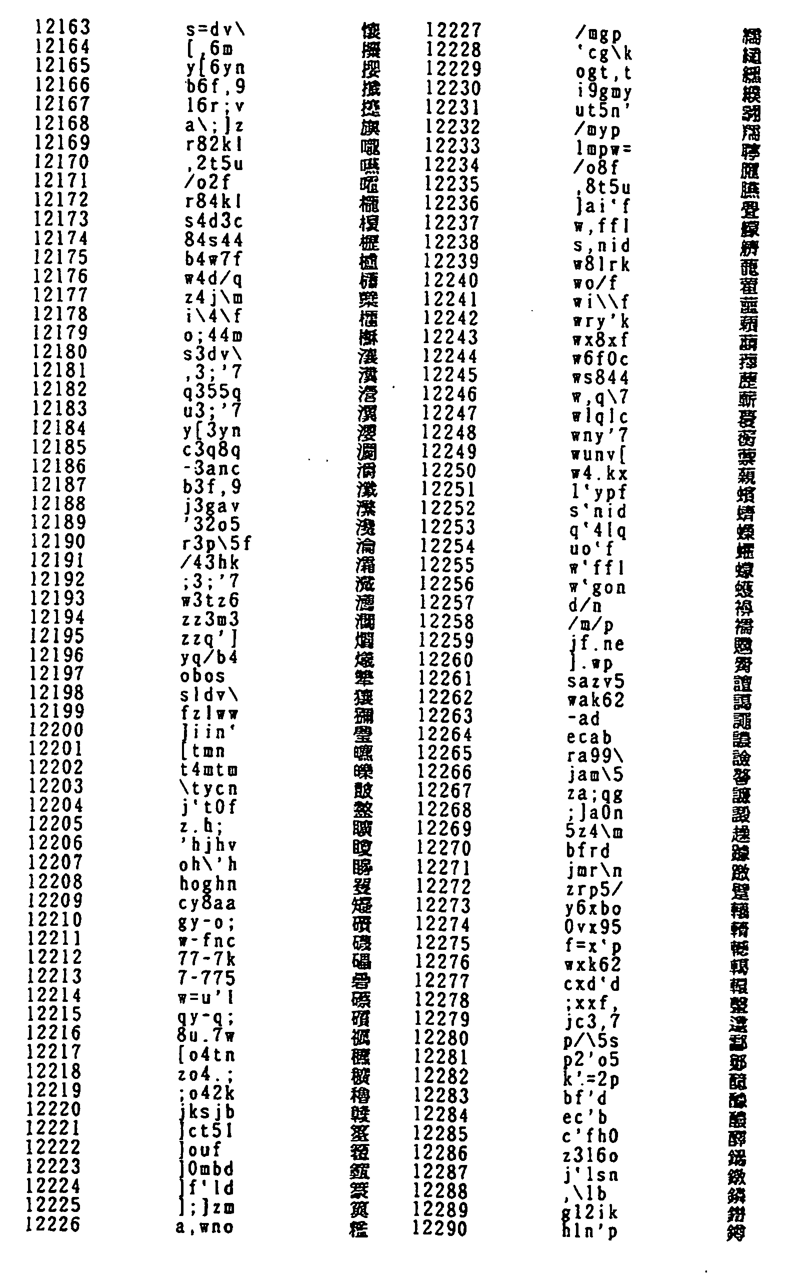

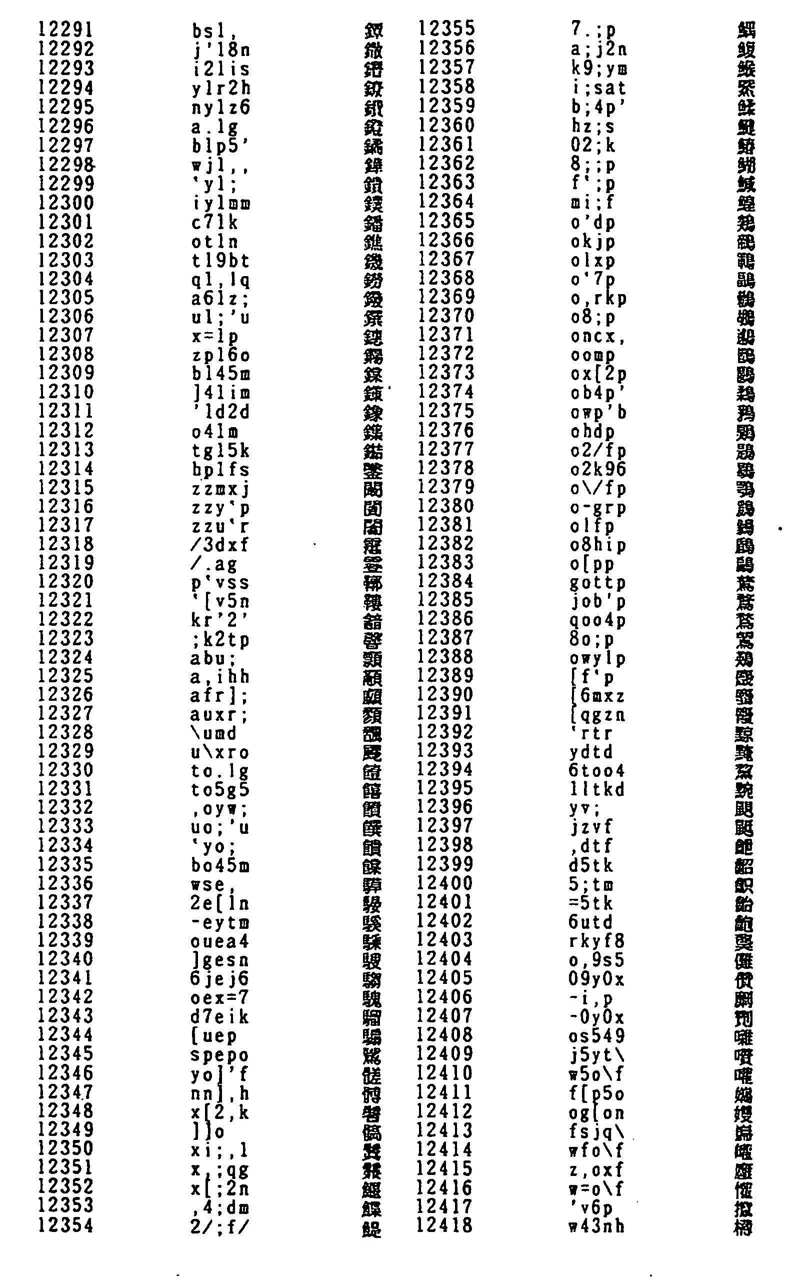

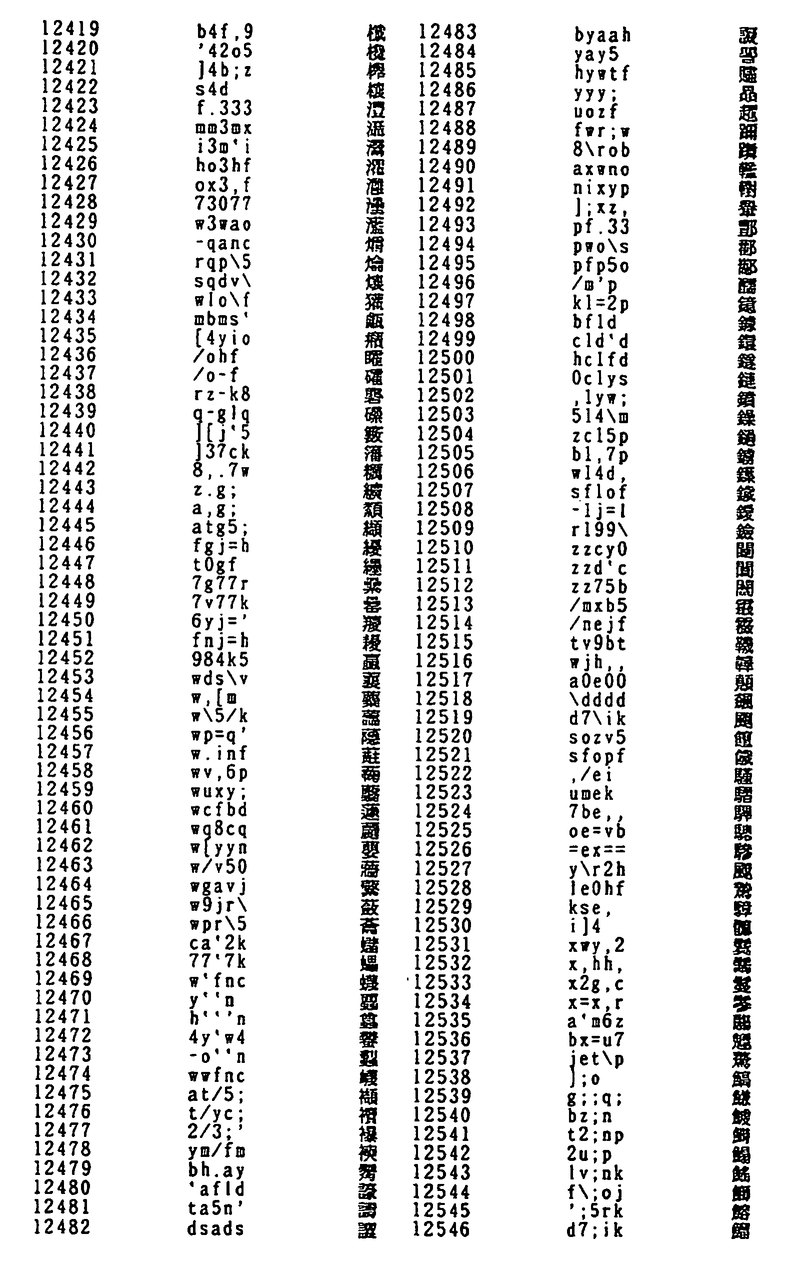

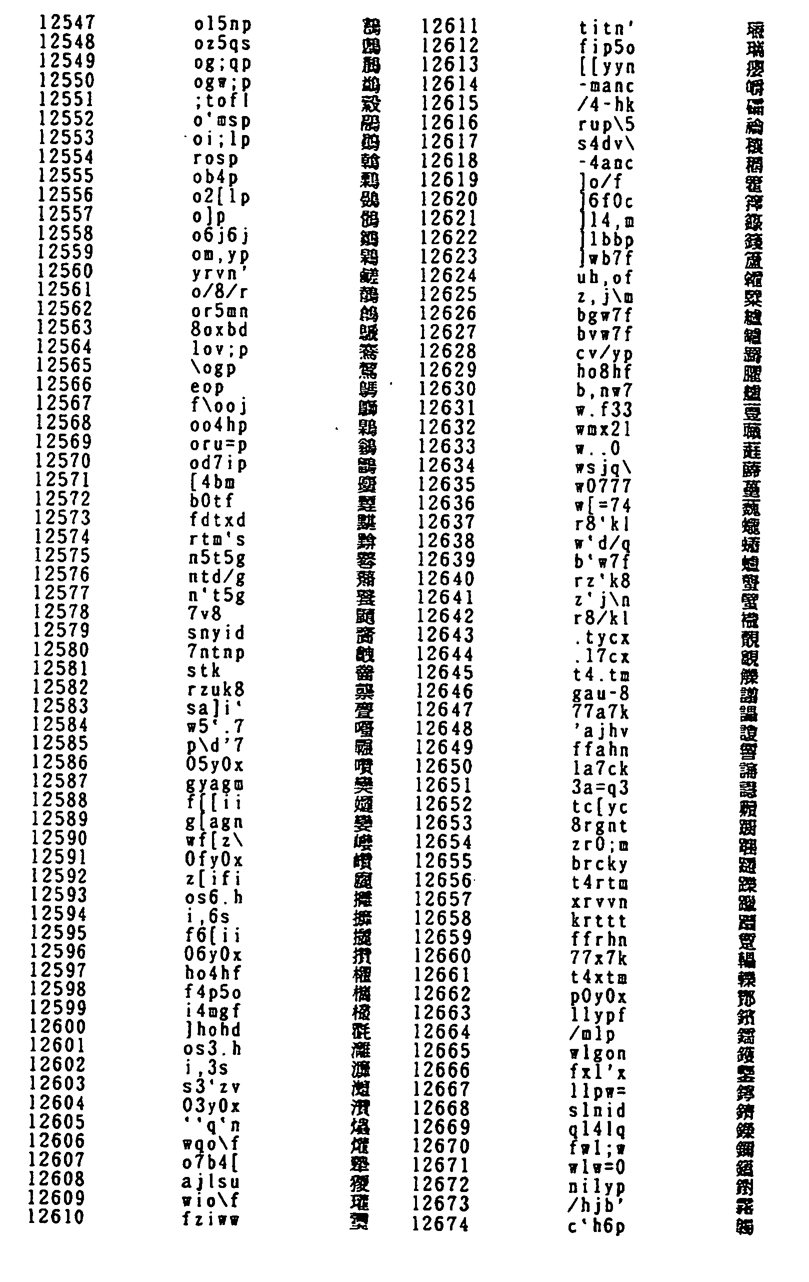

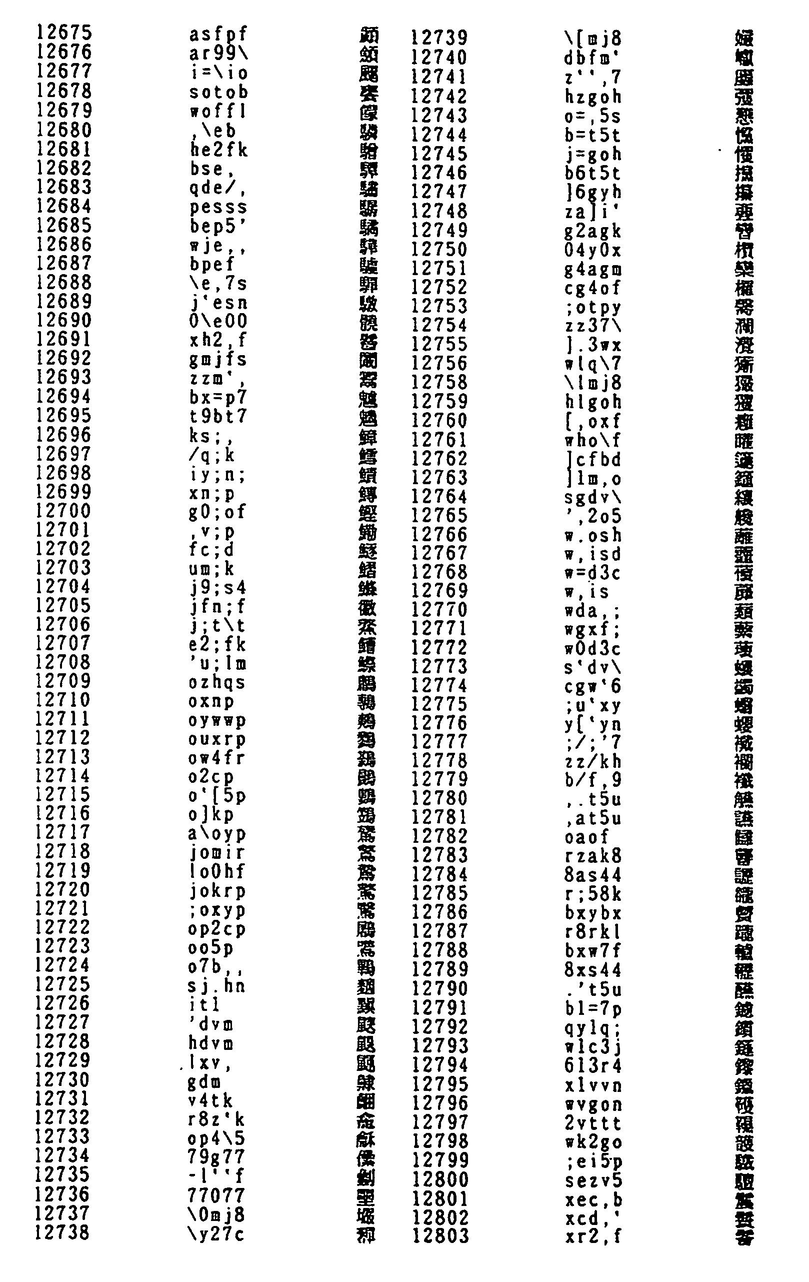

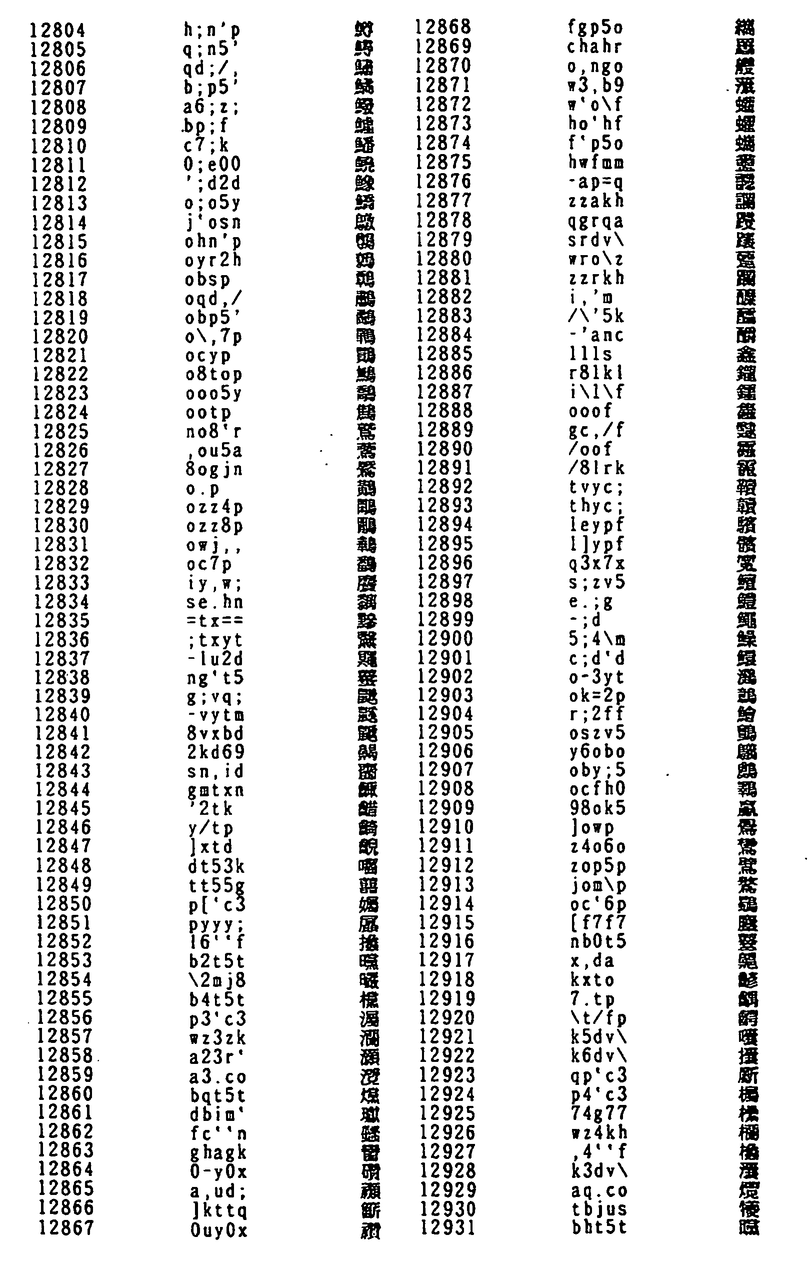

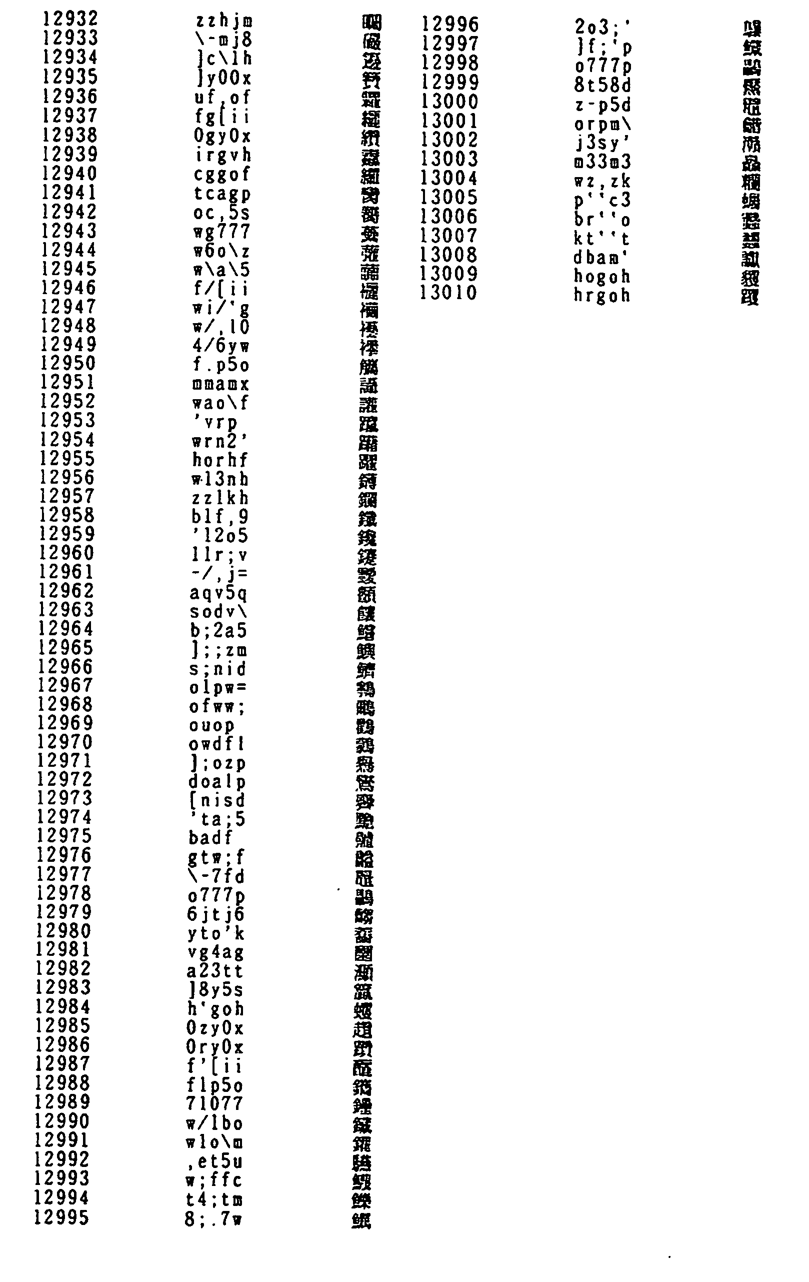

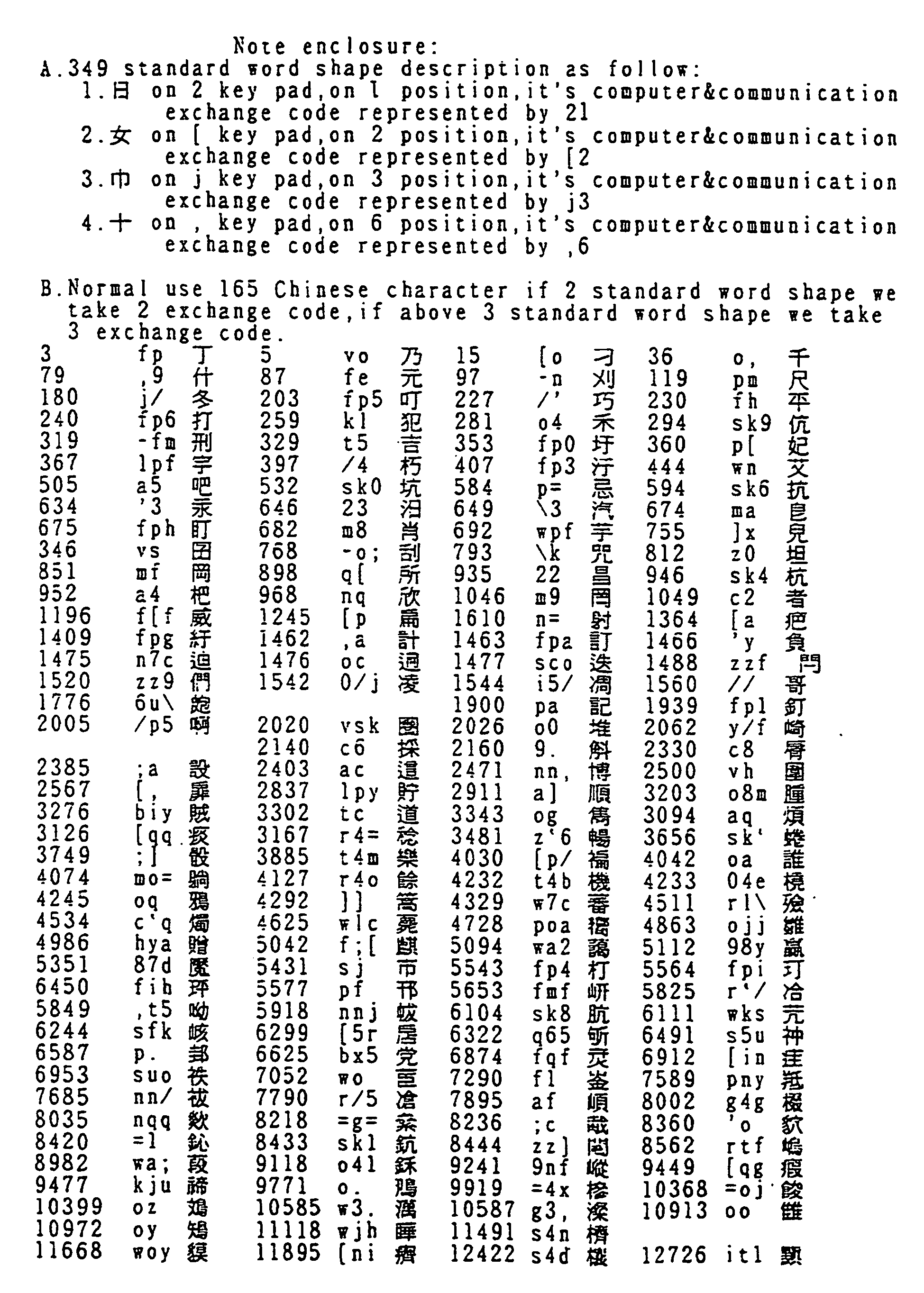

## Claims

1. A Chinese character computer and communication code generator comprising:
an electronic keyboard device having a plurality of key pads for generating electronic signals representing alpha-numeric and punctuation symbols for electronic storage or transmission;
said key pads each having a specific one of said symbols inscribed thereon;
each said key pad also being inscribed with one or more of 349 available figurations of Chinese character word shapes, said key pad inscriptions including all of said word shape figurations divided into a plurality of groups equal in number to the number of said plurality of key pads, and a different one of said groups of word shape figurations being inscribed upon each of said key pads;
means for generating an electronic signal of an inscribed symbol on said key pad as a code element representing word shapes of said group of word shape figurations inscribed on that key pad when the key pads are struck, by establishing a plurality of arrangements of small rectangular areas within a larger area corresponding to possible arrangements of positions of said figurations of word shapes within an area of a Chinese character, said small rectangular areas of said arrangements each being sequentially numbered with respect to their positions within said area; and matching a Chinese character to be encoded with one of said plurality of arrangements having rectangular areas for word shape figurations in substantially the same positional arrangement as each word shape figuration of said character so as to establish a numerical sequence for word shape figurations within said character, means for attaining a series of code elements when a number of key pads inscribed with word shapes composing a Chinese character are struck in sequence, and means for generating a unique computer and communication code defining said Chinese character, said code composed of symbol signals representing said Chinese character, said code comprising symbol signals equal in number to the number of key strokes in the sequence used to generate said code and the order in which said keys are struck in said sequence.

2. A code generator as recited in claim 1, wherein said keyboard device includes 47 symbol inscribed key pads, wherein one or more of said Chinese character word shapes are inscribed upon each of said key pads.

3. A cordless communication handset comprising the code generator of claim 1 or 2.

4. A code generator as recited in claim 1, wherein said code generator is a cordless communication handset and further comprises display means for displaying alpha-numeric and Chinese characters in readable written condition; and CPU means for processing received alpha-numeric and punctuation symbol coded information from said electronic communication system, identifying specific stored Chinese characters represented by said coded information and displaying said identified Chinese characters on said display means.

5. A cordless communication handset as set forth in claim 4, further comprising:
means for temporarily storing said sequence of signals representing said series of code elements and for transmitting them sequentially as a computer and communication code representing said Chinese character, so as to communicate information identifying said Chinese character over said electronic communication system.

6. A cordless communication handset as set forth in claim 4, further including means for displaying said code represented Chinese character on said display means of said handset.

7. A method for creating Chinese character computer and communication codes comprising the steps of:
providing in a computer or communication system an electronic keyboard device having a plurality of key pads for generating electronic signals representing alpha-numeric and punctuation symbols and having each one of said symbols inscribed on a different key pad;
inscribing each said key pad also with a different group of one or more of 349 available Chinese character word shape figurations, all of said 349 available word shape figurations being divided into a plurality of groups equal in number to the plurality of key pads;
establishing a plurality of arrangements of small rectangular areas within a larger area corresponding to possible arrangements of positions of said figurations of word shapes within an area of a Chinese character, said small rectangular areas of said arrangements each being sequentially numbered with respect to their positions within said area;
matching a Chinese character to be encoded with one of said plurality of arrangements having rectangular areas for word shape figurations in substantially the same positional arrangement as each word shape figuration of said character so as to establish a numerical sequence for word shape figurations within said character; and
generating a computer and communication code defining a Chinese character, said code composed of symbol signals representing said Chinese character, said code comprising symbol signals equal in number to a number of key pad strokes in a sequence used to generate said code and the order in which said key pads are struck in said sequence, wherein the key pads having said word shape figurations inscribed thereon are struck in a numerical sequence corresponding to a sequence of numbers of said small rectangles in an increasing order.

8. A method for creating Chinese character computer and communication codes as recited in claim 7, wherein said number of symbol signals in said code sequence is two to five code.

9. A method for creating Chinese character computing and communication codes as recited in claim 7, further including a method for encoding sentence structure of a plurality of encoded Chinese characters comprising the steps of:
selecting specifically designated small rectangular areas of each encoded Chinese character in an informational sentence composed of a plurality of said characters;
sequentially numbering said selected areas to represent a sequence thereof; and
composing a sentence structure code consisting of a sequence of symbol signals identifying word shape figurations in the sequential numerical order of said designated small rectangular areas.

10. The method of claim 9, wherein the designated small rectangular area of each Chinese character is the upper right corner or the bottom left corner.

11. The code generator as recited in any of claims 1 to 6, wherein said electronic keyboard device is configured as depicted in any of figures 50 to 52.

12. The method for creating Chinese character computer and communication codes as recited in any of claims 7 to 10, wherein said step of establishing a plurality of arrangements of small rectangular areas within a larger area corresponding to possible arrangements of positions of said figurations of word shapes within an area of a Chinese character, comprises establishing the arrangements as depicted in any of figures 11, 13 to 18, 22, 24, 26, 30, 31, 33, 34, 36-44, 49, 53, 54 or 56.

## Patentansprüche

1. Eine chineseische Schrift Computermaschine und Kommunikation Kode Erzeuger sind enthaltend :
Eine elektronische Computermaschine Tastatur Plan gibt die Zahl der Tasten Polster,
um elektonische Signals zu erzeugen, die die buchstabende- numerische und
Satzzeichen für elektronischen Speichern oder Transmission vortreten : ..
Jeder Tast Polster hat einen speziellen Platz des Symbolzeichens aufgezeichnet.
Jeder Tast wird chinesische Schrift auf einen Tast oder über 349 Stücke verfügbar Figurationen Wortgestalten der chinesischen Schrift besetzt..
Aufgezeichneter Tast Polster enthält alle Wortgestalten Figurationen, die dieselbe Zahl Gruppen gleichwie die Tasten Polster hat. Aber ein Unterschied ist es, eine der Gruppen der Wortgestalten Figurationen auf den Tasten Polster aufgezeichnet hat ;
Es bedeutet, daß wenn ein elektronischer Signal des aufgezeichneten Symbols auf einen Tast wie einen Kode Elemenet bezeichnet, die die Wortgestalten der Wortgestalten-Gruppen aufgezeichnet auf anderen Tast Polster ist, wenn Tast Polster angestoßen ist, Kode Elemente in serial deutet, zusammenfunktioniert sind.
Die Zahl der Tast Polster aufgezeichnet mit Wortgestalten formt eine chinesische Schrift, die darauf in serial angestoßen ist. Deshalt erzeugt eine einzelne Computermaschine und Kommunikation Kode, um die chinesische Schrift zu definieren.
Kode bestht aus Symbol Signals, representiert chinesische Schrift. Kode enthält Symbol Signals, gibt dieselbe Zahl gleichwie Tastanstoß in serial zu sein. Kode, der die Ordnung erzeugen. Deshalb haben Tasten in serial angestoßen

2. Ein Kode Erzeuger ist in Ansprch 1 rezitiert, in dem Tastatur Plan enthält 47 Symbols, die aufgezeichnet auf Tasten Polster sind, in denen chinesische Schrift oder die Zahl der chinesische Schrift alle Wortgestalten darauf aufgezeichnet sind.

3. Ein drahtloses Kommunikationhandgerät enthählt Kode Erzeuger, der den Anspruch 1 oder Anspruch 2 bezeichnet hat.

4. Ein Kode Erzeuger ist gleichwie in Anspruch 1 rezitiert, wo das gesagte Kode Erzeuger eine drahtlose Kommunikation Handgerät bedeutet und weitgehend enthatend ist.
Monitor wird für ausstellende buchstabende- nummerisch und chinesische Schriften in lesbar geschriebene Bedingung geworden ; und CPU ist für Prozeß erhaltend buchstabend- nummerisch und Satzverzeichen, und chiffrende Information aus dem elektronischen Kommunikationsystem entalten, die speziell speichernd chinesische Schriften mit der chiffrierenden Information identifiziert ist. Ausstellend sind mit chinesischen Schriften auf dem Monitor identifiziert..

5. Ein drahtloses Kommunikationhandgerät startet in Anspruch 4, ist weitghend enthaltend :
die die vorübergehend speichernd in serial allen Signals representiert hat. Kode Elemente und für Transmit in serial gleichwie eine Computermaschine und Kommunikation Kode treten chinesische Schrift vor, so daß Kommunikation Information mit chinesischer Schrift identifiziert ist, die gleichwie sich oben gesagten elektonische Kommunikationsystem befindet ist.

6. Ein drahtloses Kommunikationhandgerät startet in Anspruch 4, ist weitgehend enthaltend, die das für Monitor und gesagten Kode chinesische Schrift vortretren.

7. Eine Methode für schaffende chinesische Schrift Computermaschine und Kommunikation Kodes sind folgendes enthaltend :
Anbietend, daß in eine Computermaschine oder Kommunikationsystem es einen elektronischen Tastatur Plan gibt, die dieselbe Zahl der Tasten Polster für erzeugende elektronische Signals und buchstabend- nummerisch und
Satzverzeichen vortreten. Symbols haben auf untershiedlichen Tast Polster aufgezeichent ;
Aufzeichnend, daß jeder Tast auch mit einem unterschiedlichen Gruppen des einen oder über 349 Stücke verfügbar Wortgestalten Figurationen sind in das Zahl der Gruppen aufgeteilt, die dieselbe Zahl der Tasten Polster sind.
Gründend, daß die Zahl der Ordnung des kleinen viereckige Zone in einer großen Zone gleichwie die Ordnung der Positionen der Figurationen der Wortgestalten mit der Zone der chinesischen Schriften identifiziert ist.
Die gesagten keline viereckige Zone der gesagten Ordnung hat dieselbe Zahl in serial der Positionen in der Zone hat. ;
Anpassend, daß eine chinesische Schrift mit einer der sogesagten Zahl der Ordnung der viereckigen Zone für Wortgestalt Figurationen in serial von derselben Positionen Ordnung chiffrent ist, so daß eine nummerische in Reihen vom Wortgestalt Figurationen in der chinesischen Charakter gründet, und
Erzeugend, daß eine Computermaschine und Kommunikation Kode eine chinesische Schrift definiert ist. Der gesagten Kode besteht aus Symbol Signals und chinesische Schrift, gesgaten Kode, die alle Symbol Signals enthalten.
Die Zahl der Tast Polster Anstoß in serial erzeugen.
Kode und Ordnung, in denen Tasten Polster angestoßen sind. Aufgezeichneten Wortgestalten Figurationen haben in serial angestoßen, die gleichwie die kleine viereckige Zone zunehmend ordentlich ist.

8. Eine Methode für schaffende chinesische Schrift Computermaschine und Kommunikation Kodes ist in Anspruch 7 rezitiert, gesagten die Zahl der Symbol Signals in serial zwei bis fünf Ziffer Kode ist.

9. Eine Methode für schaffende chinesische Schrift zu rechnen, und Kommunikation Kodes ist in Anspruch 7 rezitiert, ist weitgenend enthaltend, daß eine Methode für chiffrierende Satzstruktur der Zahl der chiffrierenden chinesischen Schriften enthaltend folgendes :
Auswählend, daß speziell kleine viereckige Zone des jeder chiffrierenden chinesische Schrift anzeigt, in denen eine Information Satz, die aus die Zahl der Schriften besteht, ist.
Die Zahl der ausgewählten Zone tritt in serial vor, die aus einer Satzstruktur Kode besteht. Symbol Signals in Reihen, die mit der Zahl der Wortgestalt Figurationen in Reihen identifiziet und die der kleinen viereckigen Zone anzuzeigen.

10. Eine Methode des Anspruch 9, wo sich die kleine vierekigen Zone der jeden chinesischen Schrift sich oben rechts Ecke befindet anzuzeigen.(addition bottom left corner).

11. Ein Kode Erzeuger ist gleichwie in Anspruch 1 rezitiert, Anbietend, daß in eine Computermaschine oder Kommunikationsystem es einen elektronischen Tastatur Plan gibt des fig.50-52

12. Eine Methode für schaffende chinesische Schrift Computermaschine und Kommunikation Kodes des Anspruch 7-10. Gründend, daß die Zahl der Ordnung des kleinen viereckige Zone in einer großen Zone gleichwie die Ordnung der Positionen der Figurationen der Wortgestalten mit der Zone der chinesischen Schriften identifiziert ist.
Die gesagten keline viereckige Zone der gesagten Ordnung hat dieselbe Zahl in serial der Positionen in der Zone hat des fig.11,13-18,22,24,26,30,31,33,34,36-44,49,53,54,56

## Revendications

1. Un ordinateur de caractère chinois avec une génératrice de code de communication est composé:
D'un appareil de clavier électronique ayant une majorité de pavés pour produire les signaux électroniques d'alpha-numérique et les symboles de ponctuation pour la mémoire ou la transmission électronique.
Tous les pavés lesdits ayant leurs symboles spécifiques de lesdits symboles inscrits là-dessus:
Chaque pavé ledit étant en même temps inscrit par un ou plus de 349 figures utilisables des formes de caractère chinois, les lesdites inscriptions de pavé se composant de figures des formes de caractère qui se divisent d'une majorité de groupes égale au nombre de lesdits pavés d'une majorité, de plus, un des groupes des figures des mots différents ayant inscrit sur tous les lesdits pavés;
Les milieux pour produire un signal électronique d'un symbole inscrit sur le ledit pavé comme un élément de code qui représente le ledit groupe des formes des mots, des figures de formes des mots inscrites sur le pavé lorsque les pavés sont frapp és; les milieux pour atteindre une série d'éléments codés dès qu'un nombre de pavés inscrits avec des formes de mots qui se composent d'un carcatère chinois sont frappés par ordre;
et les milieux pour produire un ordinateur unique et le code de communication d éfinissant le ledit caractère chinois, le ledit code composé des signaux de symbole représentant le ledit caractère, le ledit code comprenant les signaux égaux au nombre de coups de touche par ordre qui sont utilisés à produire le ledit code et l'autre dans lequel les touches sont frappées par ledit ordre.

2. Un code de génératrice comme énuméré dans la déclaration 1, en quoi l'appareil du ledit clavier consiste 47 symboles de pavés inscrits, en quoi un ou plus de formes de caractère chinois sont inscrits sur chacun de lesdits pavés.

3. Un combine de communication sans fil comprenant le code de génératrice à déclaration 1 ou 2.

4. Un code de génératrice comme énuméré dans la déclaration 1, en quoi le ledit code de génératrice est un combine de communication sans fil, comprenant de plus:
L'écran pour visualiser l'alpha-numérique et les caractères chinois à écriture lisible; et
Le CPU pour traiter l'alpha-numérique reçu et l'information de symboles de ponctuation de code de système de communication explicites qui sont représentés par la ladite information codée, et visualisant les lesdits caractères chinois identifiés sur les milieux de ledit écran.

5. Un combine de communication sans fil comme exposé dans la déclaration 4 comprenant de plus:
les milieux pour réserver temporairement les lesdits signaux par ordre qui représentent les lesdites séries d'éléments codées et pour les émettre par ordre comme un ordinateur et le code de communication qui représentent le caractère chinois afin de communiquer l'information identifiant le ledit caractère chinois au-dessus le système de communication électronique.

6. Un combine de communication sans fil comme exposé dans la déclaration 4 comprenant de plus les milieux pour émettre le ledit code qui représente le caractère chinois sur les milieux du ledit écran de ledit combine.

7. La méthode de créer l'ordinateur de caractère chinois et les codes de communication chionois comprenant les pas de:
Offrir dans un ordinateur ou le système de communication un appareil de clavier électronique, avec une majorité de pavés pour produire les signaux é lectroniques qui représentent l'alpha-numérique et les symboles de ponctuation et en même temps laissant chaque ledit symbole inscrire sur un pavé différent;
Inscrire aussi tout le ledit pavé avec un groupe différent d'un ou plus de 349 figures de formes de caractère chinois, tous de ces 349 figures de mots se divisent d'une majorité de groupe égaux au nombre de majorité des pavés;
Établir une majorité d'aires avec l'arrangement de petits rectangles dans une aire plus grande conforme aux arrangements de positions des formes de figures lesdits dans une aire de caractère chinois; tous les arrangements des aires de petits rectangles sont numérotés par ordre concernant leur positions dans la ladite aire;
Assortir un caractère chinois codé avec un d'une majorité ladite des arrangements ayant les aires de rectangle pour les figures de mots dans l'arrangement de la même position afin d'établir une séquence numérique pour les figures de mots dans le ledit caractère; et
Produire un ordinateur avec le code de communication définissant un caractère chinois, le ledit code, composé des signaux de symboles, représentant le caractère chinois et composant des signaux de symboles égaux au nombre des pavés frappés et utilisés à produire le ledit code et l'ordre dans lequel les pavés sont tapés par la ladite séquence.
Les pavés de figures de mots inscrits là-dessus sont tapés par la séquence num érique conforme à celle-ci numérotée de petits rectangles à un ordre croissant.

8. La méthode de créer l'ordinateur de caractère chinois et les codes de communication comme récité dans la déclaration 7, le ledit nombre des signaux de symbole dans la ladite séquence de code est à deux à cinq codes.

9. La méthode de créer l'ordinateur de caractère chinois et les codes de communication comme récité dans la déclaration 7 comprenant de plus une mé thode de coder la structure phrastique d'une majorité de caractère chinois qui se compose de:
Sélectionner spécifiquement les aires de petits rectangles de chaque caractère chinois codé dans une phrase informatique qui se compose d'une ladite majorité de caractère; numéroter par ordre les lesdites aires sélectionnées à représenter une séquence de cela; et
Composer un code de structure phrastique qui consiste en une séquence de signaux symboliques identifiant les figures de mots par ordre séquentiel et numérique de ces aires désignées de petits rectangles lesdits.

10. La méthode de la déclaration 9, l'aire de petit rectangle désignée de caractère chinois est au coin supérieur à droite.(addition the bottom left corner)

11. Un code de génératrice comme énuméré dans la déclaration 1-6, Offrir dans un ordinateur ou le système de communication un appareil de clavier électronique dans la fig.50-52

12. La méthode de créer l'ordinateur de caractère chinois et les codes de communication comme récité dans la déclaration 7-10, Inscrire aussi tout le ledit pavé avec un groupe différent d'un ou plus de 349 figures de formes de caractère chinois, tous de ces 349 figures de mots se divisent d'une majorité de groupe égaux au nombre de majorité des paves dans la fig.11,13-18,22,24,26,30,31,33,34,36-44,49,53,54,56
